(19) Europäisches Patentamt
European Patent Office
Office européen des brevets

(11) **EP 0 779 961 B1**

## (12) EUROPÄISCHE PATENTSCHRIFT

(45) Veröffentlichungstag und Bekanntmachung des Hinweises auf die Patenterteilung:
**04.08.1999 Patentblatt 1999/31**

(21) Anmeldenummer: **95928932.3**

(22) Anmeldetag: **05.09.1995**

(51) Int Cl.[6]: **F16S 1/00**

(86) Internationale Anmeldenummer:
**PCT/CH95/00192**

(87) Internationale Veröffentlichungsnummer:
**WO 96/07852 (14.03.1996 Gazette 1996/12)**

(54) **MULTIFUNKTIONALER KONSTRUKTIONSKÖRPER**

MULTI-FUNCTIONAL STRUCTURAL MEMBER

CORPS STRUCTURAL MULTIFONCTION

(84) Benannte Vertragsstaaten:
**AT BE CH DE DK FR GB IT LI NL SE**

(30) Priorität: **05.09.1994 CH 272794**

(43) Veröffentlichungstag der Anmeldung:
**25.06.1997 Patentblatt 1997/26**

(73) Patentinhaber: **Gachnang, Christoph**
**8636 Wald (CH)**

(72) Erfinder: **Gachnang, Christoph**
**8636 Wald (CH)**

(74) Vertreter: **Goth, Helmut, Dr.**
**DILTEC AG,**
**Technopark,**
**Technoparkstrasse 1**
**8005 Zürich (CH)**

(56) Entgegenhaltungen:
DE-A- 4 033 937          DE-A- 4 204 497
FR-A- 2 150 328

- **BRADFORD H. A. 'ELEMENTARE TOPOLOGIE' 1964 , VANDENHOEK & RUPRECHT , GÖTTINGEN, DE in der Anmeldung erwähnt siehe Seite 169 - Seite 174**
- **SCHNELL W. & CZERWENKA G. 'EINFÜHRUNG IN DIE RECHENMETHODEN DES LEICHTBAUS' 1970 , BIBLIOGRAPHISCHES INSTITUT , MANNHEIM in der Anmeldung erwähnt Band 1, Seite 20 und Band 2, Seite 18**
- **KLINGBEIL E. 'variationsrechnung' 1988 , BIBLIOGRAPHISCHES INSTITUT , MANNHEIM, DE in der Anmeldung erwähnt siehe Seite 128 siehe Seite 292**

EP 0 779 961 B1

## Beschreibung

Die vorliegende Erfindung betrifft eine Konstruktion mit mindestens einem multifunktionalen Konstruktionskörper gemäss Patentanspruch 1.

## EINLEITUNG

Es wird ein sehr allgemein formulierter, multifunktionaler, im Makro- und Mikrobereich konkretisierbarer Konstruktionskörper (M-Körper) beschrieben, dessen systematische Verwendung in einer Konstruktion, resp. Struktur, z. B. einem Bauwerk, einer raumfahrttechnischen Konstruktion, einer elektronischen Komponente usw., gegenüber herkömmlichen Problemlösungen, die nachstehend aufgeführten Vorteile aufweist:

- Allgemeine Optimierung des statischen- und dynamischen Strukturverhaltens, aufgrund einer möglichen Minimalisierung von Spannungsanteilen, bewirkt durch eine Relativverformung von Teilstrukturen und deren Begrenzung an ausgewählten Grenz-, resp. Schnittflächen, wobei zugleich das Schub-, Stabilitäts- und Dämpfungsverhalten verbessert wird.

- Allgemeine Optimierung des Verformungsverhaltens einer Struktur, aufgrund einer, innerhalb von Grenzen, möglichen Steuer- und Regelbarkeit der Konfigurationsmenge von Teilstrukturen.

- Alterungsverhalten, u.a. was die Rissausbreitung anbelangt.

- Mögliche anteilsmässige Minimalisierung eines hochfesten Werkstoffanteiles bei einer entsprechenden Maximierung mindestens eines relativ festen Konstruktionswerkstoffes, z.B. eines $CO_2$-Speicherwerkstoffes.

- Bei Anwendungen im Baubereich: Möglichkeiten zu einem vermehrten Einsatz kostengünstiger, plattenförmiger Werkstoffe; z.T. auf der Grundlage von Foldingverfahren unter Berücksichtigung von Kriterien betr. Akustik, Wärmedurchgang, Brandschutz und Montage.

Diese Vorteile können u.a. in zwei Fällen wesentlich sein:

- Wenn statisch- und/oder dynamisch und/oder verformungstechnisch hohe Anforderungen vorliegen, insbesondere bei thermischen- und/oder Feuchtigkeitseinflüssen. Diese Problematik gewinnt u.a. auch in der Mikrotechnik, z. B. der Elektronik, aufgrund einer laufend höheren Integrationsdichte der Elemente an Bedeutung,
- wenn es darum geht, oekologisch-, insbesondere auch baubiologisch wertvolle Materialien sowie Recycling-Werkstoffe mit ihrer oftmals begrenzten Gefügeeignung zu verwenden.

## STAND DER TECHNIK

In der folgenden Liste sind Literaturhinweise zusammengestellt, auf welche im weiteren verwiesen wird:

[1] Element. Topologie/ Bradf. H. Arnold/ Vandenhoeck und Rupr./ Göttingen (1964), S. 170.
[2] Théorie des Ensembles et Topologie/ L. Schwartz/ Ed. Hermann, Paris (1991), S. 226 und 230.
[3] Fond. Math. de la Méc. des Struct./ J. Barbe/ ENSAE Toulouse (1973), S. 1-3, 21, A22, A55;
[4] Einf. in die Rechenmethoden des Leichtbaus/ W. Schnell und G. Czerwenka/ B-I Mannheim (1970), Bd.I, S. 20; Bd.II, S.18
[5] dtv-Atlas der Math., Bd. 2 (1987), S. 441
[6] Tensorrechnung für Ingenieure/ E. Klingbeil/ B-I Mannheim (1989), S. 81, S. 140
[7] El. de Theorie des Solides Elast./ J. Barbe/ ENSAE Toulouse (1974), S.18
[8] Div. Meth. de Calc. des Mat.Comp./ Y. Chevalier/ Imp. Nat. Paris (1975), S. 426 ff.
[9] Theorie des Coques/ J. Barbe/ ENSAE Toulouse (1973), S. A15, und S. 17
[10] Variationsrechnung/ E. Klingbeil/ B-I Mannheim (1988), S. 128, S. 292
[11] Pflüger A., Stabilitätsprobleme der Elastostatik/Springer (1950)
[12] Optiques des Milieux Comp./ S. Berthier/ Polytechnica Paris (1993)
[13] Zeitschr. Mat. et Techniques, Nr. 4-5 (1994), S. 7

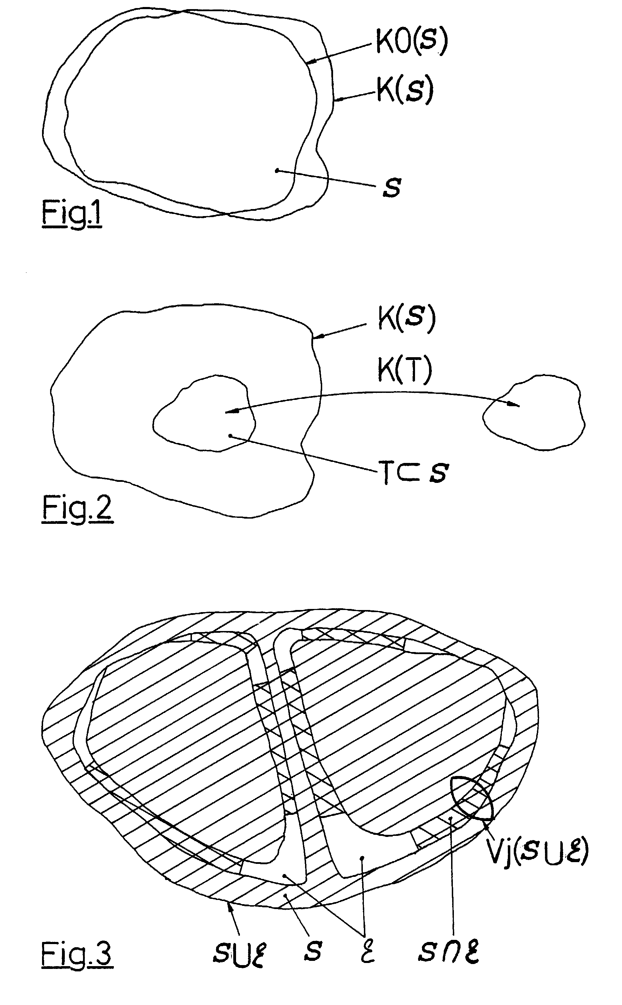

Bei der Konstruktion einer Struktur $\sigma$ wird heute davon ausgegangen, dass einer solchen eine zusammenhängende, mathematisch-physikalisch beschreibbare Struktur **S** zugrunde gelegt werden kann [1], [2], für die man, bei einer Verformung, ein Kontinuitätsaxiom [2], [3] voraussetzt und in der man, im allgemeinen, kleine Verzerrungswerte [3] anstrebt. Eine zulässige Beanspruchung bewirkt nun für eine solche Struktur $S$, gemäss Fig. 1, deren Uebergang z.B. von einer Ausgangskonfiguration K0($S$) in eine verformte Konfiguration K($S$) [3].

Greift man aus einer Struktur $S$ ein Teilgebiet T heraus, so erachtet man eine geometrische Konfiguration K(T), (vgl. Fig. 2) isoliert, d.h. aus einer bestimmten Verformungskonfiguration K($S$) herausgelöst, im befreiten Zustand, nach Anbringen der Schnittgrössen [4], aus heutiger Sicht als bestimmt, resp. bestimmbar. Betreffend der Umkehrbarkeit dieser Abbildung existieren Ausnahmen, z.B. bei Stabilitätsproblemen [4], die hier jedoch nicht von Bedeutung sind. Dieser Zusammenhang eines Teilgebietes T einer Struktur $S$ mit dem umgebenden Strukturkomplement ($S$ - T) hat zur Folge, dass sich eine Relativverformung eines Teilgebietes T, z.B. verursacht durch thermische-, Feuchtigkeitseinflüsse usw., unmittelbar auf die umgebende Struktur auswirkt.

Ein diesbezüglich unterschiedliches, geometrisch und/oder werkstoffbedingtes, richtungsabhängiges Verhalten von Teilstrukturen kann, innerhalb einer tragenden Struktur $S$ zu lokalen Verformungen und Spannungsüberhöhungen führen, die, und deren Folgen oftmals schwer erfass- und abschätzbar sind. Dies etwa für das Alterungsverhalten, z.B. betreffend der Rissausbreitung.

## PROBLEMLÖSUNG

Entgegen der herkömmlichen Anschauung wird in einer Struktur σ, gemäss Fig. 3 eine zusammenhängende Struktur $S$, schraffiert gekennzeichnet, zusammen mit einem an sich nicht materialisierten Gebiet ε, in dem die Struktur $S$ jedoch mit einem Teilgebiet $S \cap ε$, zweifach schraffiert, enthalten ist, so vorausgesetzt, dass eine geometrische Konfiguration des Gebietes ε, d.h. K(ε), umkehrbar eindeutig mit der entsprechenden Verformungskonfiguration von $S$, d.h. K($S$) zusammenhängt. Dabei werden aufgrund einer Beanspruchung in der Struktur $S$ wiederum nur kleine Verzerrungswerte [3], im Gebiet ε dagegen durchaus grosse Verschiebungswerte [3] des Teilgebietes, resp. der Spur $S \cap ε$ toleriert.

Hierzu wird weiter vorausgesetzt, dass die Struktur $S$ einzelne in sich, untereinander, vorerst, jedoch nur minimal zusammenhängende, noch zu definierende Gebiete aufweist, und dass der weitere Zusammenhalt dieser Gebiete im Teilgebiet $S \cap ε$ anhand von verformbaren, kraftübertragenden Teilgebieten von M-Körpern verwirklicht wird, die als Mengen Vj ($S \cup ε$) definiert, Gegenstand der Erfindung sind. Anhand dieser Körper, wovon einer in der Vereinigung $S \cup ε$ gemäss Fig. 3 angedeutet ist, wird der Zusammenhang zwischen den einzelnen Strukturteilgebieten zur Struktur $S$ hergestellt, wobei ihrer Relativverformung in neuer Weise Rechnung getragen wird.

Die hier gewählte Betrachtungsweise legt nahe, neben dem Begriff der tragenden Struktur $S$ auch den der Struktur S zu verwenden: Diese umfasst die tragende Struktur $S$ erweitert um von dieser ganz oder teilweise gebildete Hohlräume; die Struktur S stellt im allgemeinen einen offenen, d.h. einen, nach aussen, nicht begrenzten Raum dar.

Erfindungsgemäss wird diese Aufgabe mit einem multifunktionalen Konstruktionskörper gemäss dem Wortlaut der Patentansprüche 1- 32 gelöst. Die im Folgenden verwendeten Begriffe sind in der nachstehenden Begriffsliste zusammengestellt:

| | |
|---|---|
| R | 3-dimensionaler Raum |
| Struktur σ | ein Bauwerk, eine raumfahrttechnische Konstruktion, eine elektronische Komponente usw. |
| Struktur $S$ | zusammenhängender mechanisch tragender Strukturanteil einer Struktur σ |
| $T \subset S$ | ein Teilgebiet von $S$ |
| Struktur S | Struktur $S$ erweitert um von $S$ ganz oder teilweise gebildete Hohlräume |
| ε | ein an sich nicht materialisiertes Teilgebiet von S, in dem die tragende Struktur $S$ mit einem verformbaren, kraftübertragenden Teilgebiet $S \cap ε$ enthalten ist |
| K0(...) | geometrische Ausgangskonfiguration |
| K(...) | verformte Konfiguration |
| $F$ | ein zusammenhängendes Gebiet von $S$ |
| Sy | ein Gebiet einer Anzahl weiterer, zusammenhängender Gebiete von $S$ |
| $KSy \equiv Sy - Sy \cap ε$ | Gebietskomplement |
| $Vj (S) \equiv Vj (S \cup ε)$ | eine Menge, entsprechend einem M-Körper definiert in S oder ($S \cup ε$) |
| $Ej \equiv Vj (S) \cap ε$ | verformbares Teilgebiet mit dem Vj(S) in ε enthalten ist |
| $Vj \equiv Vj(S)$ | eine Menge Vj($S$), entsprechend einem M-Körper, definiert in $S$ |
| $Esj \subset Ej$ | verformbare, kraftübertragende Teilmenge von Vj, enthalten in $Ej \subset Vj(S)$ |
| $ELj \subset (Ej-Esj)$ | verformbare, die Konfigurationsmenge von Esj mitbestimmende Teilmenge |
| $Vjf \equiv Vj \cap F$ | Teilmenge von Vj, enthalten in $F$ |
| $Vjv \equiv Vj \cap KSy$ | Teilmenge von Vj, enthalten in KSy |
| $Esji \subset Esj$ | verformbares, kraftübertragendes Element |

| | |
|---|---|
| $ELji \subset ELj$ | ein Element von $ELj$ |
| P | ein Punkt |
| C | Hook'scher Tensor |
| Esj' | Grenzfall einer zumindest dimensional nicht verformbaren Teilmenge $Esj$ |
| $Esj'i \subset Esj'$ | nicht verformbares, kraftübertragendes Element von $Esj'$ |
| Vj' | Eine Menge $Vj$ mit einer Teilmenge $Esj'$ |
| $Vjt \subset Vj$ | Allgemeine Teilmenge $Vjt$ von $Vj$ mit den Anteilen, entsprechend Teilmengen: |
| $Vjtf \equiv Vjt \cap \boldsymbol{F}$ | wobei $Vjtf \not\equiv \{\ \}$ |
| $Vjtv \equiv Vjt \cap KSy$ | wobei $Vjtv \not\equiv \{\ \}$ |
| $Vj't \subset Vj'$ | Allgemeine Teilmenge $Vj't$ von $Vj'$ mit den Anteilen, entsprechend Teilmengen: |
| $Vj'tf \equiv Vj't \cap \boldsymbol{F}$ | wobei $Vj'tf \not\equiv \{\ \}$ |
| $Vj'tv \equiv Vj't \cap KSy$ | wobei $Vj'tv \not\equiv \{\ \}$ |
| $F \subset \boldsymbol{F} \subset WRi \subset Ri$ | ein hochfestes Gebiet, resp. Teilgebiet, angelegt in $\boldsymbol{F}$ von $WRi$ von $Ri$ |
| $VjT \equiv ViT \subset Vj$ | Charakteristische Teilmenge $VjT \equiv ViT$ von $Vj$ mit den Anteilen, entsprechend Teilmengen: |
| $VjTf \equiv VjT \cap F$ | wobei $VjTf \not\equiv \{\ \}$ |
| $VjTv \equiv VjT \cap KSy$ | wobei $VjTv \not\equiv \{\ \}$ |
| $Vj'T \subset Vj'$ | Grenzfall einer nicht verformbaren charakteristischen Teilmenge $Vj'T$ von $Vj'$ mit den Anteilen, entsprechend Teilmengen: |
| $Vj'Tf \equiv Vj'T \cap F$ | wobei $Vj'Tf \not\equiv \{\ \}$ |
| $Vj'Tv \equiv Vj'T \cap KSy$ | wobei $Vj'Tv \not\equiv \{\ \}$ |
| $Fj \subset S$ | Feld, als Teilgebiet einer Struktur S |
| DFj | Felddicke |
| $Uj \equiv Uj(S)$ | Umrandung $Uj$ |
| RFj | feldinnerer Hohlraum |
| $Uj^* \subset Uj$ | Teilgebiet von $Uj$, mit einem verformbaren Querschnitt |
| $Uj' \subset Uj$ | Teilgebiet von $Uj'$, mit nicht verformbarem Querschnitt |
| $Uj \equiv \{Uj^*, Uj'\}$ | Definition (1) einer Umrandung $Uj$: wobei vorausgesetzt wird, dass $Uj^* \not\equiv \{\ \}$ und $Uj' \not\equiv \{\ \}$ |
| $Uj^*f$ | äusseres Teilgebiet eines Umrandungsteilgebietes $Uj^*$ |
| $Uj^*v$ | inneres Teilgebiet eines Umrandungsteilgebietes $Uj^*$ |
| $Ej^*$ | verformbares Teilgebiet eines Umrandungsteilgebietes $Uj^*$ |
| $Uj^* \equiv \{Uj^*f, Ej^*, Uj^*v\}$ | Definition (1-1) betr. eine Umrandung $Uj$ |
| $Uj'f$ | äusseres Teilgebiet eines Umrandungsgebietes $Uj'$ |
| $Uj'v$ | inneres Teilgebiet eines Umrandungsteilgebietes $Uj'$ |
| $Euj'$ | nicht verformbares Teilgebiet eines Umrandungsteilgebietes $Uj'$ |
| $Uj' \equiv \{Uj'f, Euj', Uj'v\}$ | Definition (1-2) betr. Umrandung $Uj$ |
| $Uj^*(\boldsymbol{S}) \equiv (Uj'f, Esj^*, Uj^*v\}$ | Definition (1-3) betr. eine Umrandung |
| $Uj'(\boldsymbol{S}) \equiv \{Uj'f, Eusj', Uj'v\}$ | Definition (1-4) betr. eine Umrandung |
| $Uj \equiv \{Ujf, Euj, Ujv\}$ | Definition (2) mit $Ujf \equiv Uj^*f \cup Uj'f$, $Euj \equiv Ej^* \cup Euj'$ und $Ujv \equiv Uj^*v \cup Uj'v$ |
| $Uj^*c \equiv Vj(S) \subset Uj^*$ | Umrandungsabschnitt $Uj^*c$, entsprechend einer Menge $Vj(S)$ |
| $Uj'c \equiv Vj'(S) \subset Uj'$ | Umrandungsabschnitt im Teilgebiet $Uj'$ entsprechend einer Menge $Vj'(S)$ |
| KFj | Feldkomplement |
| $Uj(RFj)$ | Umrandung eines feldinneren Hohlraumes |
| F0 | ein hochfestes Teilgebiet von $\boldsymbol{F}$ |
| F0i | statisch mittragende Zone von F0, enthalten in $(\boldsymbol{F}$-F0$)$ |

$$F \equiv F0 \cup \{ \underset{F-F0}{\cup} F0i \}$$  Das hochfeste Gebiet F als Vereinigung des Teilgebietes F0 mit dem im Gebiet $\boldsymbol{F}$-F0 enthaltenen, lokalen, statisch mittragenden Zonen F0i

| | |
|---|---|
| $Rj \subset S$ | eine Anzahl in S enthaltene Räume |
| $WRj \subset Rj$ | Wandung von $Rj$, enthalten in $Rj$ |
| $Ri \subset S$ | ein einzelner, zusammenhängender Raum enthalten in S |

| | |
|---|---|
| WRi ⊂ Ri | Wandung von Ri, enthalten in Ri |
| WSa | Strukturaussenwandung |
| WRji ⊂ WRj | innere Wandungsschale von WRj |
| WRja ⊂ WRj | äussere Wandungsschale von WRj |
| Fji ⊂ WRji | innere Feldfläche, enthalten in WRji |
| Fja ⊂ WRja | äussere Feldfläche, enthalten in WRja |
| Uj(RFj) | Umrandung eines feldinneren Hohlraumes |
| WRjif ⊂ WRji | Wandungsteilgebiet von WRji |
| WRjiv ⊂ WRji | Wandungsteilgebiet von WRji |
| Uji ≡ Uj(WRji) | Umrandung Uj, entsprechend einer Umrandungsschale, enthalten in WRji |
| Ewj | verformbares Teilgebiet, enthalten in WRji |
| KWRj | zusammenhängendes Wandungskomplement |
| KWRji | mit oder ohne Zusatzbezeichnung: Zusammenhängendes Komplement, entsprechend einer Lösung von KWRj |
| Uj(T) | lokal verbindendes Teilgebiet |
| $\underline{v}$ | Vektor zur Beschreibung der (z.B. translatorischen) Querschnittsverformbarkeit |
| ej ⊂ Ej | eine Volumeneinheit von Ej |
| esj | Teilmenge Esj, bezogen auf die Volumeneinheit ej |
| elj | Teilmenge ELj, bezogen auf die Volumeneinheit ej |

| | |
|---|---|
| Vjt(ej)≡{Vjtf,esj,Vjtv} | Definition einer allgemeinen Teilmenge, bezogen auf ej, oder: |
| Vjt(ej)≡{Vjtf,esj,elj,Vjtv} | wenn elj ≢ { } |

| | |
|---|---|
| **U**j | Umrandungsmenge gemäss Definition (4), deren Teilgebiete, resp. Teilmengen **U**jf, resp. **U**jv in der Ausgangskonfiguration K0 (Uj) nicht einer ebenen Fläche einer bestimmten Dicke angehören müssen. |
| **U**j (ej) | Umrandungsmenge **U**j, bezogen auf eine Volumeneinheit ej |
| **U**jft | einzelne Umrandungsschicht eines Teilgebietes, resp. Teilmenge **U**jf |
| **U**jvt | einzelne Umrandungsschicht eines Teilgebietes, resp. Teilmenge **U**jv |
| **U**jf(ej) | Teilmenge **U**jf von **U**j, bezogen auf ej |
| **U**jv(ej) | Teilmenge **U**jv von **U**j, bezogen auf ej |

| | |
|---|---|
| **U**j(ej) ≡ {**U**jf, ej, **U**jv} | Allgemeine Definition für das Minimum einer Umrandungsmenge **U**j gemäss Definition (4), bezogen auf eine Volumeneinheit ej |
| Vj(ej) | Menge Vj, bez. auf die Volumeneinheit ej |
| Vjft ⊂ **U**jft | einzelne Schicht eines M-Körpers, enthalten in **U**jft |
| Vjvt ⊂ **U**jvt | einzelne Schicht eines M-Körpers, enthalten in **U**jvt |
| Vjf(ej) ⊂ **U**jf(ej) | Teilmenge Vjf, enthalten in **U**jf(ej) |
| Vjv(ej) ⊂ **U**jv(ej) | Teilmenge Vjv, enthalten in **U**jv(ej) |
| Ejn | Teilmenge der Energieleiter, bez. auf Vj, eine Anzahl n Energieleiter Ej1, ...., Ejn mind. mechanischer Energie |
| Ijm | Teilmenge der Grundkörperteile, bezogen auf Vj, eine Anzahl m Grundkörperteile Ij1, ..., Ijm |

| | |
|---|---|
| Vj≡{Ejn, Ijm, Esj, Elj} | Menge Vj, entsprechend einem M-Körper |
| Gn ⊂ F ⊂ **F** | Gelenke im Gebiet F |
| Ajn | Teilmenge Ajn, bezogen auf Vj, eine Anzahl hochfester Zonen, z.B. Armierungen Aj1, ....., Ajn |

| | |
|---|---|
| Vjfta | Abwickelbare Schicht einer Teilmenge Vjtf |
| Vjvta | Abwickelbare Schicht einer Teilmenge Vjtv |

| | |
|---|---|
| Qjn | Teilmenge Qjn der elektrischen Leiter, bezogen auf Vj, eine Anzahl n elektrischer Leiter Qj1,... Qjn |
| T | Temperatur |
| EMV | Elektromagnetische Verträglichkeit |
| GND | Massesystem |
| Bjiv | Verknüpfungszone in der ein Teilgebiet Esji mit Vjv verbunden ist |
| Bjif | Verknüpfungszone in der ein Teilgebiet Esji mit Vjf verbunden ist |
| BFji | Verknüpfungszone in der Vjv mit (KWRj-Vjv), resp. (KSy-Vjv) zusammenhängt |

Bfji    Verknüpfungszone in der Vjf mit dem Gebiet ($F$ - Vjf) zusammenhängt

$$B_{jv} \equiv \bigcup_{v_j} B_{jiv}$$

Teilmenge Bjv, bezogen auf Vj, resp. Vj'

$$B_{jf} \equiv \bigcup_{v_j} B_{jif}$$

Teilmenge Bjf, bezogen auf Vj, resp. Vj'

$$BF_{j} \equiv \bigcup_{v_j} BF_{ji}$$

Teilmenge BFj, bezogen auf Vj, resp. Vj'

$$Bf_{j} \equiv \bigcup_{v_j} Bf_{ji}$$

Teilmenge Bfj, bezogen auf Vj, resp. Vj'

Im Folgenden wird die Erfindung an Hand der Figuren 1 - 87 erläutert. Es zeigen:

Fig. 1      Struktur $S$ in der Konfiguration K0($S$) und K($S$)
Fig. 2      Konfiguration K($S$) und ein isoliertes Teilgebiet T, in der Konfiguration K(T)
Fig. 3      Vereinigung der Struktur $S$ mit dem Gebiet ε
Fig. 4      Gebietsdefinitionen in der Vereinigung gemäss Fig. 3
Fig. 5      M-Körper, entsprechend einer Menge Vj(S) oder Vj ≡ Vj($S$)
Fig. 6      Querschnitt durch eine Menge Vj und ihre Verknüpfungselemente
Fig. 7      ein weiterer Querschnitt durch eine Menge Vj
Fig. 8      Definition einer Umrandung Uj als Teilgebiet eines Feldes Fj
Fig. 9      Teilgebiete Uj* und Uj' in Uj
Fig. 10     Umrandungsabschnitte Uj*c und Uj'c, als Mengen Vj(S) und Vj'(S)
Fig. 11     Zusammenhang zweier Umrandungen U1 und U2
Fig. 12     Zusammenhang von Ul und U2 aufgrund charakteristischer Teilmengen VjT
Fig. 13     Vereinigung von Feldern Fj zu einer Wandung WRj, als Teilgebiet eines Raumes Rj
Fig. 14     Querschnitt durch ein Feld Fj
Fig. 15     Innere Wandungsschale WRji mit Umrandungen Uj
Fig. 16     Isolierte Umrandung Uj
Fig. 17     Schnitt X-X gemäss Fig. 15
Fig. 18     Wandungsaufbau gemäss Fall 1
Fig. 19     Wandungsaufbau gemäss Fall 2a
Fig. 20     Wandungsaufbau gemäss Fall 2b
Fig. 21     Allgemeine Teilmenge Vjt in Uj(WRji)
Fig. 22     Struktur S mit vier Räumen Rj im Querschnitt
Fig. 23     Definition einer Wandung WRj, als Teilgebiet eines Raumes Rj
Fig. 24     Definition eines gemeinsamen Teilgebietes zweier Wandungen WRj
Fig. 25     Wandung WRi, eine mögliche lokale Ausbildung
Fig. 26     Umrandungen Uj(RFj) in WRi
Fig. 27     Existenzbereich charakteristischer Teilmengen VjT

| | |
|---|---|
| Fig. 28 | Gegenseitige Lage von KWRj und **F** |
| Fig. 29/31 | Menge Vj mit einer charakteristischen Teilmenge VjT in einer Struktur S |
| Fig. 30 | Zum Kriterium 3-3 |
| Fig. 32-34 | eingeschränkte Existenzbereiche charakteristischer Teilmengen VjT |
| Fig. 35, 39 | Charakteristische Teilmengen VjT [Uj(RFj)], VjT [WRji] und VjT [Uj(WRji)] |
| Fig. 36-38 | Definitionen von Teilmengen VjTv |
| Fig. 40-42 | Definitionen von Teilmengen VjTv |
| Fig. 43 | Definition von VjT [Uj(RFj)] |
| Fig. 44 | Definition von VjTv [Uj(RFj)] im Komplement KFj |
| Fig. 45 | Definition einer allgemeinen Teilmenge Vjt(ej) |
| Fig. 46 | Vjt(ej) wie in Fig. 45, jedoch mit Teilmenge elj |
| Fig. 47 | Zusammenhang von Vjt(ej) mit Vj(S) |
| Fig. 48 | Vjt(ej) mit Schichten Vjft und Vjvt |
| Fig. 49 | Vjt(ej) wie in Fig. 48, jedoch mit geordneten Schichten |
| Fig. 50 | Vj-Querschnitt, entsprechend einer allgemeinen Teilmenge Vjt, in der Konfiguration K0(Vjt) |
| Fig. 51 | Vjt gemäss Fig. 50, jedoch in der Konfiguration K(Vjt) |
| Fig. 52 | 2-dimensional verformbarer Vj-Querschnitt, entsprechend einer Teilmenge Vjt |
| Fig. 53 | Nicht verformbarer Vj-Querschnitt, entsprechend einer Teilmenge Vj't |
| Fig. 54 | Vj-Querschnitt gemäss Fig. 52 mit Aufbau |
| Fig. 55 | Vj'-Querschnitt gemäss Fig. 53 mit Aufbau |
| Fig. 56 | Detail zu Fig. 54 |
| Fig. 57 | Elemente Esj'i zu Fig. 55 |
| Fig. 58 | Erstes Ausführungsbeispiel |
| Fig. 59 | Zweites Ausführungsbeispiel |
| Fig. 60 | Vj-Querschnitt mit Elementen Esji |
| Fig. 61 | Spezielle Elemente einer Teilmenge Esj |
| Fig. 62 | Vj-Querschnitt mit Elementen Ejn ≡ Ajn, Ijm und Esji ≡ ELji |
| Fig. 63 | Vj-Querschnitt mit Elementen Ejn ≡ Ajn ≡ Ijm, Esji und ELji |
| Fig. 64 | Vj-Querschnitt mit Elementen Ejn ≡ Ajn ≡ Ijm und Esji ≡ ELji |
| Fig. 65 | Abwickelbare Vjvta-Schicht |
| Fig. 66 | Gefaltete Vjvta-Schicht |
| Fig. 67 | Längsschnitt durch eine Wandungsschale WRji |
| Fig. 68 | weiterer Längsschnitt durch eine Wandungsschale WRji |
| Fig. 69 | Beispiel einer Teilmenge Vjt mit einer Deckschichtverwölbung |
| Fig. 70 | Abhängigkeit der Schubspannungen von den Verzerrungen in einem Element Esji ≡ ELji mit der Temperatur T als Parameter |
| Fig. 71 | Zwei ineinander angeordnete Räume R1 und R2 |
| Fig. 72 | Detail zu Fig. 71 |
| Fig. 73 | Wandungskomplement KWRj1, in der Konfiguration K0(KWRj1), das Komplemente KFj mit Leiterplatten L enthält |
| Fig. 74 | Wandungskomplement KWRjl, in der Konfiguration K(KWRj1) |
| Fig. 75 | Ausschnitt zu Fig. 73 |
| Fig. 76 | Ausschnitt zu Fig. 74 |
| Fig. 77 | Ausbildung der Teilmengen Esj und ELj |
| Fig. 78 | Abwicklung der Teilmenge Esj gemäss Fig. 77 |
| Fig. 79 | Vereinigung von Esj und ELj |
| Fig. 80 | Vereinigung von Esj und ELj |
| Fig. 81 | Detail zu Fig. 75: Teilmenge VjT in der Konfiguration K0(VjT) |
| Fig. 82 | Beispiel eines nicht verzweigten Wandungsteilgebietes in der Konfiguration K0(WRjif), enthaltend Komplemente KFj |
| Fig. 83 | Konfiguration K(WRjif) zu Fig. 82 |
| Fig. 84 | Struktur S mit vier Teilgebieten |
| Fig. 85 | Beispiel zu einem Sonderfall von drei charakteristischen Teilmengen VjT und einer Teilmenge Esj |
| Fig. 86 | Beispiel zu einem Sonderfall einer charakteristischen Teilmenge VjT und einer Teilmenge Esj |
| Fig. 87 | Schematische Darstellung der Verknüpfungen |

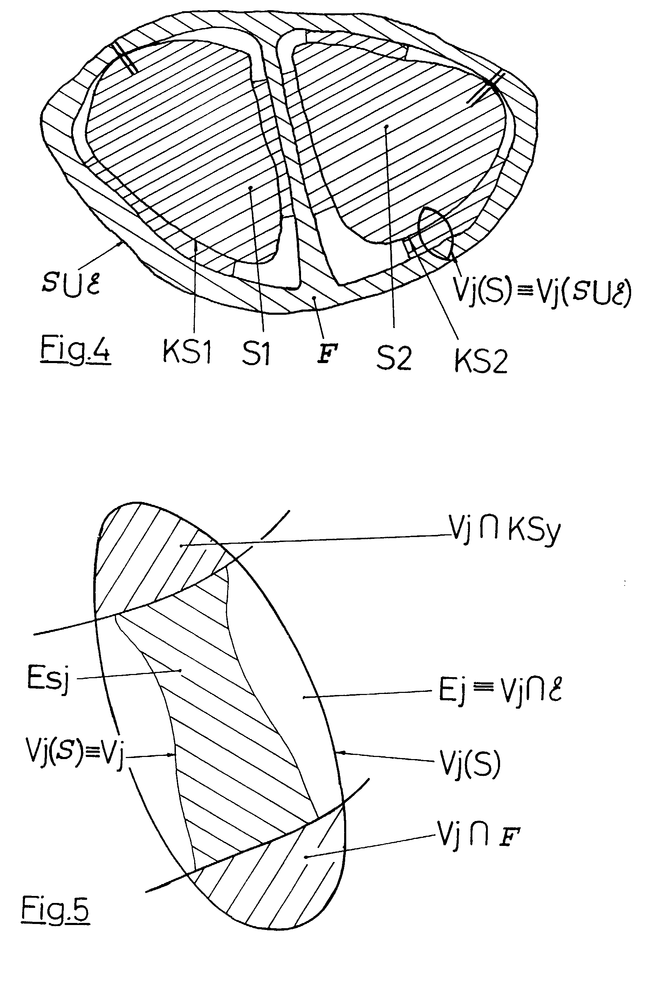

**Zu Fig. 4 bis 7**

Bei der vorliegenden Betrachtung wird eine Struktur **S** als Vereinigung eines Gebietes **F** und eines Strukturkomplementes (**S** - **F**), bestehend aus einer Anzahl Gebiete Sy, z.B. S1, ..., Sn wie folgt vorausgesetzt:

$$S \equiv \{F, S1, ..., Sn\} \text{ wobei } F \cap \varepsilon \equiv \{\} \text{ und } Sy \cap \varepsilon \not\equiv \{\}$$

Dabei wird das Gebiet **F** und von den Gebieten S1, ..., Sn vorerst je ein Gebietskomplement KSy als in sich zusammenhängend vorausgesetzt [1], [2] .
Unter einem Gebietskomplement KSy wird jenes Teilgebiet eines Gebietes Sy verstanden, das nicht im Gebiet ε ent-halten ist:

$$KSy \equiv Sy - Sy \cap \varepsilon$$

Die Fig. 4 zeigt von einer Vereinigung $S \cup \varepsilon$ gemäss Fig. 3 das Gebiet **F** schraffiert sowie die Gebiete S1 und S2, gegenüber dem Gebiet **F**, entgegengesetzt schraffiert, dargestellt, wobei das Gebiet **F** und die Gebietskomplemente KS1 und KS2 fett hervorgehoben sind.
Zwischen dem Gebiet **F** und einem Gebietskomplement KSy wird, aus kinematischen Gründen, ein minimaler Zusammenhang so vorausgesetzt, dass bei einer Verformung der Struktur **S**, für minimal drei nicht zusammenfallende Punkte eines Gebietskomplementes KSy, gegenüber drei nicht zusammenfallenden Punkten von **F**, im Idealfall, keine Relativverschiebung stattfindet. Dieser Zusammenhang ist in Fig. 4 durch je zwei Parallelstriche angedeutet und wird später mit Kriterium 3-3 bezeichnet werden.
Zum weiteren Zusammenhang des Gebietes **F** und einem Gebietskomplement KSy wird ein M-Körper definiert, entsprechend einer Menge Vj(S), resp. Vj ($S \cup \varepsilon$), d.h. in der Struktur S, in der die Vereinigung der Struktur **S** mit dem Gebiet ε enthalten ist: Gemäss Fig. 4 wird für eine Menge Vj(S), resp. Vj($S \cup \varepsilon$), die in der Fig. 5, vergrössert herausgezeichnet und rechtsseitig beschriftet ist, vorausgesetzt, dass sie mit je einer Teilmenge, entsprechend minimal einem Teilgebiet, im Gebiet **F**, dem Gebiet ε und in mindestens einem Gebietskomplement KSy enthalten ist:

$$Vj(S) \equiv Vj(S \cup \varepsilon) \equiv \{Vj \cap F, Ej, Vj \cap KSy\}$$

$$\text{wobei } Vj \cap F \not\equiv \{\}; Ej \equiv Vj \cap \varepsilon \not\equiv \{\} \text{ und } Vj \cap KSy \not\equiv \{\}$$

Der ganzen Struktur **S** werden nun materielle Eigenschaften zugeordnet, resp. es werden in irgend einem Punkt P eines ihrer Gebiete die Werkstoffeigenschaften, z.B. gegeben durch die Komponenten des Hook'schen Tensors C, als bekannt vorausgesetzt [7], [8]. Der Durchschnitt der Struktur **S** mit dem Gebiet ε, und damit auch der Durchschnitt eines Gebietes Sy mit ε wird anhand von Teilmengen Esj von Mengen Vj(**S**) verwirklicht, wobei in einer Menge Vj(**S**) je eine Teilmenge Esj vorausgesetzt wird. Damit ergibt sich eine zweite Definition eines M-Körpers, entsprechend einer Menge Vj(**S** ), die einfach mit Vj bezeichnet wird, bezogen auf die tragende Struktur **S**, entsprechend dem ganzen, in der Fig. 5 schraffierten Bereich. Darin erscheint das Teilgebiet Ej von Vj(S) nur noch mit dem Anteil mit dem es in der tragenden Struktur **S** enthalten ist, d.h. mit der Teilmenge Esj, die in der Fig. 5 schraffiert hervorgehoben ist, während die Definitionen der anderen beiden Teilmengen, betreffend der Mengen Vj(S) und Vj identisch sind.

$$Vj \equiv Vj(S) \equiv \{Vj \cap F, Esj, Vj \cap KSy\} \text{ wobei } Esj \equiv Ej \cap S \not\equiv \{\}$$

Eine Teilmenge Esj enthält als Elemente Teilgebiete Esji die, von aussen betrachtet, als kinematisch hochverformbare Teilgebiete vorausgesetzt werden, wogegen die Verzerrungen [3] die das entsprechende kinematische Verhalten im Inneren eines Elementes Esji kennzeichnen, als betragsmässig klein angestrebt werden.
Ein Teilgebiet Esji lässt sich, im einfachsten Fall, z.B. als eine gekrümmte Fläche geringer Dicke ausbilden die, anhand noch zu definierender Verknüpfungselemente, in die Teilgebiete Vj $\cap$ **F** und Vj $\cap$ KSy eingebettet wird. Ein derart auszubildendes Element Esji muss dadurch gekennzeichnet sein, dass eine Aenderung einer Normalkrümmung einen nur minimalen, im Idealfall keinen Biegeanteil betreffend der Formänderungsenergie von Esji bewirkt [5], [9]. Diesbezüglich kann z.B. bereits eine isotrop ausgebildete, gekrümmte Membrane geringer Dicke eine Näherungslösung ergeben. Im Gegensatz zum Teilgebiet T (vgl. Fig. 2) darf ein Teilgebiet Esji, unter denselben Bedingungen, nicht isoliert betrachtet werden. Hingegen kann ein derartiges Teilgebiet Esji, bei einer Verformung, als Mannigfaltigkeit verstanden werden, die durch die entsprechende Relativverformung eines Gebietskomplementes KSy gegenüber dem Gebiet **F** bestimmt wird. Damit erweist sich eine Menge Vj, innerhalb einer bestimmten Konfiguration K(Vj), als durchwegs metrisierbares, und demzufolge, bei einer Verformung, als kinematisch beschreibbares Teilgebiet [6], [3]. Eine diesbezüglich geeignete werkstoffmässig-konstruktive Ausbildung eines Teilgebietes Esji verleiht nun einem solchen, bei dessen Verformung eine kraftübertragende Eigenschaft, die in erster Linie durch die Stabilitätsgrenzen, die aus einer energetischen Betrachtung [11] hervorgehen, begrenzt wird.

Mit den Abkürzungen

$$Vjf \equiv Vj \cap F \qquad und \qquad Vjv \equiv Vj \cap KSy$$

ergibt sich für einen M-Körper, definiert als Menge Vj

$$Vj \equiv \{Vjf, \; Esj, \; Vjv\} \quad mit \quad Esj \equiv \bigcup_{Vj} Esji$$

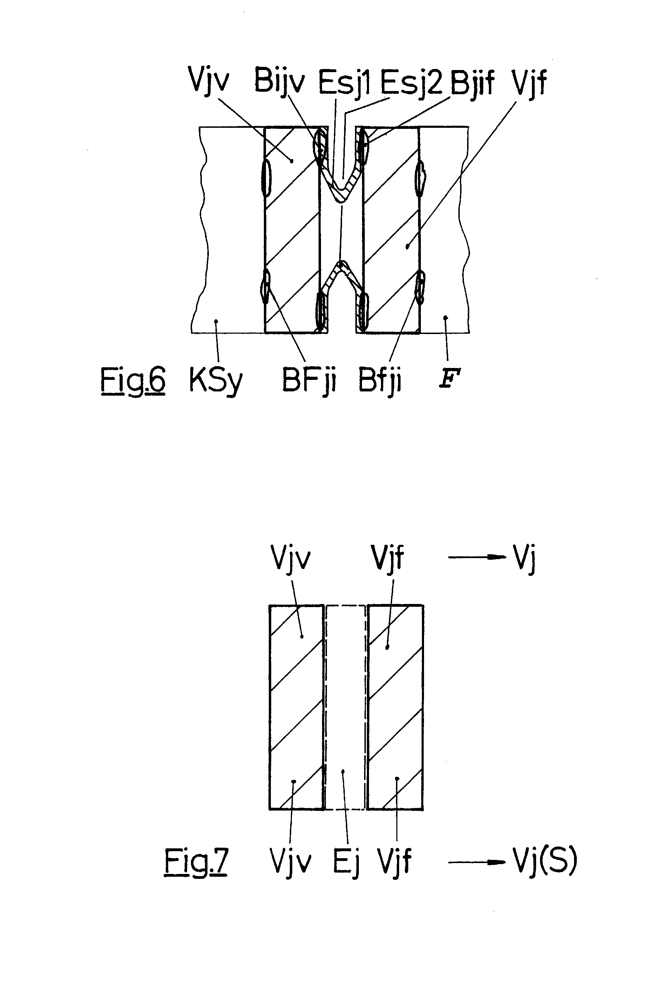

Die Fig. 6 zeigt den Querschnitt einer Menge Vj, schraffiert, gekennzeichnet durch die Querschnitte ihrer Teilmengen Vjf und Vjv sowie zweier Elemente Esj1 und Esj2 ihrer Teilmenge Esj. Aus dieser Abbildung geht auch hervor, wie allgemein zwischen den Elementen Esji einer Teilmenge Esj und den Teilmengen Vjf und Vjv, anhand von Verknüpfungselementen Bjif und Bjiv, ein Zusammenhang vorausgesetzt wird:

$$Esji \cap Bjif \neq \{\} \qquad und \quad Esji \cap Bjiv \neq \{\}$$
$$Vjf \cap Bjif \neq \{\} \qquad\qquad Vjv \cap Bjiv \neq \{\}$$

*Hinweis:*

Wenn in dieser Arbeit allgemein ein nicht verschwindender Durchschnitt vorausgesetzt wird, z.B. Esji $\cap$ Bjif $\neq$ { }, dann wird vorausgesetzt, dass darin minimal ein Element mit drei nicht zusammenfallenden Punkten enthalten sein muss.

Weiter ist aus der Fig. 6 ersichtlich, wie zwischen der Teilmenge Vjf und dem Gebiet **F**, in dem Vjf enthalten ist, aufgrund von Verknüpfungselementen Bfji, ein Zusammenhang vorausgesetzt wird. Ein entsprechender Zusammenhang wird zwischen der Teilmenge Vjv und einem Gebietskomplement KSy, in dem Vjv enthalten ist, aufgrund von Verknüpfungselementen BFji, vorausgesetzt:

$$Vjf \cap Bfji \neq \{\,\} \qquad und \qquad Vjv \cap BFji \neq \{\,\}$$

$$(F - Vjf) \cap Bfji \neq \{\,\} \qquad und \qquad (KSy - Vjv) \cap BFji \neq \{\,\}$$

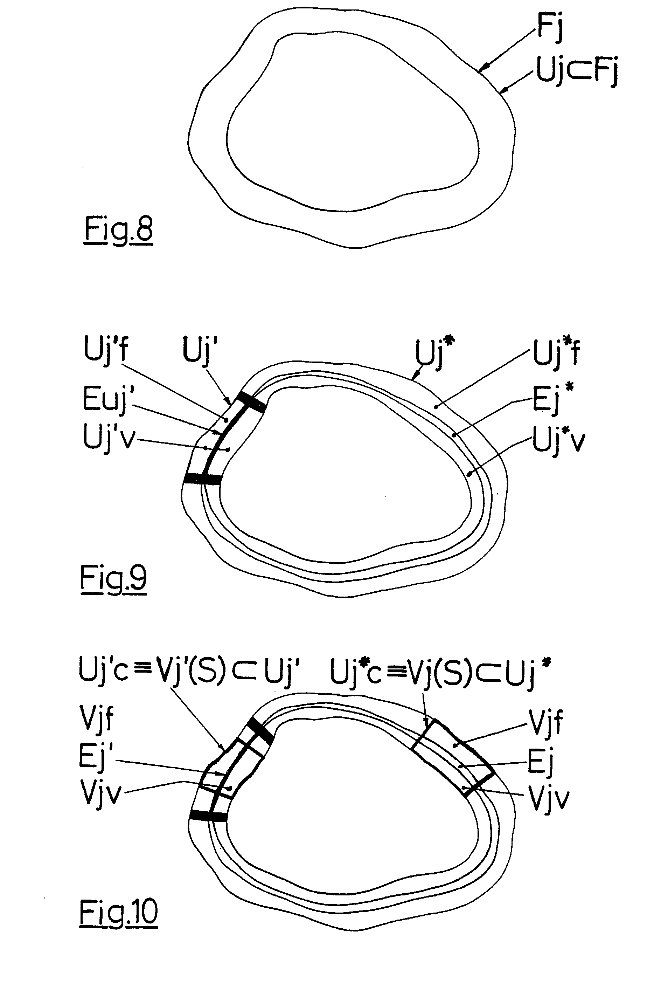

Die Fig. 7 zeigt, isoliert, einen zur Fig. 6 entsprechenden Querschnitt, jedoch mit dem Unterschied, dass die Teilmenge Esj, in diesem Querschnitt, keine Elemente Esji aufweist. Damit sind in diesem speziellen Querschnitt der Menge Vj ausschliesslich die Teilmengen Vjf und Vjv enthalten, die über der Figur beschriftet sind.

Unter der Figur sind die Querschnitte der Teilmengen Vjf, Vjv und Ej beschriftet, d.h. jene Teilmengen, resp. Teilgebiete, die die Definition Vj(S) betreffen.

Eine allgemeine Teilmenge Vjt einer Menge Vj wird wie folgt definiert, wobei Max(Vjt) $\equiv$ Vj mit Max(Vjtf) $\equiv$ Vjf usw.:

$$Vjt \equiv \{Vjtf, Esj, Vjtv\} \; mit \; Vjtf \equiv Vjt \cap Vjf \neq \{\,\} \; und \; Vjtv \equiv Vjt \cap Vjv \neq \{\,\}$$

Wesentlich ist auch hier wiederum, dass die Verknüpfung der Teilmengen, Vjtf und Vjtv, die auch als Anteile bezeichnet werden, anhand der Teilmenge Esj, bezüglich einer (ganzen) Menge Vj, entsprechend einem M-Körper, vorausgesetzt wird.

Die Minimalisierung der Kosten zwingt von Anfang an im Gebiet **F** ein volumenmässig minimalisiertes, hochfestes Teilgebiet F anzulegen, das dem Gebiet **F** weitgehend zu den verlangten Eigenschaften verhilft. Aufgrund der Bedeutung des Teilgebietes F im Gebiet **F** wird zukünftig vom Gebiet F in **F** gesprochen.

Trifft für eine allgemeine Teilmenge Vjt zu, dass

$$\text{Vjtf} \subset F \Longleftrightarrow \text{Vjtf} \equiv \text{VjTf}$$

so wird eine solche Teilmenge Vjt als eine charakteristische Teilmenge einer Menge Vj bezeichnet, und mit den Verankerungen, resp. Teilmengen VjTf und VjTv $\subset$ KSy wie folgt definiert:

$$\text{VjT} \equiv \{ \text{VjTf, Esj, VjTv} \} \qquad\qquad (\text{vgl. Ansprüche 1, 4, 24})$$

M-Körper, resp. Mengen Vj stellen den Zusammenhang zwischen dem Gebiet **F** und mindestens einem Gebietskomplement KSy her. Gemäss Kriterium 3-3 wird dabei zwischen dem Gebiet **F** und einem Gebietskomplement KSy ein minimaler Zusammenhang vorausgesetzt, der praktisch nicht an einer Relativ-Verformung von KSy gegenüber **F** teilnimmt. Konstruktiv ist es sinnvoll, auch an diesen Stellen M-Körper, resp. Mengen Vj zu verwenden. Zu diesem Zweck wird, zumindest lokal, zumindest ein Element Esji der Teilmenge Esj einer solchen Menge Vj, zumindest betreffend einer Dimension, so steif ausgebildet, dass betreffend dieser Dimension, gemäss Kriterium 3-3, eine nur minimale, im Idealfall keine Relativverschiebung zwischen einer Teilmenge Vjtf, die im Gebiet **F** enthalten ist, und einer Teilmenge Vjtv, die in einem Gebietskomplement KSy enthalten ist, stattfinden kann.

Eine Menge Vj, in der ein solches Element Esji enthalten ist, wird mit Vj' und entsprechend deren Teilmengen mit Vj't, resp. Vj'T bezeichnet. In einer Menge Vj' ist die Teilmenge Esj' mit den Elementen Esj'i enthalten, was noch konkretisiert wird.

*Anmerkung:* Auf Abbildungen zu allgemeinen und charakteristischen Teilmengen wird erst später hingewiesen.

Zu den gemachten Aussagen werden in dieser Arbeit einige mögliche Interpretationen angegeben, wobei zur Definition eines Gebietskomplementes KSy dessen Wandungskomplement KWRj eingeführt und benutzt wird. Entsprechend zum Gebiet F $\subset$ **F** könnte ein Wandungskomplement KWRj wiederum als hochfestes, volumenmässig minimalisiertes Teilgebiet von KSy ausgebildet werden, was aber nicht vorgenommen wird; statt dessen wird KWRj $\equiv$ KSy gesetzt und als zusammenhängendes Teilgebiet des Strukturkomplementes (**S** - **F**) vorausgesetzt.

**Zur Fig. 8 bis 10: Umrandungen Uj gemäss Definition (1) bis (3)** Statisch-konstruktiv stellen Umrandungen Uj interessante Gebilde dar, wobei diese, vorläufig, in ihrer Ausgangskonfiguration KO(Uj) als Teilgebiet einer ebenen Fläche einer bestimmten Dicke eingeführt, von einer solchen aber befreit, d.h. als eigenständige Gebilde definiert werden.

Als Beispiel wird ein ebenes Feld Fj der Dicke DFj gem. Fig. 8 betrachtet. Dieses Feld Fj wird durch eine umlaufende Umrandung Uj begrenzt, die als Teilgebiet von Fj aufgefasst wird.

Verformt sich nun das Komplement Fj-Uj, z.B. aufgrund von Feuchtigkeits- oder thermischer Einflüsse, so wird die folgende Lösung vorgeschlagen, um der Relativ-Verformung von Fj-Uj, gegenüber Uj Rechnung zu tragen:

Zu diesem Zweck wird das Gebiet Uj gem. Fig. 9 und gemäss Kriterium 3-3 als Vereinigung, d.h. als Menge zweier Teilgebiete Uj* und Uj' betrachtet. Diese Definition entspricht der Definition (1) einer Umrandung Uj, die, wie die späteren Definitionen (2) und (3) auf die Struktur S bezogen wird, weil Uj auch Hohlräume enthalten kann.

$$\text{Uj} \equiv \{\text{Uj*, Uj'}\} \text{ mit Uj'} \equiv \text{Uj - Uj*; wobei Uj*} \not\equiv \{\,\} \text{ und Uj'} \not\equiv \{\,\}$$

Im Teilgebiet Uj* wird die Umrandung Uj wiederum als Vereinigung eines äusseren Teilgebietes Uj*f, eines inneren Teilgebietes Uj*v sowie einem dazwischenliegenden Teilgebiet Ej* betrachtet

$$\text{Ej*} \equiv \text{Uj*} - \text{Uj*v} - \text{Uj*f}$$

Entsprechend wird das Teilgebiet Uj', in dem für eine Umrandung Uj konstruktiv das Kriterium 3-3 erfüllt wird, als Vereinigung eines äusseren Teilgebietes Uj'f, eines inneren Teilgebietes Uj'v sowie einem dazwischenliegenden Teilgebiet Euj' betrachtet. Damit sind die Teilgebiete Uj* und Uj', bezogen auf die Struktur **S**, gegeben durch die Definitionen (1-1) und (1-2), denen, bezogen auf die Struktur **S** die Definitionen (1-3) und (1-4) entsprechen, wenn der Anteil der tragenden Struktur **S** im Teilgebiet Ej* mit Esj* und im Teilgebiet Euj' mit Eusj' bezeichnet wird

$$Uj^* \equiv \{Uj^*f, Ej^*, Uj^*v\} \qquad\qquad (Def.1-1)$$

$$Uj' \equiv \{Uj'f, Euj', Uj'v\} \qquad\qquad (Def.1-2)$$

$$Uj^*(S) \equiv \{Uj^*f, Esj^*, Uj^*v\} \qquad\qquad (Def.1-3)$$

$$Uj(S) \equiv \{Uj'f, Eusj', Uj'v\} \qquad\qquad (Def.1-4)$$

Die Fig. 10 zeigt wie das Umrandungsteilgebiet Uj*, in Umfangrichtung, anhand von M-Körpern, resp. Mengen Vj(S) verwirklicht wird, die den Umrandungsabschnitten Uj*c entsprechen, wobei einem solchen wiederum, bezogen auf die tragende Struktur **S**, eine Menge Vj $\equiv$ Vj(**S**) entspricht:

$$Vj(S) \equiv Uj^*c \equiv \{Vjf, Ej, Vjv\}; \qquad Vj \equiv Vj(S) \equiv \{Vjf, Esj, Vjv\}$$

Die Fig. 10 zeigt auch, wie das Umrandungsteilgebiet Uj', sinngemäss, in Umfangrichtung, anhand von M-Körpern gemäss dem Grenzfall, resp. Mengen Vj'(S) verwirklicht wird, die den Umrandungsabschnitten Uj'c entsprechen, wobei einem solchen, bezogen auf die tragende Struktur **S** eine Menge Vj' $\equiv$ Vj'(**S**) entspricht:

$$Vj'(S) \equiv Uj'c \equiv \{Vjf, Ej', Vjv\}; \; Vj' \equiv Vj'(S) \equiv \{Vjf, Esj', Vjv\}$$

Fasst man in Fig. 9 die Umrandungsteilgebiete Uj*f und Uj'f, Uj*v und Uj'v, sowie Ej* und Euj' je paarweise zusammen, so ergibt sich die Definition (2) einer Umrandung Uj:

$$Uj \equiv \{Ujf, Euj, Ujv\} \; \text{Definition (2) mit } Ujf \equiv Uj^*f \cup Uj'f$$

$$Euj \equiv Ej^* \cup Euj' \text{ und } Ujv \equiv Uj^*v \cup Uj'v$$

Stellen die Teilgebiete Ujf, und Ujv je ein zusammenhängendes Teilgebiet einer Umrandung Uj dar, so wird von einer umlaufenden Umrandung gesprochen, eine Voraussetzung, die hier der Definition (2) einer Umrandung Uj zugrunde gelegt wird.
Unter Beachtung der Bedingungen betreffend die Verknüpfungszonen liegt mit dem Komplement KFj, gegeben durch

$$KFj \equiv (Fj - Uj) \cup Ujv \equiv Fj - Ujf - Euj$$

eine erste Lösung für ein Gebietskomplement KSy vor, das im einfachsten Fall einer vollen isotropen Platte entsprechen kann.
Mit dem Umrandungsteilgebiet Ujf liegt eine erste Lösung für das Gebiet **F** vor, wobei in diesem noch kein hochfestes Gebiet F spezifiziert wird.
Aufgrund des verformbaren Teilgebietes Ej* des Umrandungsteilgebietes Uj* ist damit eine Relativ-Verformung des Komplementes KFj gegenüber dem Umrandungsteilgebiet Ujf möglich.
Die geometrische Konfigurationsmenge des Teilgebietes Ej*, d.h. K(Ej*) die die Relativ-Verformung des Komplementes KFj ermöglicht, wird im wesentlichen, durch die Konfigurationsmenge von KFj, d.h. K(KFj), und jene von Ujf, d.h. K(Ujf) bestimmt:

$$[K(Ujf), K(KFj)] \rightarrow K(Ej^*)$$

Die Umrandungsteilgebiete Uj* und Uj' lassen sich als Vereinigungen von M-Körpern gem. dem allgemeinen Fall, d.h. von Mengen Vj(S) und M-Körpern gem. dem Grenzfall, d.h. Mengen Vj'(S), auffassen.

$$U_j^* \equiv \bigcup_{U_j^*} V_j(S)$$

$$U_j' \equiv \bigcup_{U_j'} V_j'(S)$$

Damit ergibt sich für eine Umrandung Uj, die gemäss Definition (1) als Vereinigung zweier Teilgebiete Uj* und Uj' aufgefasst wurde, die Definition (3) einer Umrandung Uj.

Umrandungen Uj gemäss Definition (1) bis (3) werden später auch zum Aufbau von räumlichen Wandungsschalen verwendet, wobei in diesem Fall auch von Umrandungsschalen gesprochen wird.

**Bemerkungen zum Gebiet, resp. Teilgebiet F im Gebiet _F_:**

Diesbezüglich muss zwischen den folgenden Begriffen unterschieden werden:

- F0: als zusammenhängendes, volumenmässig minimalisiertes, hochfestes Teilgebiet, wobei dieses Teilgebiet F0 im Gebiet (_F_-F0) lokal, statisch mittragende Zonen F0i aufweisen kann, die z.B. rechnerisch erfasst werden können.
- F: Das zusammenhängende Gebiet F als Vereinigung des Teilgebietes F0 mit den im Gebiet (_F_-F0) enthaltenen, lokalen, statisch mittragenden Zonen F0i

$$F \equiv F0 \ \cup \ \{\ \bigcup_{\boldsymbol{F}-F0} F0i\ \}$$

Kostenmässig schafft die volumenmässige Minimalisierung eines hochfesten Gebietes $F \subset \boldsymbol{F}$ auch die Möglichkeit zu einem vertretbaren Einsatz von Verbund-, insbesondere Faserwerkstoffen (vgl. Ansprüche 24 und 26).

Aufgrund dieser Bemerkungen werden für charakteristische Teilmengen zwei Voraussetzungen (Kriterium 4-1 und 4-2) gemacht, die im späteren Kriterium 4 enthalten sind. Ebenso wird das weiter unten aufgeführte Kriterium 4-3, betreffend der Verwirklichung des Gebietes _F_ in der Struktur S, soweit nicht anders vermerkt, vorausgesetzt, wenn das Kriterium 4 vorausgesetzt wird.

Für eine charakteristische Teilmenge VjT wird vorausgesetzt, dass sie mit ihrer Verankerung VjTf stets im Gebiet F von _F_ enthalten ist.

$$V_jTf \subset F \subset \boldsymbol{F} \hspace{4cm} \text{(Kriterium 4-1)}$$

Ist umgekehrt ein Anteil einer an sich unbestimmten, allgemeinen Teilmenge Vjt im Gebiet F enthalten, so handelt es sich um den Anteil VjTf einer charakteristischen Teilmenge VjT deren zweiter Anteil, der Anteil VjTv ist. Damit ergibt sich eine allgemeine Voraussetzung zur Bestimmung einer charakteristischen Teilmenge VjT:

Soll eine charakteristische Teilmenge V2T, z.B. einer Umrandung U2, durch eine charakteristische Teilmenge V1T, z. B. einer Umrandung U1, geometrisch bestimmt werden, so wird vorausgesetzt, dass der Anteil V2Tf als statisch mittragende Zone F0i des Teilgebietes F0 ausgebildet wird, wenn V2Tf selber nicht in F0 enthalten ist.

$$V1Tf \subset F0;\ V2Tf \subseteq F0i \Longleftarrow\Longrightarrow V1Tf \subset F\ \text{und } V2Tf \subset F \hspace{2cm} \text{(Kriterium 4-2)}$$

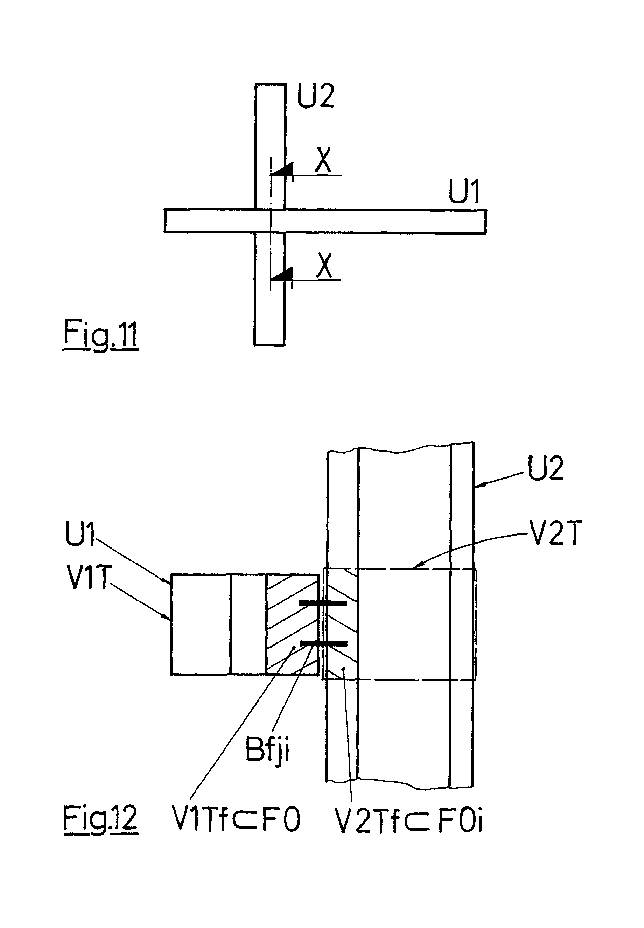

Die Fig. 11 zeigt eine Umrandung U1 und eine Umrandung U2 in Normalprojektion. Der Schnitt X-X geht aus der Fig. 12 hervor. In der Fig. 12 ist dargestellt, wie die Umrandung U1 durch eine charakteristische Teilmenge V1T mit der charakteristischen Teilmenge V2T einer Umrandung U2 verbunden ist. Dabei ist die Teilmenge V2T gestrichelt umrandet. Geometrisch ist der Zusammenhang von U1 und U2 dann gegeben, wenn mindestens ein Zusammenhang von V1T und V2T vorliegt. Hierzu wird vorausgesetzt, dass, wenn V1Tf im Gebiet F0 enthalten ist, V2Tf als eine bezüglich dem Gebiet F0 statisch mittragende Zone F0i ausgebildet wird. Dies bedingt u.a. Verknüpfungszonen Bfji, die mit zwei Parallelstrichen angedeutet sind.

Kriterium 4-3: Geometrisch-konstruktiv wird vorausgesetzt, dass das bezüglich der Struktur **S** zusammenhängende Gebiet _F_, und damit auch das darin enthaltene Teilgebiet, resp. Gebiet F, betr. der Struktur S, als Teilgebiet der Wandung WRi und diese wiederum als Teilgebiet genau eines Raumes Ri, verwirklicht wird. Später wird eine hinreichende Bedingung zur Definition des Raumes Ri angegeben.

Konstruktiv wird mit dem Raum Ri betr. der Struktur S, wenn diese nach aussen begrenzt ist, gegebenenfalls die Bildung eines Hohlraumes (Ri-WRi) angestrebt. Dazu muss zur Betrachtung von räumlichen Strukturen übergegangen werden.

*Bemerkung 1:* Später wird das Kriterium 4-3 anhand des Kriteriums 4-4 eingeschränkt werden. Wenn dieses jedoch nicht ausdrücklich vorausgesetzt wird, werden allgemein mit dem Kriterium 4 nur die Kriterien 4-1 bis 4-3 vorausgesetzt.

*Bemerkung 2:* Die Schaffung des Hohlraumes (Ri-WRi), gemäss Anspruch 17, wird in einer Struktur S auch von daher als grundlegend erachtet, weil der heutige Stand der Technik, gekennzeichnet durch laufend komplexere Systeme, mit Komponenten einer stets höheren Integrationsdichte, betreffend der Erschliessung einer Struktur, und betreffend ihrer Anordnung in einer Struktur, von Anfang an dazu zwingt, eine solche so zu definieren, dass möglichen externen und internen Störgrössen, z.B. betreffend der elektromagnetischen Verträglichkeit (EMV), Rechnung getragen wird.

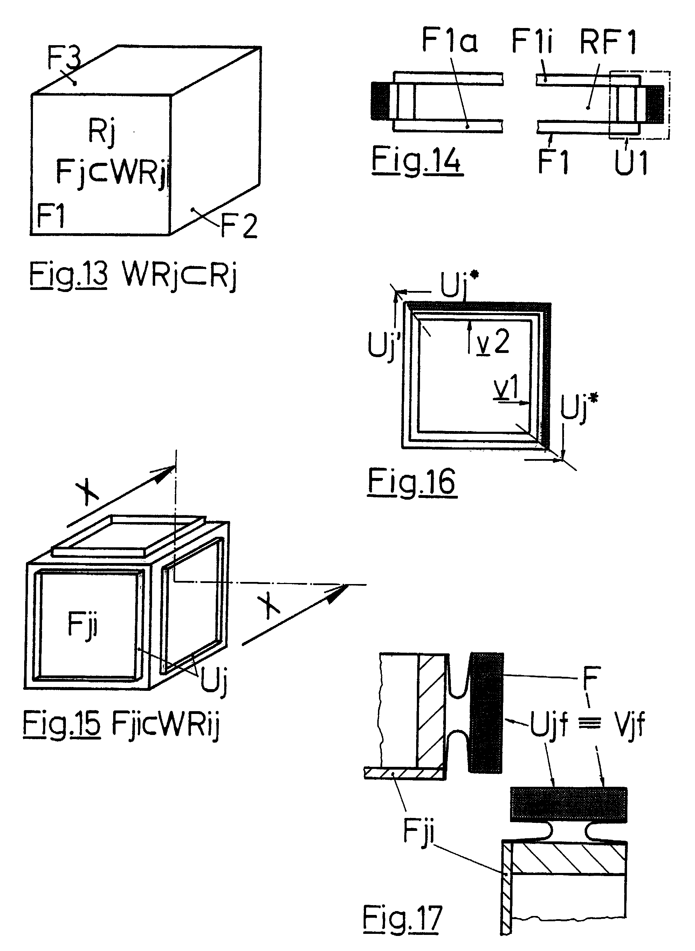

## Zur Fig. 13 bis 17: Vereinigung von Feldern Fj zu einer Wandung WRj, Beschreibung eines Raumes Rj

Die Fig. 13 zeigt den Aufbau einer Wandung WRj mit Feldern Fj, wobei die drei Felder F1, F2 und F3 senkrecht aufeinander stehen und den sichtbaren Anteil der Wandung WRj darstellen. Jedem dieser Felder F1, F2 und F3 entspricht je ein weiteres Feld, welches parallel liegt. Damit ergibt sich eine kubusartige Wandung WRj als Vereinigung von Feldern Fj. Der Zusammenhalt je zweier, senkrecht aufeinanderstehender Felder wird später beschrieben.

Diese Wandung WRj beschreibt einen Raum Rj, der, in der Struktur S, aus der Wandung WRj, als Teilgebiet von Rj, und dem von der Wandung WRj umschlossenen Raum (Rj-WRj) besteht. Später wird noch eine hinreichende Bedingung zur Definition des Raumes Rj angegeben. Betreffend der Struktur *S* wird der Raum Rj ausschliesslich durch die entsprechenden, tragenden Teilgebiete seiner Wandung WRj definiert, die vorläufig jenen der Felder Fj entsprechen.

Diesem spezifischen Wandungsaufbau werden im nächsten Abschnitt einige weitere Möglichkeiten gegenübergestellt. Die Fig. 14 zeigt den Aufbau des Feldes F1 im Schnitt. Bezüglich einem Raum Rj weist ein Feld F1 eine innere Feldfläche Fli, und eine äussere, d.h. (Rj-WRj)-abgewandte Feldfläche Fla auf. Die beiden Feldflächen Fli und Fla begrenzen, zusammen mit der Umrandung U1, den feldinneren Hohlraum RF1, der im Grenzfall verschwindet. Entsprechend enthält eine solche Wandung WRj eine innere Wandungsschale WRji und eine äussere, d.h. (Rj-WRj)-abgewandte, Wandungsschale WRja. Betreffend der Struktur S gilt:

$$Fj \subset WRj \subset Rj$$

Die Fig. 15 zeigt einen Teil der Wandung WRj der aus dem entsprechenden Teil der inneren Wandungsschale WRji, resp. den inneren Feldflächen Fji und den dazugehörenden Umrandungen Uj gebildet wird. Dabei erscheinen die feldinneren Hohlräume "geöffnet"; es fehlt die äussere Wandungsschale WRja.

Die Fig. 16 zeigt eine Umrandung Uj, gemäss Definition (1).

$$Uj \equiv \{\, Uj^*, Uj' \,\}$$

Die nicht beschrifteten Teilgebiete von Uj* und Uj' sind ihrerseits gem. Definition 1-1 und Definition 1-2 bestimmt.

$$Uj^* \equiv \{Uj^*f, Ej^*, Uj^*v\} \text{ und } \qquad Uj' \equiv \{Uj'f, Euj', Uj'v\}$$

Dabei ist die Querschnittsverformbarkeit im Teilgebiet Uj*, abschnittsweise durch die Vektoren $\underline{v}1$ und $\underline{v}2$ gekennzeichnet. D.h. es wird im Teilgebiet Uj*, abschnittsweise, eine ausschliesslich translatorische, betragsmässig gleiche Querschnittsverformbarkeit angenommen (M-Körperquerschnitt z.B. gemäss Fig. 6).

Die Fig. 17 zeigt den Schnitt X-X gem. Fig. 15. Dabei werden die "festen" Umrandungsquerschnitte Ujf, die den "festen" M-Körper, resp. Vj-Anteilen Vjf entsprechen, soweit sie im Gebiet F enthalten sind, von nun an, "schwarz" gekennzeichnet. Die eckseitige Verbindung der Vjf-Anteile, wie auch der Feldflächen Fji, bleibt vorläufig ausgeklammert.

Der Begriff einer Umrandung Uj wurde bei einem Feld Fj gem. Fig. 8 eingeführt. Aus Fig. 14 und 15 geht hervor, dass ein Feld Fj und damit allgemein eine Wandung WRj einen doppelwandigen Aufbau besitzen kann, wobei später erläutert wird, dass zwei solche Schalen aus den inneren Wandungsschalen WRji je zweier benachbarter Räume Rj bestehen. Eine Umrandung Uj gem. Fig. 14 und 16 erscheint dabei als Umrandung Uj (RFj); d.h. eines feldinneren Hohlraumes RFj.

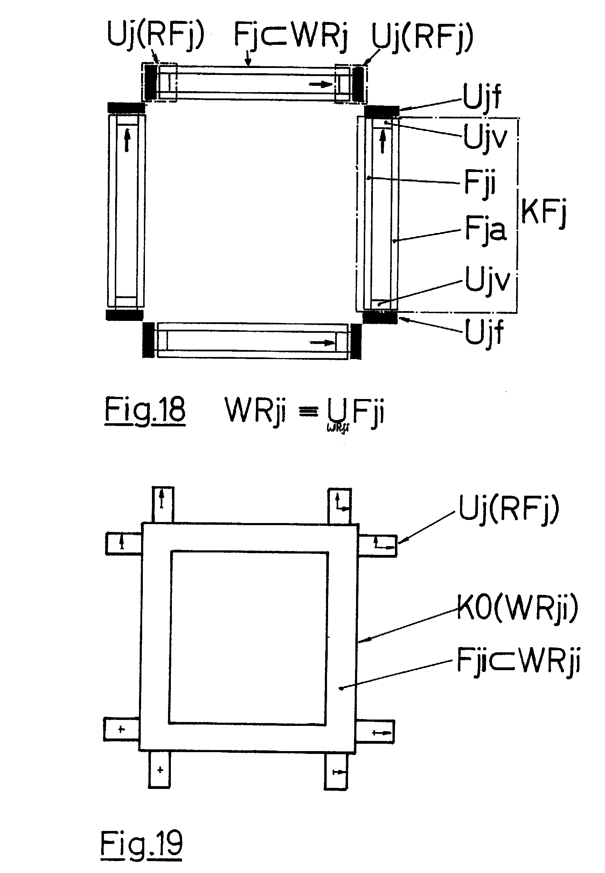

**Zu Fig. 18-21: Möglicher Aufbau der inneren Wandungsschale WRji und einer Wandung WRj:**

Der Aufbau einer Wandungsschale WRji ist von grundlegender Bedeutung für die Ausbildung der Umrandungen Uj (RFj), resp. die Lagerung einer Wandungsschale WRji. Zwei Fälle werden hier unterschieden:

**Fall 1:**

Die Fig. 18 zeigt, im Schnitt, vier Felder Fj mit Umrandungen Uj(RFj) einer Wandung WRj. In diesem Fall ist wesentlich, dass für ein Feld Fj eigenständige Feldflächen Fji gewählt werden, d.h., dass eine solche mit einer Feldfläche Fji eines benachbarten Feldes Fj nicht zusammenhängend ist. Daraus folgt:
Ein Feldkomplement KFj, bestehend aus einer inneren Feldfläche Fji, der entsprechenden äusseren Feldfläche Fja und dem entsprechenden Umrandungsteilgebiet Ujv stellt ein zusammenhängendes Gebiet dar.
In Fig. 18 ist, als Beispiel, ein solches, zusammenhängendes Feldkomplement KFj (als Schnitt) schwarz umrandet hervorgehoben. Um nun, bei einem derart konzipierten Feld Fj, eine Relativverformung des Feldkomplementes KFj aufzunehmen, können im Teilgebiet Uj* einer Umrandung Uj, resp. Uj (RFj), M-Körper, resp. Mengen Vj(S) mit einem 1-dim. verformbaren Querschnitt (gekennzeichnet durch einen Pfeil) eingesetzt werden.
Die in Fig. 18 fehlende Vereinigung der Ujf-Teilgebiete wird in Verbindung mit der Eingliederung der Ujf-Teilgebiete in das Gebiet F, resp. *F* gelöst.

**Fall 2a:**

Die Fig. 19 zeigt einen zweiten Fall, bei welchem eine innere Wandungsschale WRji eines Raumes Rj als solche ein in sich zusammenhängendes Gebiet darstellt (Schnittzeichnung). In diesem Fall sind die einzelnen, inneren Feldflächen Fji der Wandungsschale WRji miteinander zusammenhängend.
Erkennbar ist die Wandungsschale WRji in einer Grundkonfiguration K0 (WRji). Die infolge einer Verformung der Wandungsschale WRji notwendige Verformbarkeit der in diesem Schnitt eingetragenen acht Umrandungs-, resp. M-Körperquerschnitte ist pro Dimension durch je einen Pfeil gekennzeichnet. Daraus geht hervor, dass in diesem Fall in einer Umrandung Uj, resp. Uj (RFj) u.a. auch 2-dim. verformbare M-Körperquerschnitte notwendig sind. Darauf wird später eingetreten.

**Fall 2b:**

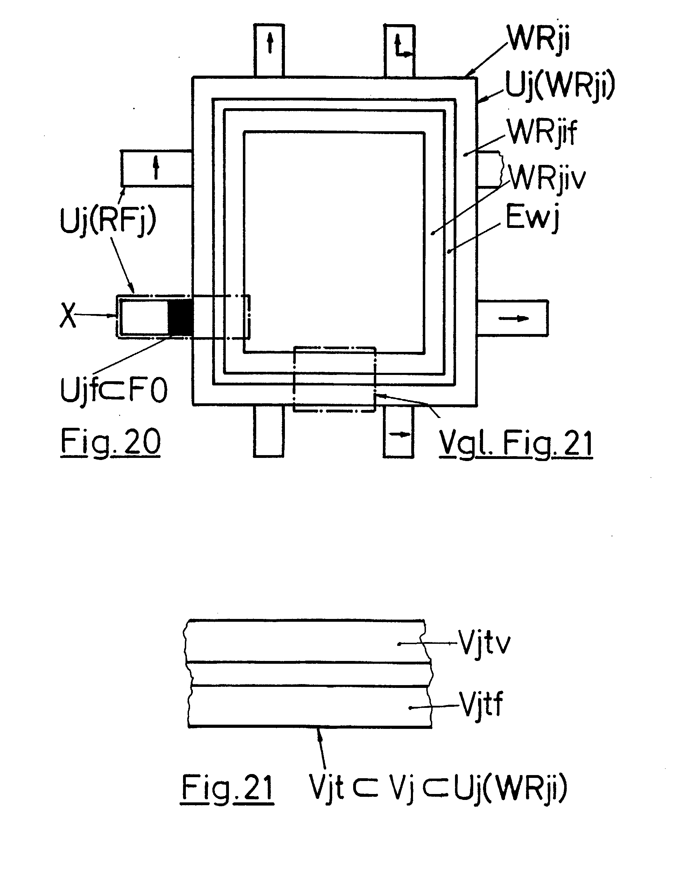

An dieser Stelle wird nun ein dritter Fall betrachtet, der jedoch mit dem vorhin betrachteten Fall verwandt ist, weshalb er als Fall 2b bezeichnet wird.
Dieser Fall ist dadurch gekennzeichnet, dass nun auch in einer Wandungsschale WRji ein verformbares Teilgebiet Ewj angelegt wird. Damit weist WRji je ein als zusammenhängend vorausgesetzte äusseres und inneres Teilgebiet auf. Allgemeine, resp. charakteristische Teilmengen die in einer Wandungsschale WRji enthalten sind, werden mit Vjt, resp. VjT von WRji, d.h. Vjt(WRji), resp. VjT(WRji) bezeichnet. Eine solche Wandungsschale WRji wird in Fig. 20 am Beispiel einer in Umrandungen Uj gegliederten Wandungsschale WRji erläutert.
Damit liegt neben den Umrandungen der feldinneren Hohlräume Uj (RFj), eine zweite Art von Umrandungen vor, nämlich die Uj (WRji).
Die Fig. 20 zeigt, als Schnitt, eine innere Wandungsschale WRji als Vereinigung von Umrandungen Uj ≡ Uji (WRji).
Der Grund zu der an dieser Stelle gewählten, vereinfachten Schreibweise wird später erläutert. Aus dieser Abbildung geht vorerst hervor, wie eine solche Wandungsschale WRji je ein äusseres und ein inneres noch zu definierendes Teilgebiet aufweist. Weiter sind die bekannten Umrandungen Uj (RFj) ersichtlich, die der Lagerung der Wandungsschale WRji dienen, wobei angenommen wird, dass das Gebiet F0 in Uj(RFj) angelegt ist (gemäss dem späteren Kriterium 4-4). Dazu wird das äussere Teilgebiet einer Umrandung Uj(WRji) z.B. an der mit "x" benannten Stelle, mit einer Umrandung Uj (RFj), d.h. mit deren Teilgebiet Ujf, das im Gebiet F0, schwarz gekennzeichnet, enthalten ist, gemäss Fig.12, verbunden. Dadurch wird das äussere Teilgebiet von WRji dem Gebiet *F* von *S* zugeordnet und mit WRjif bezeichnet; als Folge davon wird das innere Teilgebiet mit WRjiv benannt. Dazwischen liegt das verformbare Teilgebiet Ewj.

Die Fig. 21 zeigt einen Ausschnitt einer Umrandung Uj (WRji) die einer allgemeinen Teilmenge Vjt von Vj von Uj (WRji) mit den Anteilen Vjtv und Vjtf entspricht, wobei

$$Vjtv \subset Vjv \subseteq Ujv \subset WRjiv \text{ und}$$

$$V_{jtf} \subset V_{jf} \subseteq U_{jf} \subset WR_{jif}$$

zutrifft.

*Anmerkung*: Da Vjtf, aufgrund der gemachten Annahme an dieser Stelle nicht im Gebiet F enthalten ist, liegt hier nur eine allgemeine und keine charakteristische Teilmenge vor.

Weist eine Wandungsschale WRji je ein zusammenhängendes Teilgebiet WRjif und WRjiv auf, und erfüllen WRjif und WRjiv das Kriterium 3-3, für die ganze Konfigurationsmenge dieser Wandungsschale WRji, so können in einer solchen Wandungsschale durchaus Umrandungen Uj(WRji) bestehen, die das Kriterium 3-3 nicht einzeln erfüllen, resp. die der Definition (1) einer Umrandung Uj nicht genügen.

**Tabelle K: Einige mögliche Lösungen für Wandungskomplemente KWRj**

Die den Fällen 1, 2a und 2b entsprechenden, in sich zusammenhängenden Gebietskomplemente KSy werden als Wandungskomplemente KWRj definiert; diese sind im Strukturkomplement (S - F) enthalten.

- **Uebersicht über die Wandungskomplemente KWRj gemäss Anspruch 1 und 3:**

   Im Fall 1 (vgl. Anspruch 3) entspricht ein Wandungskomplement KWRj einer Vereinigung von Feldkomplementen KFj.
   Im Fall 2a (vgl. Anspruch 1) stellt KWRj die Vereinigung einer Wandungsschale WRji mit den damit zusammenhängenden Umrandungsteilgebieten Ujv der Umrandungen Uj(RFj), d.h. Ujv [Uj(RFj)] dar und wird mit KWRji bezeichnet.
   Im Fall 2b (vgl. Anspruch 1) weist KWRj zwei Lösungen auf:

   - Das äussere Komplement KWRjil entspricht äusserlich KWRj ≡ KWRji gemäss Fall 2a.
   - Das innere Komplement KWRji2 entspricht dem inneren Wandungsteilgebiet WRjiv.

   Gemäss Anspruch 1 ist eine Wandungsschale WRji (noch) nicht gegliedert. Gemäss Anspruch 2 ist WRji gegliedert, z.B. gemäss Fig. 20 in Umrandungen Uj (WRji), was im Fall 2b von Bedeutung ist. Im Anspruch 2 wird in einer Wandung WRj gemäss Anspruch 3 nur noch ein Umrandungskomplement KUj betrachtet.

- **Uebersicht über die Umrandungskomplemente KUj gemäss Anspruch 2:**

   In den Fällen 1 und 2a kann nur eine Lösung für ein Umrandungskomplement KUj existieren, das einem Umrandungsteilgebiet Ujv[Uj(RFj)], entspricht.
   Im Fall 2b existieren wiederum zwei Lösungen:

   - Ein erstes Komplement KUjl entspricht jenem gemäss dem Fall 2a, d.h. einem Umrandungsteilgebiet Ujv [Uj(RFj)].
   - Das zweite Komplement KUj2 entspricht dem inneren Umrandungsteilgebiet Ujv[Uj(WRji)].

Später werden für ein Umrandungskomplement KUj noch weitere Lösungen angegeben, und zwar als Komplemente einer Umrandungsmenge *U*j(WRji) gemäss Definition (4).

Das im Anspruch 1 vorausgesetzte Minimum betreffend ein Wandungskomplement KWRj wird später, mit dem Kriterium 4, angegeben.

Im nächsten Abschnitt wird die Betrachtung allgemein auf eine Struktur S ausgedehnt, von der ein Raum Rj ein Teilgebiet ist.

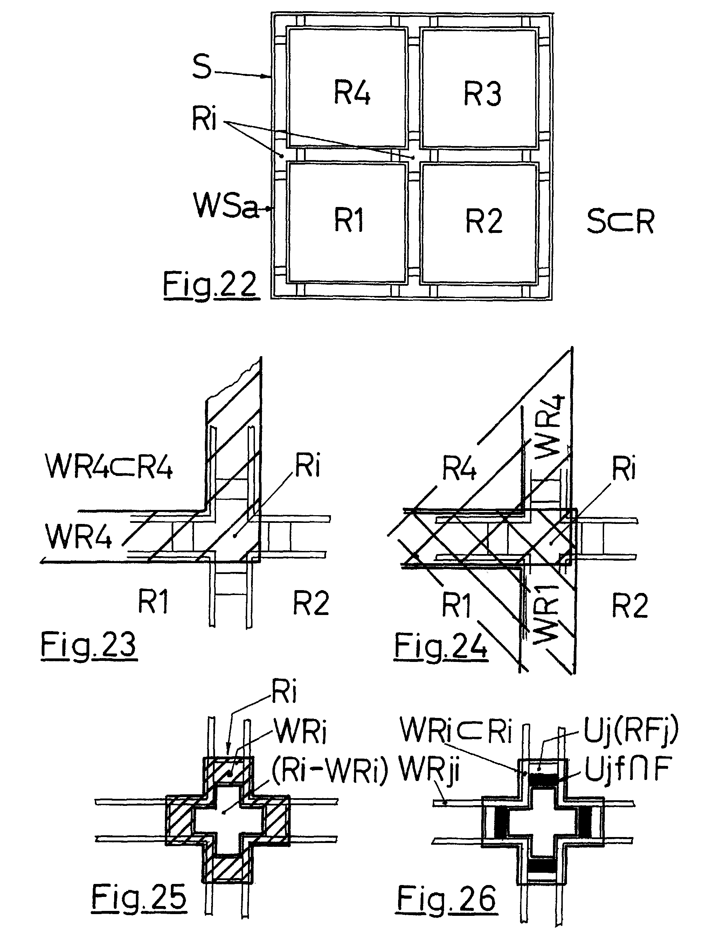

**Zu Fig. 22 - 27, Vereinigung von Räumen Rj mit dem Raum Ri zu einer Struktur S: Festlegen des Existenzbereiches der für einen M-Körper charakteristischen Teilmenge VjT innerhalb der Struktur S und Definition dieser Teilmenge.**

Die Fig. 22 zeigt im Raum R, als Beispiel, eine nach aussen begrenzte Struktur S im Querschnitt, die aus vier Räumen R1,.., R4 (allgemein mit Rj bezeichnet) besteht, die bezüglich dem Raum Ri angeordnet sind. Dabei wird diese Struktur S, nach aussen, durch ihre Aussenwandung WSa begrenzt.

Diese Räume R1,...., R4 können einen Wandungsaufbau gemäss dem Fall 1, 2a oder 2b aufweisen (vgl. Fig. 18 bis 20). Anhand der Fig. 23 bis 26 werden Gebiete beschrieben.

Die Fig. 23 zeigt einen Ausschnitt der Räume Rl, R2 und R4, gemäss Fig. 22, die bezüglich dem Raum Ri angeordnet sind. Dabei ist der Raum R4, der als Teilgebiet seine Wandung WR4 (schraffiert gekennzeichnet) enthält, speziell ausgezeichnet dargestellt. Aus dieser Abbildung geht auch hervor, wie im Bereich des Raumes Ri die Wandung WR4, allgemein eine Wandung WRj, als ein in den Raum Ri eingreifendes, noch zu definierendes Teilgebiet, festzulegen ist.

Die Fig. 24 zeigt in demselben Schnitt wiederum die Räume Rl, R2 und R4 die bezüglich dem Raum Ri angeordnet sind. Dabei ist der Raum R1, welcher als Teilgebiet seine Wandung WR1 enthält, schraffiert dargestellt. Der Raum R4, der als Teilgebiet seine Wandung WR4 enthält, ist entgegengesetzt schraffiert hervorgehoben. Ein Raum Rj weist in seinem Inneren einen Hohlraum auf, der durch das Raumkomplement (Rj-WRj) definiert ist.

Die Fig. 25 zeigt, als Ausschnitt, im Querschnitt, eine mögliche Ausbildung des Raumes Ri gemäss Fig. 22 der, als Teilgebiete seine Wandung WRi und einen Hohlraum (Ri-WRi) aufweist.

Die Fig. 26 zeigt eine mögliche Ausbildung der Wandung WRi, fett umrandet, des Raumes Ri. Dabei besteht die Wandung WRi aus Wandungsschalen WRji und Umrandungen Uj(RFj) der nicht beschrifteten Wandungen WR1, ..., WR4 der Räume R1, ..., R4. Die Umrandungen Uj(RFj) dienen der Lagerung und dem Zusammenhalt der Wandungsschalen WRji gemäss Fig. 18 bis 20. Zur volumenmässigen Minimalisierung des hochfesten Gebietes F, das gemäss Kriterium 4-3 in der Wandung WRi des Raumes Ri verwirklicht wird, ist es vorteilhaft, dieses soweit als möglich, in den Ujf-Teilgebieten der Umrandungen Uj (RFj) anzulegen (Kriterium 4-4) . Diesbezüglich ist, als Beispiel in der Fig. 26, der im Gebiet F als Durchschnitt Ujf ∩ F enthaltene Anteil des Umrandungsteilgebietes Ujf schwarz gekennzeichnet. Dabei muss dessen Anlage auf den Wandungsaufbau, z.B. gemäss dem Fall 1, 2a oder 2b, abgestimmt werden. Die Umrandungsteilgebiete Ujf benachbarter Umrandungen Uj(RFj) lassen sich nun im Raum Ri, z.B. anhand hier nicht dargestellter Knotenelemente, zum Gebiet F vereinigen.

Die Betrachtung einer gemäss Fig. 22 aufgebauten Struktur S zeigt die Möglichkeit, so ein gemäss dem Kriterium 4-3 zusammenhängendes Gebiet F von **F** als Teilgebiet der Wandung WRi eines bezüglich der Struktur S zusammenhängenden Raumes Ri anzulegen, der bezüglich der Struktur S auch einen zusammenhängenden Hohlraum aufweisen kann.

Grundlegend ist, dass die Wandung WRi des Raumes Ri, gemäss Kriterium 4-3 gekennzeichnet durch das bezüglich der Struktur **S** zusammenhängende Gebiet **F**, konstruktiv, betreffend der Struktur S, lokal, durch mindestens einen Abschnitt mindestens einer Wandung WRj mindestens eines Raumes Rj gebildet wird, für den minimal vorausgesetzt wird, dass

$$\text{WRi} \cap \text{WRj} \equiv \text{Ri} \cap \text{Rj} \neq \{\}, \qquad\qquad \text{F} \cap \text{WRi} \cap \text{WRj} \neq \{\},$$

$$\text{KWRj} \cap \text{WRi} \cap \text{WRj} \neq \{\} \qquad \text{und} \qquad \varepsilon \cap \text{WRi} \cap \text{WRj} \neq \{\}$$

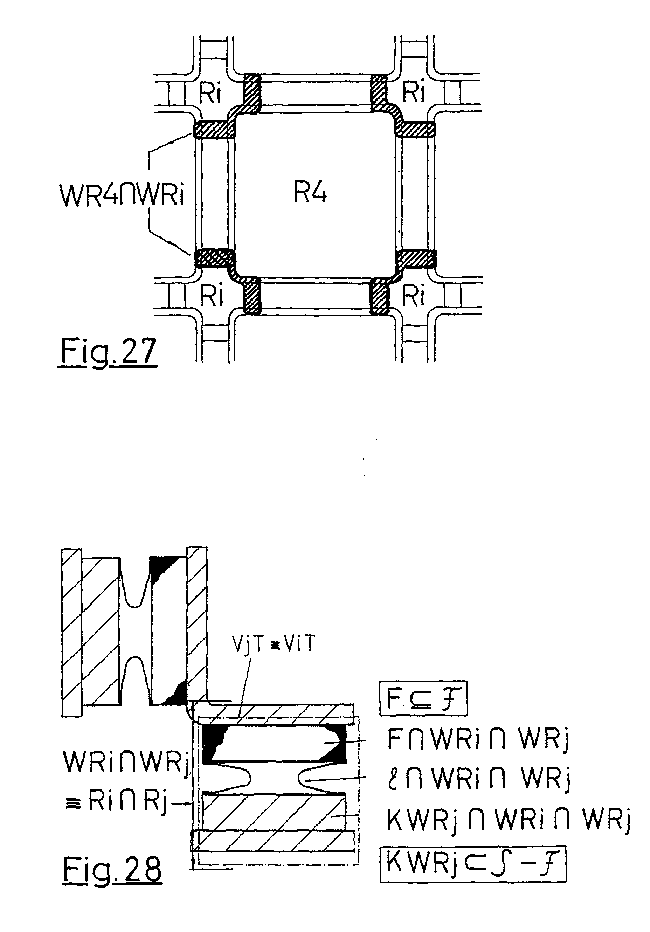

und dass in diesem Durchschnitt ein Wandungskomplement KWRj ⊂ (**S** - **F**) mit dem Gebiet F ⊂ **F** ⊂ WRi ⊂ Ri verbunden werden kann. D.h., dass die Wandung WRi, und damit der Raum Ri, neben dem Gebiet **F** sowie eine Wandung WRj, und damit der entsprechende Raum Rj, neben dem(-n) entsprechenden Wandungskomplement(-en) KWRj, kinematisch bedingt, lokal, minimal mit einem gemeinsamen Teilgebiet im an sich nicht materialisierten Teilgebiet ε der Struktur S enthalten sein müssen (Fig. 27 und Fig. 28).

Diese Bedingung präzisiert die gegenseitige Lage eines Wandungskomplementes KWRj gegenüber dem Gebiet **F** der Struktur S. Dies unter Berücksichtigung der möglichen Relativbewegung von KWRj gegenüber dem Gebiet **F**, für die ganze, noch zu vervollständigende Konfigurationsmenge der Struktur **S**. Im übrigen können die Räume Ri und Rj beteffend der Struktur S nach konstruktiven Gesichtspunkten beschrieben werden.

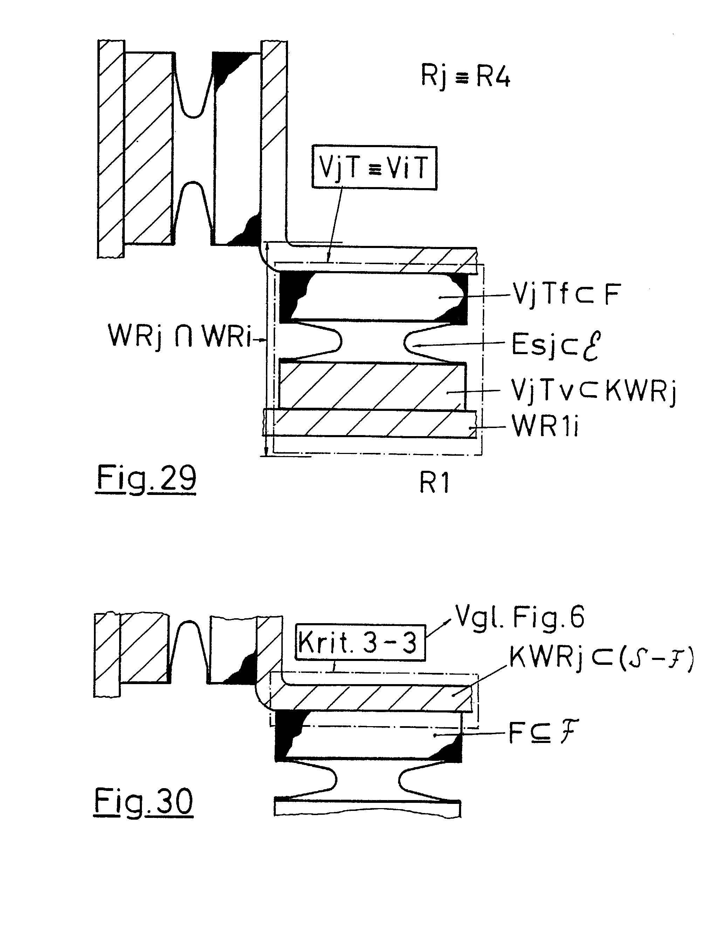

In einem M-Körper, resp. einer Menge Vj, gekennzeichnet durch mind. eine charakteristische Teilmenge VjT≡ViT ist allgemein die Teilmenge VjTv, mit der VjT in mindestens einem Wandungskomplement KWRj ⊂ (**S** - **F**) enthalten ist, anhand einer verformbaren, kraftübertragenden Teilmenge Esj, bezüglich der Menge Vj, mit der Teilmenge VjTf, mit der VjT im "festen" Gebiet F ⊂ **F** der Wandung WRi des Raumes Ri enthalten ist, verknüpft. Das führt dazu, VjT≡ViT als gemeinsamen Anteil mindestens einer Wandung WRj mindestens eines Raumes Rj und der Wandung WRi von Ri aufzufassen (Fig. 29) / (vgl. Anspruch 1):

$$\text{VjT} \subset \text{WRj} \cap \text{WRi}$$

$$\text{VjTf} \subset \text{F} \subset \textbf{F} \subset \text{WRi} \subset \text{Ri} \subset \text{S}$$

$$VjTv \subset KWRj \subset (S - F), \text{ wobei } KWRj \subset WRj \subset Rj \subset S$$

Betreffend der Struktur **S** werden die Räume Ri und Rj ausschliesslich durch die entsprechenden, nun vervollständigten, tragenden Teilgebiete der Wandungen WRi und WRj bestimmt.

Da VjT bezüglich dem Durchschnitt von WRj und WRi formuliert werden muss, wird von VjT≡ViT als von der für einen M-Körper, resp. eine Menge Vj charakteristischen Teilmenge gesprochen.

Dieser Durchschnitt von WRj und WRi wird als Existenzbereich von VjT≡ViT gemäss Patentanspruch 1 bezeichnet.

Anhand der Fig. 23 bis 27 wird zum Existenzbereich gem. Anspruch 1, unter der einschränkenden Annahme geführt, dass das Gebiet F in den Umrandungen $U_j(RF_j)$ angelegt ist (Kriterium 4-4). Darin können neben den charakteristischen Teilmengen VjT von Uj (RFj) auch weitere z.B. VjT von Wandungsschalen WRji existieren, wenn WRji gemäss dem Fall 2b aufgebaut ist.

Die Fig. 27 zeigt, schraffiert, vier Teillösungen des gemeinsamen Gebietes der Wandung WR4 des Raumes R4 und der Wandung WRi des Raumes Ri im Schnitt. Dieses gemeinsame Gebiet von WR4 und WRi gehört zum Durchschnitt von WR4 und WRi und entspricht dem Existenzbereich charakteristischer Teilmengen VjT gemäss Anspruch 1 unter der gemachten einschränkenden Annahme gemäss Kriterium 4-4. Allgemeine Teilmengen Vjt einer Umrandung Uj (RFj) und der inneren Wandungsschale von WR4, die in diesem Durchschnitt enthalten sind, stellen charakteristische Teilmengen von WR4 und WRi dar. Diesem Existenzbereich entspricht, in der Regel, eine Lösungsmenge von Teilgebieten. Der Einfachheit halber wird eine solche Lösungsmenge nachfolgend stets als Lösung bezeichnet.

Auf dem Existenzbereich kommt einer charakteristischen Teilmenge VjT≡ViT nun die entscheidende Aufgabe zu, eine Relativ-Verformung mindestens eines Wandungskomplementes KWRj gegenüber dem Gebiet F ⊂ **F** von WRi von Ri zu ermöglichen, in dem VjT≡ViT, betreffend der Menge Vj, mit deren verformbaren, kraftübertragenden Teilmenge Esj zusammenhängt, deren Konfigurationsmenge dieser Relativ-Verformung entspricht. Dabei wird vorausgesetzt, dass die Konfiguration der Teilmenge Esj ⊂ Vj eindeutig mit der entsprechenden Konfiguration

- mindestens einer charakteristischen Teilmenge VjT≡VjT ⊂ Vj, d.h. K[VjT]
- der Menge Vj, d.h. K[Vj] und der Menge Vj(S), d.h. K[Vj(S)]
- und des Strukturkomplementes (**S**-Vj), d.h. K[**S**-Vj] zusammenhängt, d.h.
  $$K[Esj] \Longleftrightarrow K[VjT \equiv ViT] \Longleftrightarrow K[Vj] \Longleftrightarrow K[Vj(S)] \Longleftrightarrow K[\boldsymbol{S}\text{-}Vj]$$

Eine Teilmenge Esj wird bezüglich der Struktur S in der Spur der Struktur **S** mit dem Gebiet ε, d.h. in **S** ∩ ε, als Teilgebiet des Strukturkomplementes (**S** - **F**) verwirklicht. Mit der Definition einer Teilmenge Esj im Teilgebiet Ej ⊂ ε ⊂ S erfolgt zugleich die Definition der Mengen Vj(S) und Vj ≡ Vj(**S**), entsprechend dem M-Körper in dem diese Teilmenge Esj angelegt wird.

Gegenstand von Patentanspruch 1 ist die Verknüpfung der Verankerungen VjTf und VjTv einer charakteristischen Teilmenge VjT≡ViT bezüglich dem entsprechenden Existenzbereich, wobei betr. Verknüpfungselementen auf Fig. 6 verwiesen wird.

Überblick über die dabei zu berücksichtigenden Kriterien:

K1:    Festlegen eines gemeinsamen Definitionsbereiches mindestens einer Wandung WRj mindestens eines Raumes Rj und der Wandung WRi des Raumes Ri (Fig. 27).

K2:    Trennung eines Wandungskomplementes KWRj vom Gebiet **F** von WRi, in konstruktiver Hinsicht, anhand eines Teilgebietes des Gebietes ε, im Definitionsbereich gemäss K1, unter dem Vorbehalt gemäss Kriterium 3 (Fig. 28).

K3:    Voraussetzungen betr. den Zusammenhang, für die ganze Konfigurationsmenge der Struktur **S** (vgl. Anspruch 1):

- des Gebietes **F**, und damit auch des Gebietes F ⊂ **F** bezüglich der Struktur **S** (Kriterium 3-1)
- der Wandungskomplemente KWRj bezüglich der Räume Rj (Kriterium 3-2); vgl. Bemerkung zu Kriterium 4.
- einem minimalen Zusammenhang, gekennzeichnet durch einen, im Idealfall, konstanten Abstand, je dreier Punkte des Gebietes **F** gegenüber je drei Punkten eines Wandungskomplementes KWRj (Kriterium 3-3) / (Fig. 30)

K4:    Definition zumindest einer charakteristischen Teilmenge VjT≡ViT einer Menge Vj bezüglich dem Bereich gem. "K1" so, dass sie mit ihrer Teilmenge VjTf in F ⊂ **F** ⊂ WRi ⊂ Ri und mit ihrer Teilmenge VjTv in mindestens einem Wandungskomplement KWRj ⊂ (**S** - **F**) enthalten ist (vgl. Anspruch 1 und Kriterium 4-1 bis 4-3). Diese Definition, besagt demnach, dass ein Wandungskomplement KWRj minimal so gross sein muss, dass es mindestens ein Teilgebiet einer Teilmenge VjTv der entsprechenden Teilmenge VjT enthält, die ihrerseits in der entsprechenden Menge Vj enthalten ist (Fig. 29).

## Kriterium 5 (mit/ ohne Zusatzbezeichnungen):

Fig. 87 zeigt eine Übersicht über alle nachfolgend beschriebenen Verknüpfungen gemäss Kriterium 5 (mit/ ohne Zusatzbezeichnungen). Die Formulierung erfolgt unter der Voraussetzung, dass die ganzen, nachfolgenden Anteile, resp. Teilmengen Vjtf und Vjtv, resp. VjTf und VjTv statisch tragend sind. Dabei besteht ein Anteil Vjtf, resp. VjTf aus mindestens einem Teilgebiet, entsprechend einem Element mit dem Vjt, resp. VjT im Gebiet $\boldsymbol{F}$, resp. F enthalten ist. Ein Anteil Vjtv, resp. VjTv besteht seinerseits aus mindestens einem Teilgebiet, entsprechend einem Element mit dem Vjt, resp. VjT in mindestens einem Wandungskomplement KWRj enthalten ist, wobei ein Element nur in einem Wandungskomplement KWRj enthalten sein kann. Lokale Verknüpfung der Teilmenge VjTf mit der Teilmenge VjTv einer charakteristischen Teilmenge VjT, anhand der verformbaren, kraftübertragenden Teilmenge Esj bezüglich einer Menge Vj unter Berücksichtigung der Bedingungen betreffend die Verknüpfungszonen Bjif und Bjiv zu einem zusammenhängenden Teilgebiet der Struktur $\boldsymbol{S}$:

$$VjT \equiv ViT \equiv VjTf \cup \{ Esj \} \cup VjTv \subset S \qquad \text{(Kriterium 5)}$$

Demgegenüber stellt die allgemeinere Formulierung gemäss dem Kriterium 5A, betreffend allg. Teilmengen Vjt, verformungsmässig, eine weniger strenge Formulierung dar, da Vjtf $\subset \boldsymbol{F}$ (vgl. Anspruch 24):

$$Vjt \equiv Vit \equiv Vjtf \cup \{ Esj \} \cup Vjtv \subset S \qquad \text{(Kriterium 5A)}$$

Konsequenz: Die systematische Verknüpfung der entsprechenden Anteile charakteristischer Teilmengen VjT, einer genügenden Anzahl von Mengen Vj, gemäss dem Kriterium 5, ergibt den Zusammenhang zwischen dem Gebiet $\boldsymbol{F}$ und den Wandungskomplementen KWRj:

$$F \quad \cup \quad \underset{s}{\cup} Vj \quad \cup \quad \underset{s}{\cup} KWRj$$

Darauf aufbauend entsteht, unter Berücksichtigung des Kriteriums 5A, betreffend der Struktur $\boldsymbol{S}$, der Zusammenhang zwischen dem Gebiet $\boldsymbol{F}$ und den Wandungskomplementen KWRj:

$$\boldsymbol{S} \equiv \boldsymbol{F} \quad \cup \quad \underset{s}{\cup} Vj \quad \cup \quad \underset{s}{\cup} KWRj$$

Damit wird die anfänglich in das Gebiet $\boldsymbol{F}$ und das Komplement ($\boldsymbol{S}$ - $\boldsymbol{F}$) gegliederte Struktur $\boldsymbol{S}$ in eine solche zurückgeführt, die betreffend einer Verformung einem Kontinuitätsaxiom [2], [3] entsprechen kann, obwohl in der Spur $\boldsymbol{S} \cap \varepsilon$ grosse Verschiebungen bezüglich dem einbettenden Raum $\varepsilon$ - $\boldsymbol{S} \cap \varepsilon$ auftreten können:

$$S \equiv F \cup (S \cap \varepsilon) \cup (S - F), \text{ wobei } S \cap \varepsilon \subset (S - F)$$

Dabei wird die Anzahl der einzusetzenden Mengen Vj, als Möglichkeit, durch die betreffend der Struktur $\boldsymbol{S}$ zulässigen Verformungswerte bestimmt.
Die Erfüllung des Kontinuitätsaxioms [2], [3] stellt bei der Konstruktion der Teilmenge Esj einer Menge Vj, resp. M-Körpers, für diesen und damit für die Struktur $\boldsymbol{S}$, aufgrund der mit den Ansprüchen 1 und 27 - 31 möglichen Erweiterung der entsprechenden Konfigurationsmengen, eine nicht hinreichende Bedingung dar. Deshalb werden bereits im Anspruch 1 die Verknüpfungen gemäss den Kriterien 5 und 5A a priori in einer modifizieren Formulierung verwendet, so dass Ej als Teilgebiet, resp. Teilmenge die Vereinigung einer verformbaren, kraftübertragenden Teilmenge Esj und eine die Konfigurationsmenge von Esj mitbestimmenden Teilmenge ELj (vgl. Ansprüche 1 und 27 - 30) enthält; wobei ELj nicht allgemein der Struktur $\boldsymbol{S}$ zugeordnet werden kann:

$$\{\, Esj,\ ELj\,\} \subset Ej$$

Damit ergibt sich die modifizierte Verknüpfung mit

$$VjT \equiv ViT \equiv VjTf \cup \{Esj \cup ELj\} \cup VjTv \qquad \text{(Kriterium M5)}$$

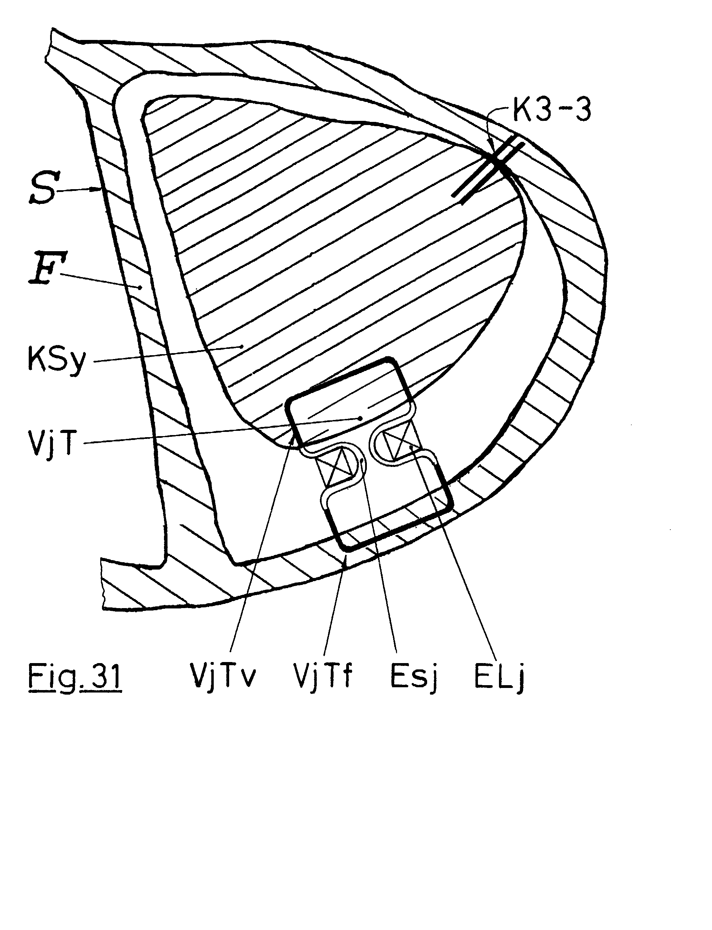

Fig. 31 zeigt ein Teilgebiet der konstruktiv noch nicht ausgebildeten Struktur **S**, gemäss Fig. 4, mit einer charakteristischen Teilmenge VjT, die nun alle Teilmengen gemäss diesem Kriterium 5M aufweist, die zugleich jene sind, die ein M-Körper Vj, gemäss Anspruch 1, minimal enthalten muss. Dabei wurde für das Strukturteilgebiet die Annahme $F \equiv F$ getroffen. Einem Teilgebiet KSy entspricht im allgemeinsten Fall ein 3-dimensionales Wandungskomplement KWRj.

Entsprechend kann das Kriterium 5A, anhand der Teilmenge ELj, zum Kriterium M5A modifiziert werden (vgl. Fig. 87).

Die Einführung einer Teilmenge ELj, die durch Elemente ELji gebildet wird,

$$ELj \equiv \bigcup_{Vj} ELji$$

kann sich für die Teilmenge Esj, z.B. stabilitätsbedingt, als unumgänglich erweisen. Die Einführung einer Teilmenge ELj stellt aber auch die Voraussetzung zur praktischen Umkehrbarkeit der den topologischen Verknüpfungen gemäss dem Kriterium 5 (mit oder ohne Zusatzbezeichnung) zugrunde liegenden Abbildungen dar:

$$(VjTf,\ VjTv) \Longleftrightarrow (Esj,\ ELj) \Longleftrightarrow (Vjf,\ Vjv) \Longleftrightarrow (Esj,\ ELj)$$

Diesbezüglich muss betreffend der Funktion einer Teilmenge ELj grundsätzlich zwischen zwei Fällen unterschieden werden, wozu die Struktur **S** als thermodynamisches System betrachtet wird:

- Wenn, im Verlauf einer Verformung der Struktur **S**, einer Teilmenge ELj keine Energie von aussen, d.h. von ausserhalb der Systemgrenzen zu- oder abgeführt wird, kann ELj, wenn ELj in **S** enthalten ist, die Konfigurationsmenge der entsprechenden Teilmenge Esj so mitbestimmen, dass ein ungewollter Verformungsanteil von Esj, z.B. bedingt durch eine Instabilität von Esj, verhindert wird, in dem der entsprechende Energieanteil in der Teilmenge ELj als Formänderungsenergie gespeichert wird. Unter der Annahme, dass die Vereinigung von Esj und ELj, d.h. (Esj $\cup$ ELj) als konservativ betrachtet werden darf, und Trägheitsaspekte vernachlässigt werden dürfen, nimmt (Esj $\cup$ ELj), bei einer Verformung der Struktur **S**, für eine bestimmte Konfiguration von **S** genau jene geometrische Konfiguration ein, die dem Minimum der zu speichernden Formänderungsenergie entspricht (vgl. Ansprüche 1, 27, 29).
- Diesem passiven Verhalten einer Teilmenge ELj kann ein durchaus aktives gegenübergestellt werden, wenn im Verlauf einer Verformung der Struktur **S**, ELj von aussen, d.h. von ausserhalb der Systemgrenzen, Energie zu- oder abgeführt wird. Je grösser dieser zu- oder abgeführte Energieanteil an der Formänderungsenergie von (Esj $\cup$ ELj), desto mehr erhält eine Teilmenge ELj einen für die entsprechende Teilmenge Esj formbestimmenden Charakter. Dieser Aspekt wird erst später wieder aufgegriffen (Ansprüche 1, 28 und 30).

Diese gemäss Anspruch 1 paarweise Verwendung der Teilmengen Esj und ELj, in Verbindung mit den Ansprüchen 27 - 30, ist ein weiteres, grundsätzliches Merkmal einer Menge Vj, resp. M-Körpers, als lokale, genau bestimmbare Verformungszone.

*Bemerkung zur Ausbildung des Hohlraumes (Ri-WRi) betr. der Struktur S:* Dieser Ausbildung liegen, im Zusammenhang mit dem Anspruch 17 u.a. zwei Absichten zugrunde, die heutzutage, bereits in eine Strukturdefinition einfliessen müssen:

- Festlegen eindeutiger Grenz-, resp. Schnittflächen zur Begrenzung von Schutzzonen betreffend ein EMV-Blitz-Schutzzonenkonzept einer Struktur S.
- Funktionalisierung des einzusetzenden, hochfesten Werkstoffanteiles, der zur Verwirklichung des Gebietes F benötigt wird, dahin, dass dieser einen Beitrag zur abschirmenden Wirkung einer Grenzfläche einer Schutzzone, d. h. einer zuständigen Wandungsfläche, erbringt. Diesbezüglich sei bemerkt, dass Verbundwerkstoffe in dieser Hinsicht in besonderer Weise geeignet sein können (vgl. Anspruch 26; vgl. [12]).

Zu dieser Problematik sind eine Reihe von Vorschriften, Normen und Bestimmungen gültig, oder erlangen Gültigkeit, die hier jedoch nicht aufgeführt werden.

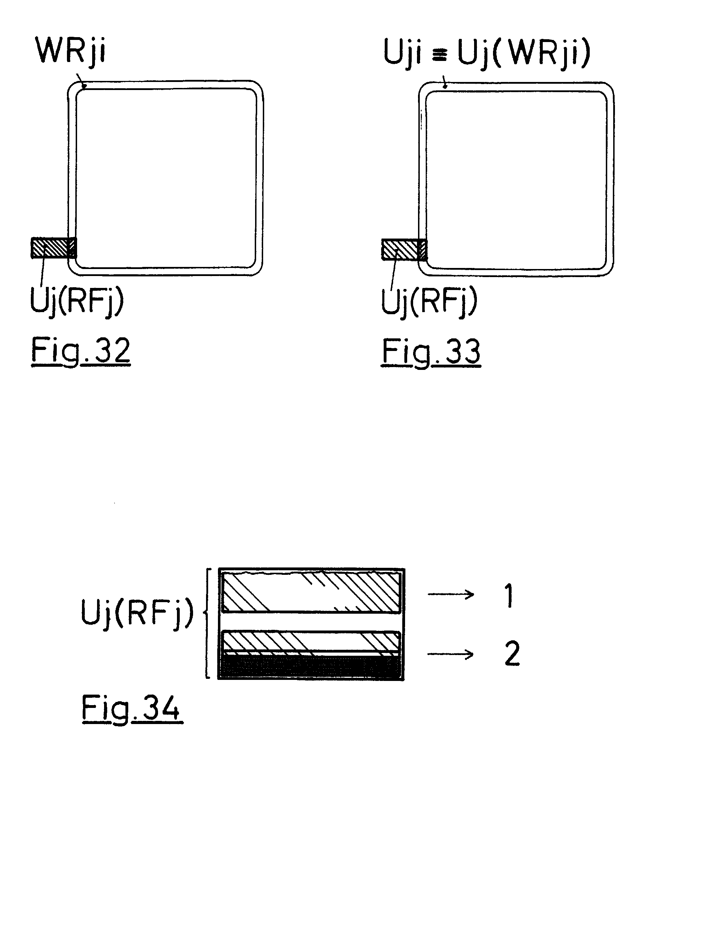

**Zu Fig. 32 bis 34: Einschränkung des Existenzbereiches gem. Fig. 27 entsprechend dem Anspruch 1 und dem Kriterium 4-4, anhand der Fig. 32 bis 34, entsprechend den Ansprüchen 2 und 3:**

Diese speziellen Lösungen, die stets schraffiert dargestellt sind, entstehen dadurch, dass dem Existenzbereich charakteristischer Teilmengen VjT ≡ ViT gem. Fig. 27, resp. Anspruch 1 und dem Kriterium 4-4, ein spezifischer Wandungsaufbau für WRj zugrunde gelegt wird. Dabei werden für WRj Kombinationen von Umrandungen Uj (RFj) mit einem spezifischen Aufbau betreffend einer inneren Wandungsschale WRji gemäss Fall 1, 2a und 2b in der unteren, linken, zweifach schraffierten Teillösung von WR4 ∩ WRi gemäss Fig. 27 betrachtet. Betreffend dem Kriterium 4-4 wird angenommen, dass ein Ujf-Teilgebiet einer Umrandung Uj(RFj) als Ganzes im Gebiet F enthalten ist.

Zu Fig. 32, entsprechend Anspruch 1:

Hier wird dem Existenzbereich charakteristischer Teilmengen gem. Fig. 27, gemäss Anspruch 1, der Aufbau einer Wandung WRj auf der Basis einer (noch) nicht gegliederten inneren Wandungsschale WRji mit Umrandungen Uj(RFj) zugrunde gelegt. Dieses Vorgehen stellt eine mögliche Interpretation von Anspruch 1 dar.
Die Fig. 32 zeigt eine Umrandung Uj (RFj) im Querschnitt schraffiert, da Uj (RFj) als Ganzes im Existenzbereich einer charakteristischen Teilmenge VjT von Uj (RFj) enthalten ist.
Die Fig. 32 zeigt weiter die innere Wandungsschale WRji im Schnitt. Betreffend dem Fall 2b ist dasjenige Teilgebiet von WRji, das im Existenzbereich einer charakteristischen Teilmenge VjT von WRji enthalten ist, schraffiert hervorgehoben (vgl. Fig. 12). Im Fall 2a existiert VjT (WRji) nicht, da hier keine Querschnittverformbarkeit betreffend WRji zugrunde liegt.

Zu Fig. 33, entsprechend Anspruch 2:

Hier wird dem Existenzbereich charakteristischer Teilmengen gemäss Fig. 27, resp. Anspruch 1, der Aufbau einer Wandung WRj, auf der Basis ausschliesslich umlaufender Umrandungen, gemäss Anspruch 2, zugrunde gelegt.
Die Fig. 33 zeigt eine Umrandung Uj (RFj) im Querschnitt. Ist Uj (RFj) umlaufend, so stellt sie ebenfalls eine umlaufende Umrandung Uj einer Wandung WRj dar. Dabei ist eine Umrandung Uj (RFj) als Ganzes im Existenzbereich einer charakteristischen Teilmenge VjT von Uj (RFj) enthalten, weshalb dieser Querschnitt von Uj (RFj) wiederum schraffiert ist.
Die Fig. 33 zeigt weiter den Schnitt einer Umrandungsschale Uji von WRji.
Betreffend dem Fall 2b ist dasjenige Teilgebiet von Uj (WRji) das im Existenzbereich einer charakteristischen Teilmenge VjT von Uj (WRji) enthalten ist, schraffiert hervorgehoben (vgl. Fig. 12). Im Fall 2a existiert VjT von Uj (WRji) nicht.

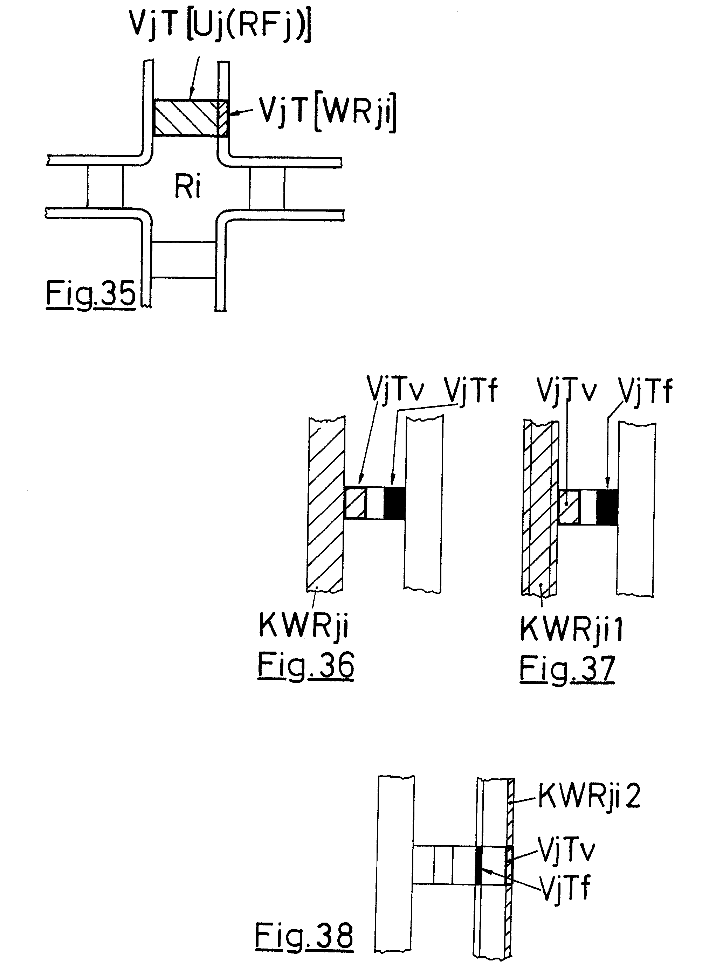

Zu Fig. 34, entsprechend Anspruch 3:

Hier wird dem Existenzbereich charakteristischer Teilmengen VjT gemäss Fig. 27, resp. Anspruch 1, der Aufbau einer Wandung WRj auf der Basis von Feldern Fj, gemäss Fall 1, respektive Fig. 18, entsprechend dem Anspruch 3 zugrunde gelegt.
Die Fig. 34 zeigt von einer Umrandung Uj(RFj) einen Abschnitt 1 im Längsschnitt, und einen benachbarten Abschnitt 2 in der Stirnansicht, schraffiert, da Uj(RFj) wiederum als Ganzes im Existenzbereich von VjT von Uj(RFj) enthalten ist (dabei sind 1 und 2 "auseinandergezogen" dargestellt).

**Zu Fig. 35 bis 44: Definition der charakteristischen Teilmengen VjT auf dem in den Fig. 32 bis 34, entsprechend den Ansprüchen 1-3, eingeschränkten und schraffiert dargestellten Existenzbereich:**

Bei der allgemeinen Definition einer charakteristischen Teilmenge VjT, die nachfolgend mit Ch.T. VjT abgekürzt wird, wurde gesagt, dass ihr Anteil VjTf (gemäss Kriterium 4-1) stets im Gebiet F von **F** enthalten sein muss, wobei später gesagt wurde, dass dieses Gebiet F von **F** (gemäss Kriterium 4-3) als Teilgebiet der Wandung WRi eines Raumes Ri der Struktur **S**, und gemäss Kriterium 4-4, als Teilgebiet der Umrandungen Uj(RFj) verwirklicht wird.
Anschliessend wird erklärt, wie eine Ch.T. VjT einer Menge Vj, gemäss den Ansprüchen 1-3, mit ihrem Anteil VjTv in mindestens einem zusammenhängenden Wandungskomplement KWRj gemäss Tabelle K enthalten sein kann. Dabei wird ein solches Wandungskomplement KWRj stets "schraffiert" angedeutet, als solches beschriftet und im Text erwähnt. Hingegen wird der Anteil VjTf, der in den Figuren stets "schwarz" gekennzeichnet und als solcher beschriftet ist, bei der Besprechung nicht separat erwähnt.

<u>Zu Fig. 35 entsprechend Anspruch 1</u>

Die Fig. 35 zeigt im eingeschränkten Existenzbereich gem. Fig. 32, entsprechend einer möglichen Interpretation von Anspruch 1, eine Ch.T. VjT von Uj (RFj) und eine Ch.T. VjT von WRji.

Die Fig. 36 zeigt wie der Anteil VjTv von VjT von Uj (RFj) im Komplement KWRji im Fall eines Wandungsaufbaus gemäss Fall 2a enthalten sein kann (vgl. Fig. 19).

Die Fig. 37 zeigt wie der Anteil VjTv von VjT von Uj (RFj) im äusseren Komplement KWRjil bei einem Wandungsaufbau gemäss Fall 2b enthalten ist (vgl. Fig. 20).

Die Fig. 38 zeigt wie der Anteil VjTv von VjT von WRji im inneren Komplement KWRji2 im Fall eines Wandungsaufbaus gemäss Fall 2b enthalten ist (vgl. Fig. 12).

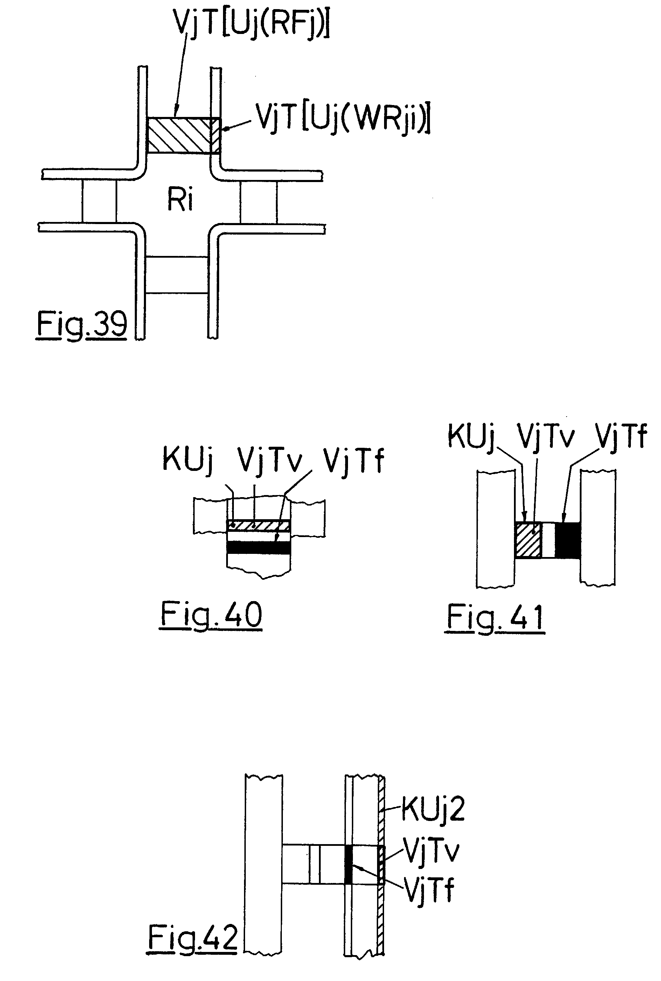

<u>Zu Fig. 39 entsprechend Anspruch 2</u>

Die Fig. 39 zeigt im eingeschränkten Existenzbereich gemäss Fig. 33 entsprechend Anspruch 2, eine Ch.T. VjT von Uj (RFj) und eine Ch.T. VjT von Uj von WRji.

Die Fig. 40 zeigt, wie der Anteil VjTv von VjT von Uj (RFj) im Komplement KUj, im Fall eines Wandungsaufbaus gemäss Fall 1, enthalten ist, das nur dann umlaufend ist, wenn Uj(RFj) umlaufend ist.

Die Fig. 41 zeigt, wie der Anteil VjTv von VjT von Uj(RFj) im Komplement KUj, im Fall eines Wandungsaufbaus gemäss Fall 2a, entsprechend dem Komplement KUj1, im Fall eines Wandungsaufbaus gemäss Fall 2b enthalten sein kann, vorausgesetzt, dass Uj(RFj) umlaufend ist. Die Fig. 42 zeigt, wie der Anteil VjTv von VjT von Uj(WRji) im inneren Komplement KUj2, im Fall eines Wandungsaufbaus gemäss Fall 2b enthalten ist, wenn Uj(WRji) umlaufend ist.

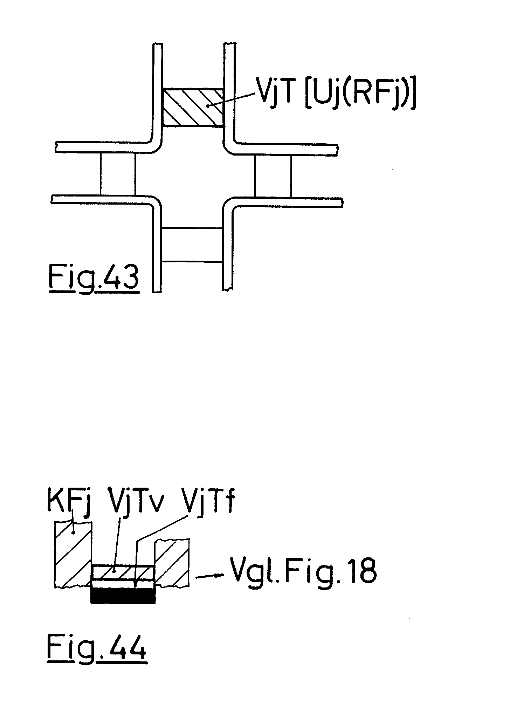

<u>Zu Fig. 43 entsprechend Anspruch 3</u>

Die Fig. 43 zeigt im eingeschränkten Existenzbereich gemäss Fig. 34 entsprechend Anspruch 3, eine Ch.T. VjT von Uj (RFj) im unteren, horizontalen Umrandungsabschnitt 2 von Uj(RFj), der aus der Fig. 34 ersichtlich ist.

Die Fig. 44 zeigt, wie der Anteil VjTv von VjT von Uj (RFj) im Komplement KFj eines Feldes Fj, bei einem Wandungsaufbau gemäss Fall 1, enthalten ist (vgl. Fig. 18).

**Übersicht betreffend der Zugehörigkeit der Teilmenge, resp. Verankerung VjTv einer charakteristischen Teilmenge VjT, in Abhängigkeit des Wandungsaufbaus (gemäss Fig. 18 - 20) mit Hinweisen auf die Patentansprüche 1 - 3:**

**Patentanspruch 1:** vgl. Fig. 35 - 38

VjTv ist in einem zusammenhängenden Wandungskomplement KWRj gemäss Anspruch 1 enthalten, was auch für die Ansprüche 2 - 3 zutrifft:
Fall 2a:

$$\text{VjTv } [Uj \ (RFj)] \subset KWRji \equiv WRji \cup \bigcup_{WRji} Ujv \ [Uj \ (RFj)]$$

Fall 2 b:

Lösung 1: VjTv [Uj (RFj)] ⊂ KWRji1 ≡ KWRji gemäss Fall 2a

Lösung 2: VjTv [WRji] ⊂ KWRji2 ≡ WRjiv

**Patentanspruch 2:** vgl. Fig. 39 - 42

VjTv ist in einem Wandungskomplement KWRj in einem Umrandungskomplement KUj enthalten:
Fall 1 + 2a:

VjTv [Uj (RFj)] ⊂ KUj ≡ Ujv[Uj (RFj)]

Fall 2b:

$$\text{Lösung 1: } VjTv\,[Uj\,(RFj)] \subset KU1 \equiv KUj \text{ gemäss Fall 2a}$$

$$\text{Lösung 2: } VjTv\,[Uj\,(WRji)] \subset KUj2 \equiv Ujv\,[Uj\,(WRji)]$$

**Patentanspruch 3:** vgl. Fig. 43 und Fig. 44

VjTv ist in einem Wandungskomplement KWRj in einem Feldkomplement KFj enthalten
Fall 1:

$$VjTv\,[Uj\,(RFj)] \subset KFj$$

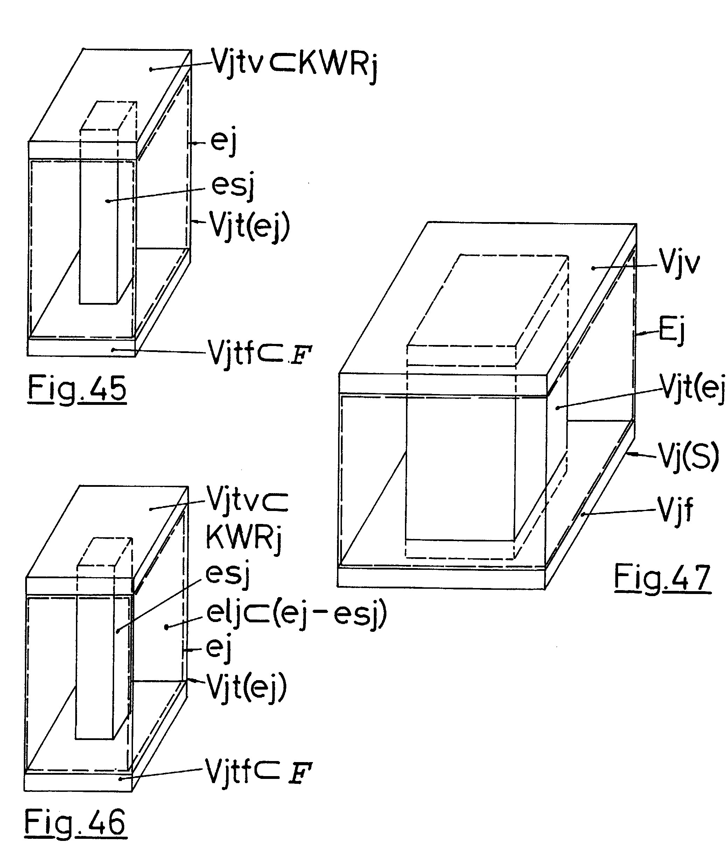

### Zur Fig. 45 bis 47 / Definition der Teilmengen esj und elj

In diesem Fall wird vorausgesetzt, dass die Teilmenge Esj und die Teilmenge ELj (vgl. Ansprüche 1, 2, 27 bis 30), die im Teilgebiet Ej einer Menge Vj(S), entsprechend einem M-Körper, angelegt sind, als spezifisch wirksame Teilmengen esj, resp. elj, bezogen auf eine Volumeneinheit ej des Teilgebietes Ej einer Menge Vj(S) aufgefasst werden können.
Folgerungen für das geometrische Minimum einer allgemeinen Teilmenge Vjt: In diesem Fall muss das Minimum von Vjt so festgesetzt werden, dass Vjt die auf eine Volumeneinheit ej bezogenen Teilmengen Vjtf, Vjtv, esj und elj enthält. Nur unter diesen Voraussetzungen dürfen in den Verknüpfungen gemäss den Kriterien 5A und M5A die Teilmengen Esj und ELj durch die entsprechenden, spezifisch wirksamen, Teilmengen esj und elj ersetzt werden. Dabei treten anstelle die Kriterien 5A und M5A die Kriterien 5AS und M5AS:
Kriterium 5AS:

$$Vjtf \cup \{\, esj \,\} \cup Vjtv$$

Kriterium M5AS:

$$Vjtf \cup \{\, esj \cup elj \,\} \cup Vjtv$$

Der Zusammenhang zwischen den Teilmengen esj und Esj ist durch die folgende Beziehung gegeben:

$$\bigcup_{vj} esj \equiv \bigcup_{\varepsilon j} esj \equiv Esj \quad \text{und} \quad \bigcup_{vj} elj \equiv \bigcup_{\varepsilon j} elj \equiv ELj$$

Entsprechend ist der Zusammenhang zwischen den Teilmengen Vjtf und Vjf, resp. Vjtv und Vjv, wie folgt gegeben:

$$\bigcup_{vj} Vjtf \equiv \bigcup_{vjf} Vjtf \equiv Vjf \quad \text{und} \quad \bigcup_{vj} Vjtv \equiv \bigcup_{vjv} Vjtv \equiv Vjv$$

Die Fig. 45 zeigt eine Teilmenge Vjt (ej) mit der Teilmenge esj in der Volumeneinheit ej, gestrichelt umrandet, die die Teilmengen Vjtf und Vjtv miteinander verbindet. Dabei ist Vjtf im Gebiet **F** und Vjtv in einem Wandungskomplement KWRj enthalten. Die Fig. 46 entspricht der Fig. 45, jedoch mit dem Unterschied, dass hier in der Volumeneinheit ej, vermindert um die Teilmenge esj, die Teilmenge elj, z.B. ein stützender Schaum, angeordnet ist (vgl. Anspruch 27).
*Anmerkung:* Die Teilmengen Vjt (ej) gemäss Fig. 45 und 46 entsprechen den Minima von Teilmengen Vjt im Fall einer spezifischen Verknüpfung, bezogen auf eine Volumeneinheit ej, gemäss dem Kriterium 5AS oder MSAS.

Bezug zur Menge Vj

Die Definition eines M-Körpers, resp. einer Menge Vj(S) und damit auch Vj, wird durch das Teilgebiet Ej, resp. durch die in Ej enthaltene Teilmenge Esj, bestimmt, die in die Teilmengen Vjf und Vjv eingebettet ist: Vj≡{Vjf, Esj, Vjv} oder Vj≡{Vjf, Esj, ELj, Vjv}, wenn ELj ≢ {} mit Vjf und Vjv, bezogen auf Ej, gegenüber Vjtf und Vjtv, bezogen auf ej:

$$
\mathtt{Vjf{\equiv}Vjf\ (Ej){\equiv}\ \underset{vjf}{\cup}\ Vjtf\ (ej)\ und\quad Vjv\ \equiv\ Vjv\ (Ej){\equiv}\ \underset{vjv}{\cup}\ Vjtv\ (ej)}
$$

Die Fig. 47 zeigt von einer Menge Vj die Teilmengen Vjf und Vjv, bezogen auf das Teilgebiet Ej, das gestrichelt umrandet hervorgehoben ist; dabei ist exemplarisch eine Teilmenge Vjt, bezogen auf eine Volumeneinheit ej, gemäss Fig. 45, resp. 46 eingetragen.
Die minimalen Teilmengen Vjt gemäss den Fig. 45 und 46 stellen zugleich die Minima betreffend der Menge Vj gemäss Fig. 47 dar.

$$
\mathrm{Min}\ \{Vj\} \equiv \mathrm{Min}\ \{Vjt\} \equiv Vj(ej) \equiv Vjt\ (ej)
$$

$$
Vj(ej){\equiv}\{Vjf,esj,Vjv\}\ \mathrm{od.}\ \ Vj(ej){\equiv}\{Vjf,esj,elj,Vjv\},\ \mathrm{wenn}\ elj{\not\equiv}\{\ \}
$$

**Spezialisierung der Verknüpfungen gemäss den Kriterien 5AS und MSAS:**

Definition (4) einer Umrandungsmenge **U**j:

In einer Umrandungsmenge **U**j gemäss Definition (4) treten anstelle die Teilgebiete Ujf und Ujv (vgl. Definition 2) die Teilmengen **U**jf und **U**jv die in der Ausgangskonfiguration K0(**U**j) nicht in einem ebenen Feld Fj einer bestimmten Dicke enthalten sein müssen; auch können **U**jf resp. **U**jv, als Elemente, Schichten **U**jft resp. **U**jvt aufweisen. Umrandungsteilmengen **U**jf und **U**jv müssen, minimal, stets auf eine Volumeneinheit ej bezogen werden:

$$
\pmb{U}\mathrm{jf}\ (\ ej\ )\ \equiv\ \underset{\pmb{U}\mathrm{jf}}{\cup}\ \pmb{U}\mathrm{jft}\qquad und\qquad \pmb{U}\mathrm{jv}\ (\ ej\ )\ \equiv\qquad \underset{\pmb{U}\mathrm{jv}}{\cup}\ \pmb{U}\mathrm{jvt}
$$

Definition für das Minimum einer Umrandungsmenge **U**j (gemäss Definition 4)

$$
U\mathrm{j}\ (\ ej\ )\ \equiv\ \mathrm{Min}\ \{\ U\mathrm{j}\ \}\ \equiv\ \{U\mathrm{jf},\ ej,\ U\mathrm{jv}\}
$$

Folgerungen für einen M-Körper, entsprechend einer Menge Vj: Wird eine minimale Umrandungsmenge **U**j (ej) deren Umrandungsteilmengen **U**jf (ej), resp. **U**jv (ej) aus Umrandungsschichten **U**jft, resp. **U**jvt bestehen, anhand von M-Körpern verwirklicht, so können diese entsprechende Schichten Vjft, resp. Vjvt, aufweisen, die in minimale Teilmengen Vjf, resp. Vjv, bezogen auf eine Volumeneinheit ej, zusammengefasst werden.

$$
\mathtt{Vjf\ (ej)\ \equiv\quad \underset{vjf}{\cup}\ Vjft}\qquad und\qquad \mathtt{Vjv\ (ej)\ \equiv\quad \underset{vjv}{\cup}\ Vjvt}
$$

Gehören die Umrandungsschichten **U**jft, resp. **U**jvt der Teilmengen **U**jf (ej), resp. **U**jv (ej) einer lokal ebenen Fläche einer bestimmten Dicke an, so erscheinen die Teilmengen **U**jf (ej), resp. **U**jv (ej) geometrisch, im allgemeinsten Fall, je als ein Büschel von Umrandungsschichten **U**jft, resp. **U**jvt denen lokal, bezüglich der Volumeneinheit ej, je ein Büschel von Schichten Vjft, resp. Vjvt entspricht.

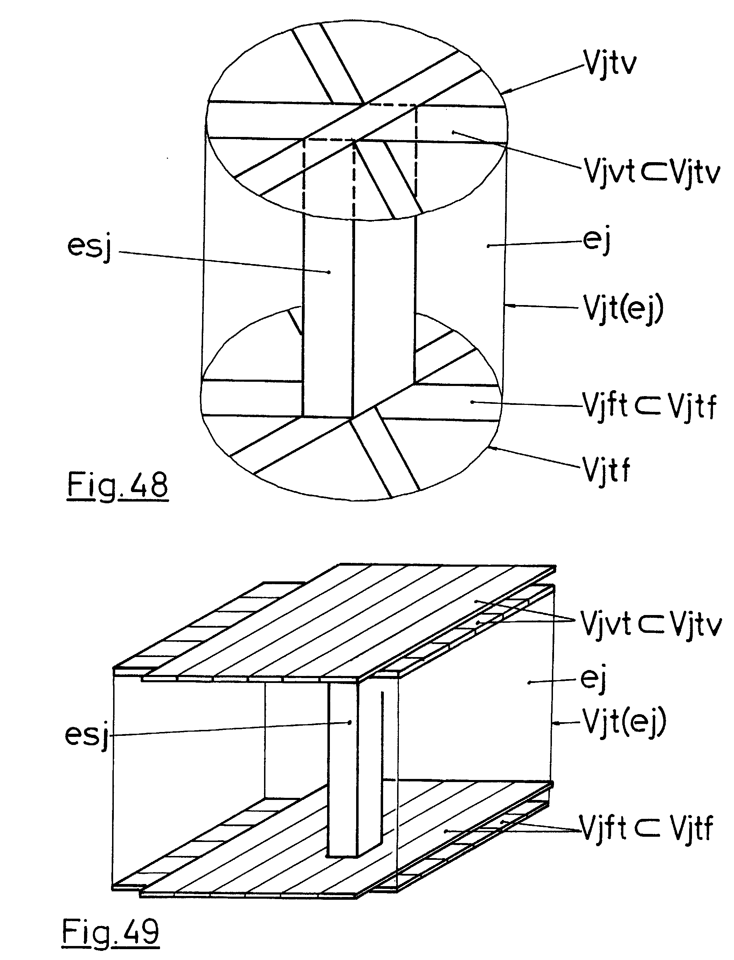

Die Fig. 48 zeigt eine Teilmenge Vjt (ej) worin ein Büschel von Vjft-Schichten der Teilmenge Vjtf anhand der Teilmenge esj, mit einem Büschel von Vjvt-Schichten der Teilmenge Vjtv verbunden ist. Dabei gelten in einer Wandungsschale WRji betreffend einer Umrandungsmenge $U_j$ (ej) in der Vjt (ej) enthalten ist, die folgenden Zuordnungen

$$Vjft \subset U_jft \subset WRjif$$

$$Vjvt \subset U_jvt \subset WRjiv$$

Die Fig. 49 entspricht der Fig. 48, jedoch mit dem Unterschied, dass hier die Vjft-, resp. Vjvt-Schichten geordnet verwendet werden.

Die Verknüpfungen im Fall allgemeiner Teilmengen Vjt gemäss den Kriterien 5AS und M5AS dürfen nicht unmittelbar auf die Verknüpfungen im Fall charakteristischer Teilmengen VjT gemäss den Kriterien 5 und M5 übertragen werden. Aus diesem Grund werden in den Patentansprüchen ausschliesslich die Verknüpfungen gemäss den Kriterien 5 und M5 verwendet.

Sind die Aussagen betreffend die Kriterien 5AS oder M5AS für eine Wandungsschale WRji jedoch gültig, so kann für das umlaufende Umrandungskomplement KUj2 gemäss Tabelle K, gemäss Anspruch 2 und einem Wandungsaufbau gemäss Fall 2b noch eine weitere Lösung angegeben werden:

Wenn ej vollständig in VjT enthalten ist, gilt:

$$KUj2 \equiv U_jv \text{ (ej) von } [\ U_j \text{ (WRji)}]$$

Wenn ej nicht vollständig in VjT enthalten ist, gilt:

$$KUj2 \equiv \bigcup_{VjTv} U_jv \text{ (ej) von } [\ U_j \text{ (WRji)}]$$

Ist eine Schale, z.B. eine Wandungsschale WRji durchgehend auf Umrandungsmengen $U_j$ gemäss Definition (4) aufgebaut, so wäre

$$\text{Max } \{\ U_j\ \} \equiv WRji$$

In diesem Fall wäre das entsprechende Umrandungskomplement:

$$KUj2 \equiv WRjiv$$

(vgl. Anspruch 2 und Tabelle K, Fall 2b, Lösung 2).

Mit Umrandungsmengen Uj können beispielsweise 2-dimensional gekrümmte Schalen, bzw. Wandungsschalen WRji ausgeführt werden, wobei deren Teilgebiete WRjif und WRjiv, bei einer Verformung von WRji, auch durch eine unterschiedliche Krümmungsentwicklung gekennzeichnet sein können; dies ist z.B. mit den herkömmlichen Verbundwerkstoffen nicht denkbar. Zur statischen und dynamischen Abstimmung der geometrischen Konfigurationsmenge von Schalen erweisen sich die Ansprüche 1, 2 und 27 bis 30 als grundlegend.

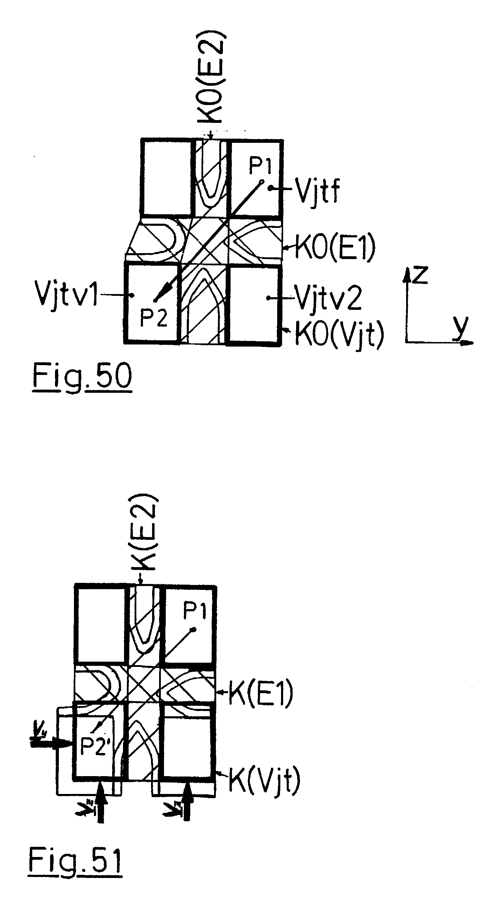

**Zu Fig. 50 bis 51 / Bemerkungen zur Verformbarkeit des Querschnittes einer Menge Vj, entsprechend einer Teilmenge Vjt:**

Während dem ein herkömmlicher Strukturteil, z.B. ein Biegeträger, in einem Punkt durch die Deformation, resp. Verzerrung eines zugeordneten, infinitesimalen Volumenelementes, z.B. charakterisiert durch den Green'schen Tensor, und die Werkstoffeigenschaften, z.B. gegeben durch den Hook'schen Tensor, beschrieben werden kann, muss hier vorerst ein zusätzlicher Verschiebungsvektor $\underline{v}$ eingeführt werden, um bereits nur schon die kinematische Verformung eines M-Körperquerschnittes, entsprechend einer Teilmenge Vjt zu beschreiben unter der Annahme, dass bei der Verformung von Vjt, infolge einer Relativverschiebung eines Anteiles von Vjtv gegenüber Vjtf, diese translatorisch und gleichförmig ist. Unter dieser Voraussetzung wird eine mögliche Relativverschiebung irgendeines Punktes P2 in einen Punkt P2' eines Anteiles von Vjtv, gegenüber irgendeinem Punkt P1 $\equiv$ P1' von Vjtf, durch den Vektor $\underline{v}$ beschrieben, der durch die Differenz der Vektoren

$$\underline{v} \equiv \underline{P1P2'} - \underline{P1P2}$$

oder die Summe der Vektoren $\underline{v}_y$ und $\underline{v}_z$ definiert wird.

Diesbezüglich zeigt die Fig. 50, im Fall eines zweidimensional verformbaren M-Körperquerschnittes, entsprechend einer Teilmenge Vjt gekennzeichnet durch die Konfiguration K0(Vjt), die Anteile Vjtvl, Vjtv2 und Vjtf sowie entsprechend die Verformungszonen in der Konfiguration K0(E1) schraffiert, und K0(E2) entgegengesetzt schraffiert. Dabei ist in Vjtvl ein Punkt P2 und in Vjtf ein Punkt Pl sowie der verbindende Vektor $\underline{P1P2}$ eingetragen.

Die Fig. 51 zeigt die Vektoren $\underline{v}_y$ und $\underline{v}_z$ des Anteiles Vjtvl und den Vektor $\underline{v}_z$ des Anteiles Vjtv2, von Vjt, in der Konfiguration K(Vjt), gekennzeichnet durch die Konfigurationen K(E1) und K(E2), gegenüber dem Querschnitt von Vjt gemäss Fig. 50, in der Konfiguration K0(Vjt), gekennzeichnet durch die Konfigurationen K0(E1) und K0(E2). Die Fig. 51 zeigt weiter den Vektor $\underline{P1P2'}$. Dabei setzt die Zulässigkeit der kinematischen Querschnittsverformbarkeit eines M-Körpers Vj, gemäss Anspruch 1, Absatz b, voraus, dass jene aller allgemeinen Teilmengen Vjt zulässig ist.

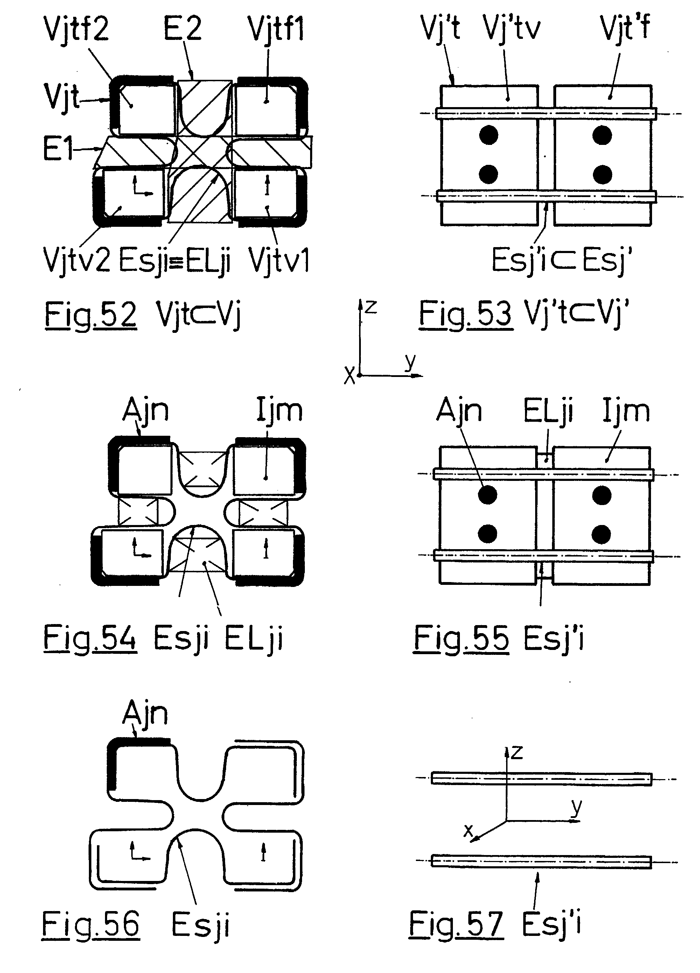

**Zu den Fig. 52 und 53, resp. den Mengen, Vj und Vj':**

Beurteilung der Querschnittsverformbarkeit aufgrund der Verknüpfung gem. den Kriterien 5 und M5:

Zur Fig. 52: Allgemein querschnittsverformbarer M-Körper, entsprechend einer Menge Vj, gekennzeichnet durch die Teilmengen Vjt, resp. VjT,und die Teilmenge Esj $\equiv$ ELj mit den Elementen Esji $\equiv$ ELji: Die Verformbarkeit, z.B. die translatorische Verformbarkeit $\underline{v}$, eines M-Körperquerschnittes ist pro Freiheitsgrad zu beurteilen. Liegt, bezüglich einer Dimension, eine Querschnittsverformbarkeit vor, so entspricht diese dem allgemeinen Fall einer Querschnittsverformbarkeit.

Ein M-Körper Vj, der alle Teilmengen gemäss Anspruch 1, jedoch keine Querschnittsverformbarkeit aufweist, wird, wie dessen Teilmengen mit dem Zusatz "" versehen, womit ein Grenzfall vorliegt. Dieser betrifft die Verformbarkeit, z.B. die translatorische Querschnittsverformbarkeit $\underline{v}$. Bei den hier angegebenen, einfachen Beispielen wird auf eine an sich notwendige, dimensionale Betrachtung verzichtet.

Der in Fig. 52 gezeigte Querschnitt von Vj, entsprechend einer allgemeinen Teilmenge Vjt, von der je zwei Anteile Vjtf1 und Vjtf2, resp. Vjtv1 und Vjtv2 beschriftet sind, weist betreffend zwei Dimensionen eine allgemeine Querschnittverformbarkeit auf, die, bezogen auf eine Menge Vj(S), entsprechend einem M-Körper, durch je eine verformbare Zone E1, schraffiert, und E2, entgegengesetzt schraffiert, gekennzeichnet ist, in denen, bezogen auf die Menge Vj, eine verformbare, kraftübertragende Teilmenge Esj $\equiv$ ELj, bestehend aus den Elementen Esji $\equiv$ ELji, gemäss Anspruch 7, angelegt ist.

Für eine Menge Vj' wird vorausgesetzt, dass ihre Teilmenge Esj' zumindest eine lokale, minimale Verformbarkeit aufgrund zumindest eines ihrer Elemente Esj'i aufweist, das zumindest betreffend einer Dimension nur minimal, im Idealfall nicht verformbar ist, womit zugleich dem Anspruch 12 entsprochen wird. Dies wird am Beispiel eines Vj-Querschnittes, der einer Teilmenge Vjt, gekennzeichnet durch die Anteile Vjtf und Vjtv, entspricht, erläutert:

Bei dem in Fig. 53 gezeigten Querschnitt werden die beiden eingezeichneten Elemente Esji der Teilmenge Esj als derart steif angesehen, dass dieser Querschnitt, bezüglich der y-Achse, als nicht verformbar angesehen werden muss. Deshalb werden diese Elemente mit Esj'i und die Teilmenge mit Esj' bezeichnet. Damit entspricht dieser Querschnitt einer Teilmenge Vj't, gekennzeichnet durch die Anteile Vj'tf und Vj'tv und die Menge Vj in der diese enthalten ist, dem Grenzfall einer Menge Vj und wird mit Vj' bezeichnet. Gemäss Anspruch 12 wird vorausgesetzt, dass mit einer solchen Menge Vj' das Kriterium 3-3 erfüllt wird. Trifft weiter zu, dass Vj'tf $\subset$ F $\subset$ **F**, so liegt der Grenzfall einer charakteristischen Teilmenge Vj'T, gekennzeichnet durch die Anteile Vj'Tf und Vj'Tv vor.

**Anordnung von Mengen Vj gemäss den Kriterien 4 und 5, sowie den Verknüpfungselementen (Fig. 6), in einer Struktur S / Hinweise zu den Ansprüchen 1, 4 - 7, 27 - 30:**

Ein M-Körper, resp. eine Menge Vj ist mit ihrer Teilmenge Vjf in dem gemäss Kriterium 3-1 zusammenhängenden Gebiet **F** einer Struktur **S** enthalten; daraus folgt, dass auch diese Teilmenge Vjf und damit die Teilmengen Vjtf, resp. VjTf als in sich zusammenhängend vorausgesetzt werden. Ebenso ist eine Menge Vj mit einer Teilmenge Vjv in mindestens einem gemäss Kriterium 3-2 zusammenhängenden Gebiets-, resp. Wandungskomplement KWRj enthalten; daraus folgt, dass auch je ein entsprechendes Teilgebiet einer solchen Teilmenge Vjv und damit der entsprechenden Teilmengen Vjtv, resp. VjTv als in sich zusammenhängend vorausgesetzt werden.

Gemäss Anspruch 1 ist eine Menge Vj durch die Teilmengen Ejn, Ijm, Esj und ELj definiert: Vj $\equiv$ { Ejn, Ijm, Esj, ELj } Neu stellt, neben den früher beschriebenen Teilmengen Esj und ELj, Ejn die Teilmenge Ejn der Energieleiter mindestens mechanischer Energie, bestehend aus einer Anzahl n von Energieleitern Ej1, ...., Ejn, mindestens mechanischer Energie dar. Entsprechend stellt Ijm die Teilmenge Ijm der Grundkörperteile, bestehend aus einer Anzahl m Grundkörperteilen Ij1, ..., Ijm, dar.

Wie die Teilmengen Ejn und Ijm in den Teilgebieten, entsprechend Elementen der Teilmengen VjTf und VjTv einer charakteristischen Teilmenge VjT einer Menge Vj enthalten sein müssen, ist Gegenstand der Bedingungen A1-1 bis A1-4 gemäss Anspruch 1.

Für welchen Verwendungszweck ein M-Körper auch entworfen sein mag, in allen Fällen hat er eine mechanische Beanspruchbarkeit aufzuweisen. Diesbezüglich ist im Anspruch 4 festgehalten, dass die Teilmenge Ejn ausdrücklich eine Teilmenge Ajn, d.h. hochfester Zonen enthalten muss; dabei wird vorausgesetzt, dass

$$VjTf \cap Ajn \not\equiv \{\,\} \text{ und } VjTv \cap Ajn \not\equiv \{\,\}$$

Im Anspruch 5 ist der Grenzfall festgehalten, dass die Teilmenge Ejn mit der Teilmenge Ajn identisch ist. In einer Reihe von Fällen muss ein solcher M-Körper jedoch weitere Eigenschaften aufweisen, z.B. Brandschutzeigenschaften, weshalb er eine spezielle Teilmenge Ijm von Grundkörperteilen, z.B. auf Keramikbasis, enthalten muss.

Im Anspruch 6 ist der Grenzfall beschrieben, bei dem die Teilmengen Ejn, Ajn und Ijm identisch sind, d.h. Ejn $\equiv$ Ajn $\equiv$ Ijm. Gemäss den Ansprüchen 1, 4 und 6 wird demnach vorausgesetzt, dass im Fall einer, nach Anspruch 1, minimalen Teilmenge VjTv, resp. VjTf, diese aus einer entsprechenden, minimalen, hochfesten Zone bestehen muss, die zugleich einem Grundkörperteil entspricht.

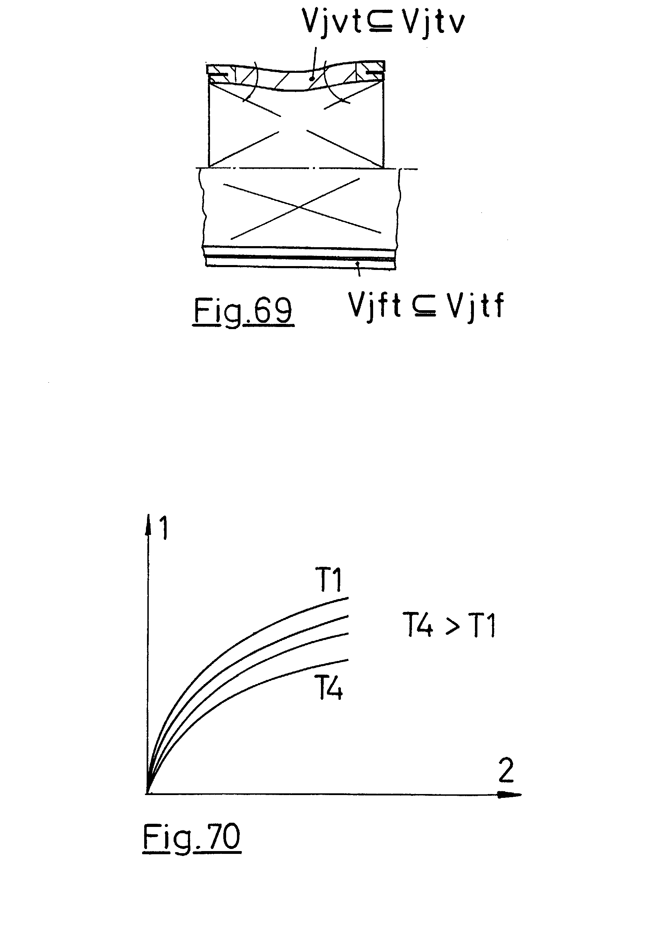

Im Anspruch 7 ist sodann der Grenzfall beschrieben, bei dem die Teilmengen Esj und ELj identisch sind, d.h. Esj $\equiv$ ELj. Wie später an Hand der Fig. 70 erläutert wird, darf in diesem Fall aber nicht zwingend gefolgert werden, dass betreffend dem Kriterium M5 nur noch den Ansprüchen 1, 27 u. 29, sondern durchaus den Ansprüchen 1, 28 und 30 entsprochen werden kann, wenn eine geeignete Ausbildung der Teilmengen Esj $\equiv$ ELj vorliegt.

Erfüllt ein M-Körper die Ansprüche 6 und 7, d.h. gilt Ejn $\equiv$ Ajn $\equiv$ Ijm und Esj $\equiv$ ELj, so erfüllt die entsprechende Menge Vj genau dann den Anspruch 1, wenn sie minimal eine charakteristische Teilmenge VjT aufweist. Gemäss den Ansprüchen 1, 27 und 28 tritt in zwei Grenzfällen die Situation ein, dass die Konfigurationsmenge der Teilmenge ELj nur noch jene der Teilmenge Esj, und damit der Menge Vj, mitbestimmt:

- Wenn gemäss Anspruch 1, gemäss Kriterium 3-3 der Zusammenhang zwischen einem Wandungskomplement KWRj und dem Gebiet F nicht minimal, sondern maximal ist; oder
- wenn gemäss Anspruch 1, resp. Kriterium 4, ein Wandungskomplement KWRj sehr klein ist.

Trifft für diesen Grenzfall weiter Anspruch 7 zu, so bestimmt die Teilmenge Esj $\equiv$ ELj, im Idealfall, nur noch ihre eigene geometrische Konfigurationsmenge und damit jene der Menge Vj.

Die Fig. 54 - 57 geben einige wenige Hinweise zur möglichen konstruktiven Ausbildung betreffend den allgemeinen Fall eines Vj-Querschnittes gemäss Fig. 52 und den Grenzfall eines Vj'-Querschnittes gemäss Fig. 53, gemäss Anspruch 12:

1. Allgemeiner Fall gem. Fig. 54, (vgl. Fig. 52)

Querschnittsausbildung mindestens betreffend einer Dimension dem Kriterium M5 entsprechend:

Die Fig. 54 zeigt, als Beispiel, einen bez. der y- und z-Achse verformbaren M-Körper-, resp. Vj-Querschnitt mit den Elementen, deren Vereinigung bezüglich einer Menge Vj die Teilmengen gemäss Anspruch 5 ergeben. Die verformbaren, kraftübertragenden Elemente Esji der Fig. 54 sind in Fig. 56 separat herausgezeichnet und beschriftet. Aus dieser Abbildung geht hervor, wie eine hochfeste Zone Ajn gemäss Fig. 54, als Möglichkeit, in die Elemente Esji eingebettet sein kann.

Neben den gemäss Anspruch 4 statisch zwingend notwendigen hochfesten Zonen Ajn weist der Querschnitt gemäss Fig. 54 weiter Grundkörperteile Ijm und verformbare, separate Elemente ELji auf. Die Funktion der Elemente ELji geht aus den Ansprüchen 1, 27 bis 30 hervor.

Ein M-Körper mit einer Querschnittsausbildung gemäss Fig. 54 weist eine gute Längs- und Schubkrafteignung auf, verbunden mit seiner Querschnittsverformbarkeit, in Abhängigkeit von seinem y-und z-Druckkraftvermögen (vgl. Ansprüche 1, 27 bis 30).

Eine solche Querschnittsausbildung kennzeichnet z.B. das Teilgebiet Uj* einer Umrandung Uj.

2. Grenzfall gemäss Fig. 55, (vgl. Fig. 53)

Querschnitt betreffend einer Dimension, obwohl diesbezüglich (hier bez. der y-Achse) dem Kriterium 5M entsprechend, nicht verformbar (vgl. Anspruch 12).

Die Fig. 55 zeigt, als Beispiel, einen M-Körper-, resp. Vj-Querschnitt der bez. der y-Achse alle Elemente gemäss dem Anspruch 5 aufweist.

Hier wird aber das Arbeitsvermögen der Elemente Esj'i, die in Fig. 57 separat herausgezeichnet sind, als so gross angesehen, dass dieser Querschnitt, betreffend der y-Achse als nicht verformbar angesehen werden muss.

Neben den gemäss dem Anspruch 4 statisch zwingend notwendigen hochfesten Zonen Ajn weist der Querschnitt gemäss Fig. 55 weiter Grundkörperteile Ijm und Elemente ELji auf; solche Elemente können z.B. stabilitätsbedingt notwendig sein.

Ein M-Körper mit einer Querschnittsausbildung gemäss Fig. 55 weist eine gute Eignung betreffend der Uebertragung von y-Druckkräften auf. Auf einer solchen Querschnittsausbildung kann in einer Umrandung Uj deren Teilgebiet Uj' beruhen, dessen Existenz durch das Kriterium 3-3 bedingt wird.

3. Bemerkungen:

Im allgemeinsten Fall müsste ein M-Körper Vj mit n Teilmengen Vjt mit t=1,...,n mit der Querschnittsverformbarkeit $\underline{v}i(Vjt)$ mit i=1,...,6, entsprechend je drei translatorischen und rotatorischen Komponenten, beschrieben werden, wobei diese wiederum zeitabhängig sein können. Dabei sind für die Abstimmung der statischen und/oder dynamischen Querschnittscharakteristik die Ansprüche 1, 27 bis 30 unter Berücksichtigung des Kriteriums 3-3, z.B. gemäss Anspruch 12, von Bedeutung.

Zwei Ausführungsbeispiele (Vgl. Fig. 52 und 54):

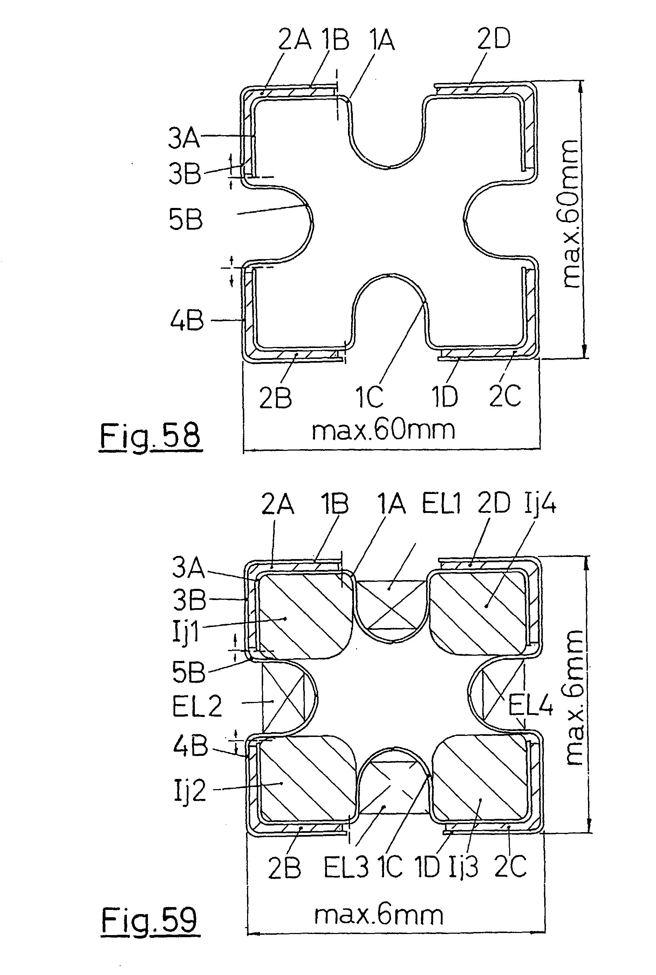

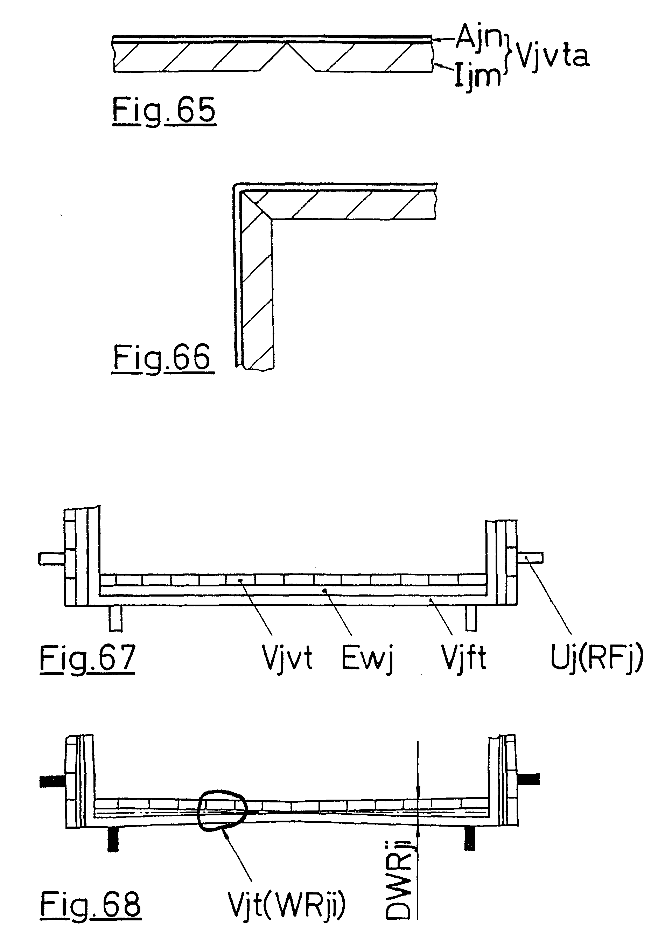

Fig. 58 zeigt ein Rahmenprofil im Querschnitt als erstes Ausführungsbeispiel für einen 2-dimensionalen querschnittsverformbaren, in Längsrichtung hochbeanspruchbaren M-Körper. Vier Blechstreifen gemäss DIN 17222 von 0,5 mm Stärke (Kaltband AG, CH-5734 Reinach) werden durch Kaltverformung profiliert (Forming AG, CH-4313 Möhlin), wobei sich die Profilkörper 1A, 1B, 1C, 1D ergeben. Anschliessend werden diese profilierten Blechstreifen gehärtet (SLM Sulzer, CH-8400 Winterthur) . Diese Profilkörper der Wandungsdicke 0,5 mm unterteilen sich in Zonen, von denen nur jene des Profilkörpers 1B in Fig. 58 angedeutet sind, nämlich die Zonen 3B, 4B und 5B, wobei die Zonen 3B und 4B für die feste Verbindung und die Zone 5B als verformbare Zone vorgesehen sind. Dabei ist für eines der in Fig. 52 beschriebenen Elemente Esji ausschliesslich das Gebiet 5B des Profilkörpers bestimmend, entsprechend dessen in einer in Fig. 52 beschriebenen verformbaren Zone El, resp. E2 enthaltenen Gebietes. Die Profilkörper 1A, 1B, 1C, 1D der Fig. 58 sind nun derart angeordnet, dass je zwei benachbarte Profilkörper je ein hochfestes Kohlenstoffbandpaket 2A, 2B, 2C, 2D aufnehmen können. Zur Herstellung eines hochfesten Kohlenstoffbandpaketes werden textile Kohlenstoffbänder vom Typ CF 9758 (Schweiz. Seidengazefabrik Zürich, CH-8027 Zürich) der Stärke 0,31 mm verwendet, wobei jedes Kohlenstoffbandpaket auf je 5 Schichten beruht, denen je ein Kohlenstoffband zugrunde liegt, das mit einer Glashilfskette verwoben ist. Die Profilkörper werden entsprechend der vom Hersteller bekanntgegebenen Richtlinien (Publ. Nr. 37479/6/d Ciba-Geigy, CH-4002 Basel; Astorit, CH-8840 Einsiedeln) vorbehandelt. Hersteller der Kohlenstofffasern ist Torayca Industries Inc., Tokyo, 103 Japan. Die Kohlenstoffbänder werden beidseits mit einem Epoxydharz-2-Komponenten-Klebstoff Araldit AW 136 H mit Härter HY 994 (Publ. Nr. 732/d Ciba-Geigy, CH-4002 Basel; Astorit, CH-8840 Einsiedeln) versehen, der für die Verbindung der Kohlenstoff-bänder untereinander und mit den Profilkörpern zuständig ist. So verbindet beispielsweise das hochfeste Kohlenstoffbandpaket 2A die Profilkörper 1A und 1B. Die gewählte Temperatur von 100 °C im Kohlenstoffbandpaket führt zu einer Abbundzeit von 10 min. Die Profilkörper 1A, 1B, 1C, 1D dienen für ein Kohlenstoffbandpaket beim Pressvorgang zugleich als 'Negativ', d.h. als formbestimmende Umgebung. Aufgrund der elektrischen Leitfähigkeit der Kohlenstoffbandpakete 2A, 2B, 2C, 2D kann die in Fig. 67 beschriebene Teilmenge der hochfesten Zonen gleichzeitig auch als Teilmenge elektrischer Leiter Qjn aufgefasst und verwendet werden. Die Oberflächen-, resp. Endbehandlung umfasst das spanabhebende Entfernen von Aralditrückständen, sowie eine anschliessende, herkömmliche Behandlung (BWB Oberflächentechnik Altenrhein AG, CH-9423 Altenrhein).

In diesem Ausführungsbeispiel werden die hochfesten Zonen Ajn gemäss Fig. 54 durch die in Fig. 58 enthaltenen, hochfesten Kohlenstoffbandpakete und die damit festverbundenen Profilkörperzonen, entsprechend den Zonen 3A und 3B und dem dazwischen liegenden hochfesten Kohlenstoffbandpaket 2A, gebildet.

Damit ergibt sich ein M-Körper mit einer Breite von 55 mm bei einer Verformbarkeit von +/- 5 mm und einer Höhe von mm bei einer Verformbarkeit von +/- 5 mm. Die Profillänge beträgt 1800 mm.

Ein derartiger M-Körper findet Verwendung als 2-dimensionaler querschnittsverformbarer Rahmenabschnitt zur Lagerung und Anordnung einer Speicherkavität in einem übergeordneten konstruktiven System, das neben dieser Speicherkavität eine damit verbundene Beschleunigungskavität enthält.

Fig. 59 zeigt ein zweites, verwandtes Ausführungsbeispiel eines 2-dimensional, querschnittsverformbaren, speziell schwingungsdämpfenden und in Längsrichtung hochbeanspruchbaren M-Körpers im Querschnitt.

Vier Blechstreifen der Legierung UT 40, entsprechend DIN 3.70 (Ugine, F-75361 Paris) von 0,4 mm Stärke werden durch Kaltverformung profiliert (Precinox, CH-2304 La Chaux-de-Fonds) womit sich die Profilkörper 1A, 1B, 1C und 1D ergeben. Diese Profilkörper der Wandungsdicke 0,4 mm unterteilen sich in Zonen, von denen nur jene des Profilkörpers 1B in Fig. 59 angedeutet sind, nämlich die Zonen 3B, 4B und 5B, wobei die Zonen 3B und 4B für die feste Verbindung und die Zone 5B als verformbare Zone vorgesehen sind. Dabei ist für eines der in Fig. 54 beschriebenen Elemente Esji ausschliesslich das Gebiet 5B des Profilkörpers bestimmend, entsprechend dessen in einer in Fig. 52 beschriebenen verformbaren Zone E1, resp. E2 enthaltenen Gebietes. Die Profilkörper 1A, 1B, 1C und 1D der Fig. 59 werden so angeordnet, dass je zwei benachbarte Profilkörper je ein hochfestes Titanprofil 2A, 2B, 2C und 2D aufnehmen können.

Zur Herstellung dieser Titanprofile wird von Vollmaterial der Legierung TA6V (Ugine, F-75361 Paris), entsprechend DIN 3.7165, ausgegangen, aus dem spanabhebend Winkelprofile der Abmessungen 2 x 1,8 x 0,8 mm herausgearbeitet werden (Högg AG, CH-9620 Lichtensteig) .

Neben der Lagerung eines Titanprofiles durch je zwei benachbarte Profilkörper sind diese weiter so ausgebildet und angeordnet, dass wiederum je zwei je einen Grundkörperteil Ij1,...,Ij4 aufnehmen können. Diese basieren auf einem entsprechend geklebten und zugeschnittenen, flexiblen Mehr-Schicht-Laminat der Wärmeklasse F = 155 °C (Nomex/ PETP, Du Pont, CH-1211 Genf).

Die Ausbildung der Verbindung der Profilkörper mit den Titanprofilen sowie den Grundkörperteilen Ij1, ..., Ij4 wird in einem Arbeitsgang unter Druckeinwirkung von 0,5 bar, bei Verwendung eines 1-Komponenten-Araldit vom Typ AT1, hergestellt. Diese hochwertigen, elektrisch isolierenden Klebfugen der Dicke 0,05 - 0,2 mm besitzen eine Temperaturbeständigkeit bis +120 °C (Publ. Nr. 24151/6/d Ciba-Geigy/Astorit, CH-8840 Einsiedeln).

In diesem Ausführungsbeispiel werden die hochfesten Zonen Ajn gemäss Fig. 54 durch die in der Fig. 59 enthaltenen, hochfesten Titanprofile und die damit festverbundenen Profilkörperzonen, entsprechend den Zonen 3A und 3B und dem dazwischen liegenden hochfesten Titanprofil 2A, gebildet.

Die Elemente EL1,..., EL4, die aus zugeschnittenen FPM-Elastomer-Streifen (Maag-Technik, CH-8600 Dübendorf) mit einer Temperaturfestigkeit bis 150 °C bestehen, werden nachträglich in die verformbare Profilkörperzone 5B eingesetzt, wobei die Verbindung mit den Profilkörpern in diesem Fall ausschliesslich auf Haftung beruht. Dabei dient die Entfernbarkeit dieser Elemente der Montage und Demontage des M-Körpers an einem Speicherelement, aufgrund der Möglichkeit einer nun grösseren Querschnittsverminderbarkeit. Abmessungen des M-Körpers: Breite und Höhe: 5,5 mm +/- 0,5mm, Länge: 120 mm.

Dieser M-Körper dient der Lagerung und Einbettung der Wandungshülle eines schwingungsbeanspruchten Druckspeichers, in aggressiver Umgebung und bei erhöhten Temperaturen, in ein übergeordnetes konstruktives System.

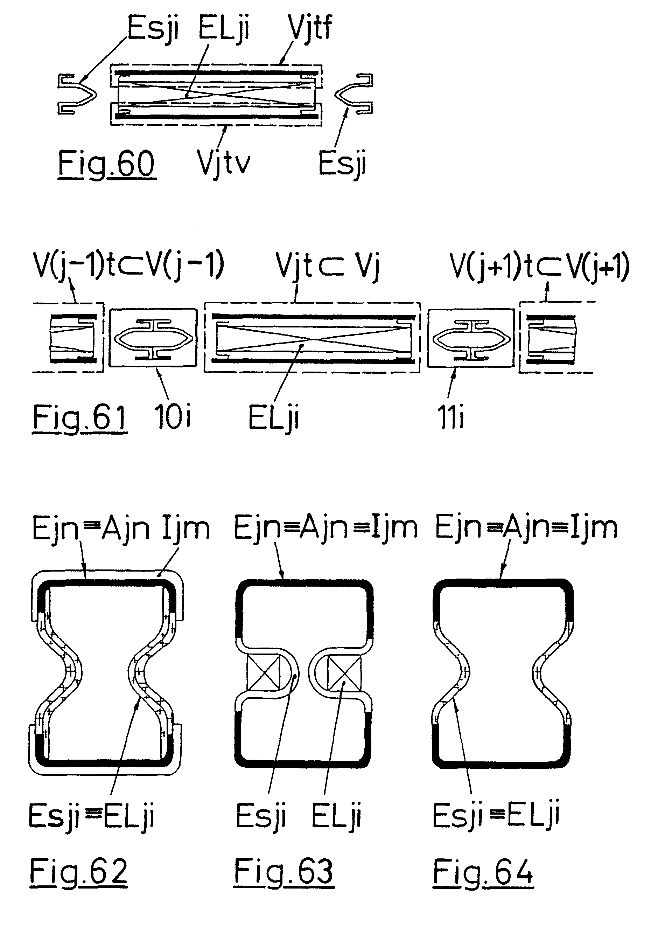

**Zu Fig. 60 bis 64 / Sonderfälle eines M-Körperquerschnittes**

Einige Sonderfälle (vgl. Ansprüche 8 und 5 - 7)

Die Fig. 60 zeigt von einem M-Körper-, resp. Vj-Querschnitt, die Anteile Vjtf und Vjtv, zwei verformbare, kraftübertragende Elemente Esji, sowie ein Element ELji.

Die Fig. 61 zeigt die Querschnitte von drei Mengen V(j-1), Vj und V(j+1), entsprechend Teilmengen V(j-1)t, Vjt und V(j+1)t, wobei in den Elementen 10i die Teilmenge Esj der Menge Vj mit der Teilmenge Es(j-1) der Menge V(j-1) gemäss Anspruch 8 zusammenhängt. Entsprechend besteht in den Elementen 11i ein Zusammenhang zwischen der Teilmenge Esj der Menge Vj und der Teilmenge Es(j+1) der Menge V(j+1). Ebenfalls erkennbar ist ein Element ELji.

Die Fig. 62 zeigt einen M-Körper-, resp. Vj-Querschnitt mit den Elementen

Ejn ≡ Ajn, Ijm, und Esji ≡ ELji (vgl. Ansprüche 5 und 7)

Dieser Sonderfall zeichnet sich dadurch aus, dass die Eigenschaften der Elemente Esji und ELji in einem Verbundwerkstoff angelegt sind, der hier, als Beispiel, als Körperwandung erscheint.

Die Fig. 63 zeigt einen M-Körper, resp. Vj-Querschnitt mit den Elementen Ejn ≡ Ajn ≡ Ijm, Esji und ELji (vgl. Anspruch 6).

Die Fig. 64 zeigt einen M-Körper, resp. Vj-Querschnitt in dem die Elemente Ejn ≡ Ajn ≡ Ijm und Esji ≡ ELji enthalten sind, die, bezogen auf eine Menge Vj, den Teilmengen Ejn ≡ Ajn ≡ Ijm und Esj ≡ ELj entsprechen (vgl. Ansprüche 6 und 7).

**Zu Fig. 65 und 66 / Abwickelbare M-Körperschichten**

An früherer Stelle wurde gesagt, dass die Teilmengen Vjf, resp. Vjv eines M-Körpers, resp. einer Menge Vj, im Fall einer spezifischen Verknüpfung gemäss Kriterium M5AS, aus Schichten Vjft, resp. Vjvt bestehen können. In diesem Fall ergibt sich für die Teilmengen

$$Vjf \ (ej) \ \equiv \ \underset{vjf}{\cup} Vjft \qquad und \qquad Vjv \ (ej) \ \equiv \ \underset{vjv}{\cup} Vjvt$$

Definition einer Vjfta-, resp. einer Vjvta-Schicht: (vgl. Anspruch 10)

Unter einer Vjfta-, resp. Vjvta-Schicht wird eine, auf eine ebene Abwicklung reduzierbare Vjft-, resp. Vjvt-Schicht verstanden, deren Querschnitt minimal eine Teilmenge Ajn hochfester Zonen enthält, die asymmetrisch so angeordnet ist, dass eine Vjfta-, resp. Vjvta-Schicht faltbar ist.
Die folgenden vier Längsschnitte sollen, schematisch, die Faltung einer Vjfta-, resp. Vjvta-Schicht veranschaulichen:
Die Fig. 65 zeigt, als Beispiel, eine Vjvta-Schicht in der eine Teilmenge Ajn hochfester Zonen und eine Teilmenge Ijm von Grundkörperteilen enthalten ist, wobei die hochfesten Zonen aussenseitig angelegt sind. Ersichtlich ist auch die Ausfräsung im Grundkörperteil, die die Faltung ermöglicht.
Die Fig. 66 zeigt die Vjvta-Schicht gemäss Fig. 65 im gefalteten Zustand.
Abwickelbare M-Körperschichten Vjfta, resp. Vjvta gemäss Anspruch 10 ebnen, in Verbindung mit einer weiteren Entwicklung der Foldingverfahren, den Weg zu einer gegenüber heute, breiteren Verwendung von plattenförmigen Werkstoffen. Oekologisch-kostenmässig enthalten z.B. Plattenwerkstoffe auf der Basis organischer und/oder anorganischer Ausgangsstoffe, insbesondere für bautechnische Anwendungen, Möglichkeiten, die heute erst teilweise ausgeschöpft werden (z.B. betreffend $CO_2$-Speicherwerkstoffen).
Die elektrische Leitfähigkeit von hochfesten Zonen der Teilmengen Ajn $\equiv$ Qjn kann, im Fall abwickelbarer Vjfta-, resp, Vjvta-Schichten in denen Grundkörperteile auf thermoplastischer Basis enthalten sind, auch dazu benutzt werden, diese lokal zu erwärmen, um ihre Faltung zu ermöglichen. Ein diesbezüglich geeignetes Vorgehen vermag herkömmliche Produktionszyklen wesentlich zu reduzieren (vgl. Ansprüche 9 und 10).

**Zu Fig. 67, 68 und 69, sowie zu den Ansprüchen 9 und 11:**

Die Fig. 67 zeigt, als Beispiel, einen Vertikalschnitt durch einen möglichen Aufbau einer Wandungsschale WRji. Erkennbar sind, entlang einer Wandungslängsseite, die Vjvt-Schichten im Quer-, die Vjft-Schichten im Längsschnitt und das dazwischenliegende Teilgebiet Ewj. Sodann erscheinen vier Umrandungen Uj (RFj) im Querschnitt.
Auf die Vorteile eines derart orthogonalisierten Wandungsaufbaus für dessen Schub-, Stabilitäts- und allgemein dynamisches Verhalten wird hier nicht eingegangen, stattdessen wird auf eine Möglichkeit hingewiesen die Gegenstand von Anspruch 11 ist:
Die Wahl nicht paralleler, z.B. gekreuzter Vjft-, resp. Vjvt-Schichten für Wandungen WRji stellt auch eine Voraussetzung dar, um eine hochfeste Zone, z.B. eine Armierung, und damit eine M-Körperschicht, als Spannelement zu verwenden, wenn deren Länge kontrollier- und veränderbar ist (vgl. Anspruch 10).
Je nach Werkstoffwahl und dem Aufbau einer Vjft-, resp. Vjvt-Schicht kann eine solche verlängert werden, indem eine hochfeste Zone der Teilmenge Ajn, z.B. bewirkt durch eine Temperaturerhöhung, verlängert wird; entsprechend kann eine solche Schicht wieder verkürzt werden, in dem die Temperatur in Ajn abgesenkt wird. Je nach Werkstoffwahl betr. eine hochfeste Zone kann hier wiederum ihre Ausbildung als Teilmenge Qjn elektrischer Leiter gemäss Anspruch 9 von Bedeutung sein.
Aus den Fig. 67 und 68 geht hervor, wie die Möglichkeit der Längenänderung einer längsorientierten Vjft-Schicht zum Befestigen und/ oder Vorspannen der hier normal zu den Vjft-Schichten angeordneten Vjvt-Schichten benutzt werden kann.
Zur Einflussnahme auf die geometrische Konfiguration einer Wandungsschale WRji stellt die Längenänderung von hochfesten Zonen Ajn, und damit von Vjft-, resp. Vjvt-Schichten nur eine Möglichkeit dar, die im wesentlichen die Ausgangskonfiguration einer Wandungsschale WRji und damit ihre Befestigung und allfällige Vorspannung betrifft. Eine zweite Möglichkeit liegt in der Abstimmung der Verformbarkeit einer charakteristischen Teilmenge VjT dadurch, dass die Kennlinie ihrer Teilmengen Esj und ELj (gemäss Ansprüchen 1 und 27 bis 30) abgestimmt wird.

**Zu Fig. 69 und 70 / Zu den Ansprüchen 1, 7, 27 bis 31:**

Diesbezüglich zeigt die Fig. 69, als Beispiel, eine Teilmenge Vjt, deren Anteil Vjtv durch eine konkave Deckschichtverwölbung gekennzeichnet ist, die einer rotatorischen Querschnittsverformung entspricht.
Die Querschnittsverformbarkeit eines M-Körpers, resp. einer Menge Vj kann durch das Arbeitsvermögen ihrer Teilmengen Esj und ELj, d.h. (Esj $\cup$ ELj) beschrieben werden, das im wesentlichen durch jenes der Teilmenge ELj bestimmt wird; diesbezüglich sind in den Ansprüchen 27 und 28 ein unterer und oberer Grenzwert aufgeführt. Wesentlich ist, dass im Fall von Anspruch 27 eine Relativverformung des Komplementes (**S** -Vj) auf die entsprechende Menge Vj, und damit auf die entsprechende Vereinigung (Esj ∪ ELj) abgebildet wird. Demgegenüber wird im Fall gemäss Anspruch 28 eine Relativverformung einer Teilmenge ELj auf die entsprechende Menge Vj und als Folge davon auf das Komplement (**S** -Vj) abgebildet.

Für diese zwei Grenzfälle sind die in den Ansprüchen 29 und 30 enthaltenen Aussagen bedeutsam. Dazu muss bemerkt werden, dass aufgrund der Definition der Teilmenge Esj, als verformbare, kraftübertragende Teilmenge einer Menge Vj, eine Energie zu- oder Abfuhr betreffend der Vereinigung der Teilmengen (Esj ∪ ELj) anhand der Teilmenge ELj geschehen muss (vgl. Ansprüche 1, 29-30). Trifft der Anspruch 27 zu, so weist die Teilmenge ELj, und als Folge davon die Vereinigung (Esj ∪ ELj) einen passiven Charakter auf. Trifft dagegen der Anspruch 28 zu, so weist die Teilmenge ELj, und als Folge davon, die Vereinigung der Teilmengen (Esj ∪ ELj) einen aktiven Charakter auf. Dadurch kann eine Teilmenge ELj, und damit die entsprechende charakteristische Teilmenge VjT, deren Anteile VjTf und VjTv durch die Vereinigung (Esj ∪ ELj) bezüglich der entsprechenden Menge Vj miteinander verknüpft sind, für die umgebende Struktur, d.h. das Komplement (**S** -Vj) als Steuer- oder allenfalls als Regelglied auftreten. Diesbezüglich wird, als Beispiel, nur auf eine einzige Möglichkeit hingewiesen, wie eine Vereinigung (Esj ∪ ELj) beeinflusst werden kann.

Die Querschnittsverformbarkeit eines M-Körpers, entsprechend einer Menge Vj kann durch eine Kennlinie angegeben werden, die jener der Teilmengen Esj und ELj, d.h. Esj ∪ ELj entspricht, wobei im einfachsten Fall, was hier angenommen wird, gemäss Anspruch 7 und Fig. 62, Esj ≡ ELj ist. Eine solche Kennlinie kann z.B. durch eine Temperatureinwirkung auf die Teilmengen (Esj ∪ ELj) verändert werden, dadurch, dass eine solche betreffend der Teilmenge ELj, gemäss Anspruch 30, vorgenommen wird, die hier gemäss Anspruch 7 mit der Teilmenge Esj identisch ist. Wenn man die Geometrie der Teilmengen Esj ≡ ELj ausser Acht lässt, Esj ≡ ELj als konservativ voraussetzt und Trägheitsaspekte vernachlässigen darf, kann eine solche Kennlinie ausschliesslich anhand der Werkstoffeigenschaften von Esj ≡ ELj beschrieben werden. Im Fall einer isothermen Betrachtung wären diese dann gegeben, wenn die Abhängigkeit der Spannungen von den Verzerrungen anhand der Komponenten des Hook'schen Tensors gegeben wäre.

Diesbezüglich zeigt die Fig. 70 in einem Punkt eines Teilgebietes, resp. Elementes Esji ≡ ELji, gemäss Fig. 62, in dessen Fläche, schematisch, die Abhängigkeit der Schubspannungen [1], von den Verzerrungen [2], wenn die Temperatur als Parameter T1, ..., T4 verwendet wird. Anhand dieser Kurve wird deutlich, wie eine Temperaturänderung, unmittelbar, eine Aenderung der Steifigkeit eines Teilgebietes, resp. Elementes Esji ≡ ELji bewirken kann.

*Bemerkung:* Die Temperatur wird in diesem Beispiel als Parameter, als Führungsgrösse, benutzt, wodurch eine charakteristische Teilmenge VjT einer Menge Vj, resp. eines M-Körpers, für diesen betreffend der umgebenden Struktur und damit für das Komplement (**S** -Vj) als Steuer- oder allenfalls als Regelglied auftritt, dessen Position bezüglich der ganzen Konfigurationsmenge von (**S** - Vj) genau definiert ist, aufgrund des Anteiles VjTf, der im hochfesten Gebiet F enthalten ist, das als Referenzgebiet aufgefasst werden kann.

Dabei ist es die Relativverschiebung des Anteiles VjTv, gegenüber dem entsprechenden Anteil VjTf, einer charakteristischen Teilmenge VjT einer Menge Vj, die bezüglich der umgebenden Struktur (**S** -Vj) als Steuer oder Regelgrösse auftritt. Diese Möglichkeit ist in der Umkehrbarkeit der dem Kriterium 5 zugrunde liegenden Verknüpfung zwischen den Teilmengen (VjTf ∪ VjTv) einerseits, und (Esj ∪ ELj) andererseits, enthalten.

Die Einbettung eines Elementes ELji, und damit der entsprechenden Teilmenge ELj in eine Vereinigung (Esj ∪ ELj), die wiederum in einer Menge Vj, entsprechend einem M-Körper gemäss Anspruch 1 enthalten ist, unterscheidet eine als Steuer- oder allenfalls als Regelglied wirksame, charakteristische Teilmenge VjT grundsätzlich, betreffend dem Aufbau und der Verwendung, von einem herkömmlichen Steuer- oder Regelglied.

Ein Element ELji der die Konfigurationsmenge einer Teilmenge Esj mitbestimmenden Teilmenge ELj kann, aber muss nicht zwingend, wie aus dem Beispiel hervorgeht, mechanisch bewegliche Teile enthalten. Zu diesem Beispiel sei auch gesagt, dass allein die Entwicklung neuer Legierungen, z.B. Cu-Al-Ni-Legierungen, d.h. solchen mit einem "Gedächtnis" diesbezüglich, aufgrund einer nochmals erweiterten Querschnittsverformbarkeit eines M-Körpers, für das Verformungs-, aber auch das Stabilitäts- und allgemein dynamische Strukturverhalten, völlig neue Perspektiven eröffnen.

Mit diesem Merkmal eines M-Körpers liegt eine zweite Möglichkeit vor, die Verformungskonfiguration einer Teilstruktur, z.B. einer Wandungsschale WRji, nun durch charakteristische Teilmengen mitzubestimmen, die eine minimale Anzahl von Steuer- oder allenfalls Regelelementen darstellen.

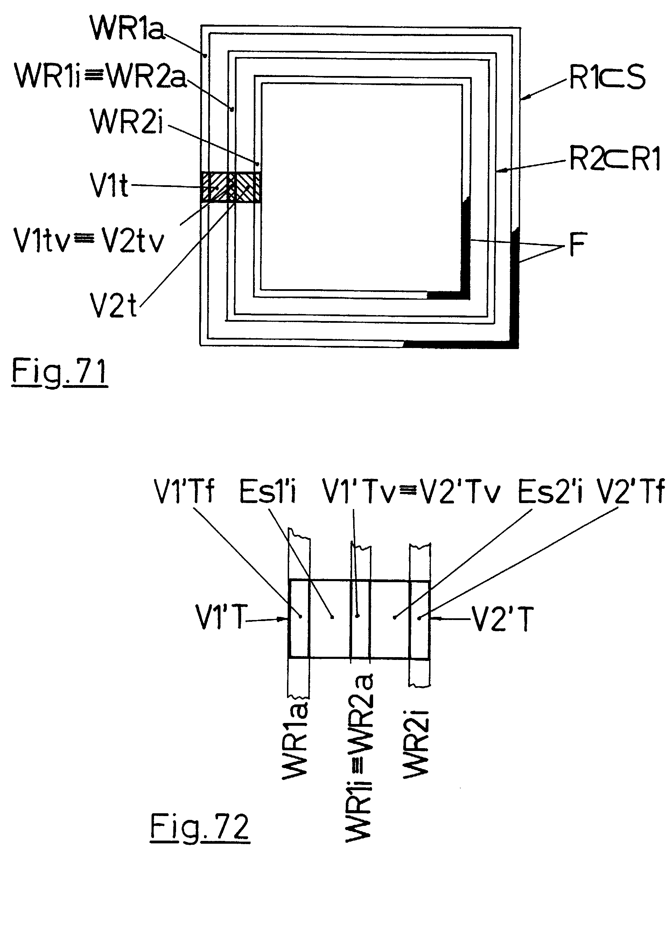

**Zu Fig. 71 und 72 / vgl. Anspruch 12 und 13:**

Die Fig. 71 zeigt in einer Struktur S zwei Räume R1 und R2 mit einem Wandungsaufbau gemäss Fall 2b, gemäss Fig. 20, im Querschnitt, wobei der Raum R2 im Raum R1 enthalten ist. Die Wandung WR1 des Raumes R1 besteht aus den Wandungsschalen WRla und WRli. Die Wandung WR2 besteht aus den Wandungsschalen WR2a und WR2i. Dabei entspricht die innere Wandungsschale WRli des Raumes R1 der äusseren Wandungsschale WR2a des Raumes R2. In WR1 ist eine allgemeine Teilmenge Vlt, schraffiert, und in WR2 eine allgemeine Teilmenge V2t, entgegengesetzt schraffiert, eingetragen, wobei V1t und V2t in WR1i≡WR2a einen gemeinsamen Anteil V1tv≡V2tv besitzen, wenn davon ausgegangen wird, dass das Gebiet F, das schwarz angetönt ist, in WRla und WR2i enthalten ist. Wesentlich ist bei dieser Darstellung, dass der gemäss Kriterium 3-1 im Gebiet F geforderte Zusammenhang fehlt;

ebenso fehlt der gemäss Kriterium 3-3 geforderte, minimale Zusammenhang zwischen WRla und WRli sowie zwischen WR2a und WR2i.

In einem solchen Fall können nun die in Fig. 71 eingezeichneten Teilmengen Vlt und V2t als charakteristische Teilmengen V1'T und V2'T ausgebildet werden, die lokal entsprechend dem Bereich von V1'T und V2'T, durch je eine, gemäss Anspruch 12, minimale Verformbarkeit der entsprechenden Teilmengen Esj, aufgrund zumindest je eines Elementes Esj'i, hier Es1'i und Es2'i, gekennzeichnet sind, die gemäss Anspruch 13, im zusammenhängenden Gebiet F enthalten sind, was in der Fig. 72 dargestellt ist. Erkennbar sind die nicht verformbaren, charakteristischen Teilmengen V1'T und V2'T:

V1'T ist mit der Teilmenge V1'Tf in WRla und mit der Teilmenge V1'Tv in WR1i≡WR2a enthalten; wobei Vl'Tf und V1'Tv durch ein praktisch nicht verformbares Element Esl'i verbunden sind. V2'T ist mit V2'Tf in WR2i und mit V2'Tv in WR1i≡WR2a enthalten, wobei V2'Tf und V2'Tv durch ein praktisch nicht verformbares Element Es2'i verbunden sind. Aufgrund des gemeinsamen Anteiles V1'Tv ≡V2'Tv wird damit der gemäss dem Kriterium 3-1 vorausgesetzte Zusammenhang im Gebiet F, das gemäss Fig. 71 in WRla und WR2i enthalten ist, hergestellt. Ebenso wird der gemäss Kriterium 3-3 geforderte minimale Zusammenhang zwischen WRla und WRli sowie WR2a und WR2i hergestellt.

Mit den Ansprüchen 12 und 13 wird auf eine Möglichkeit hingewiesen, wie dem Kriterium 3-3 gemäss Anspruch 1 und den zur Fig. 6 genannten Kriterien entsprochen werden kann.

Die Ansprüche 12 und 13 haben zur Konsequenz, dass in einer Struktur S der Raum Ri, mit einem Teilgebiet in einem Raum Rj enthalten sein kann, und dass umgekehrt, ein Raum Rj, im Raum Ri enthalten sein kann, und dass trotzdem dem im Anspruch 1 geforderten Zusammenhang im Gebiet F (Kriterium 3-1) entsprochen werden kann, in dem zugleich, gemäss den Ansprüchen 12 und 13, dem ebenso im Anspruch 1 enthaltenen Kriterium 3-3 entsprochen wird.

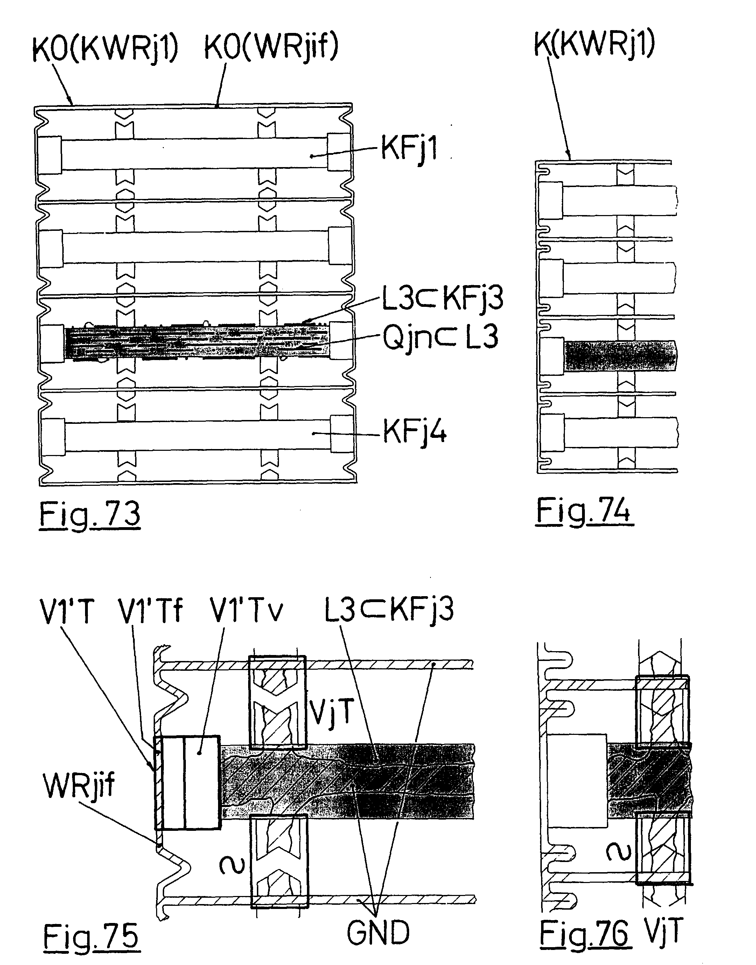

### Zu Fig. 73 - 76 / Zu den Ansprüchen 14, 15 und 16:

Gemäss Anspruch 3 wird gesagt, dass der Anteil VjTv einer charakteristischen Teilmenge VjT in mindestens einem Wandungskomplement KWRj, in mindestens einem Feldkomplement KFj enthalten ist.

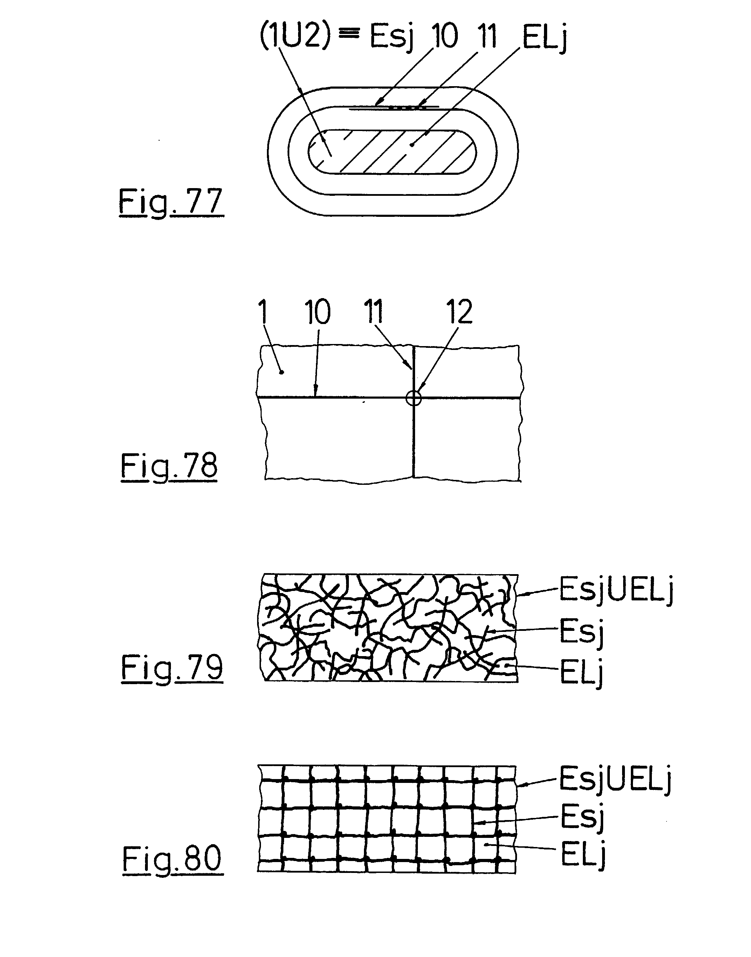

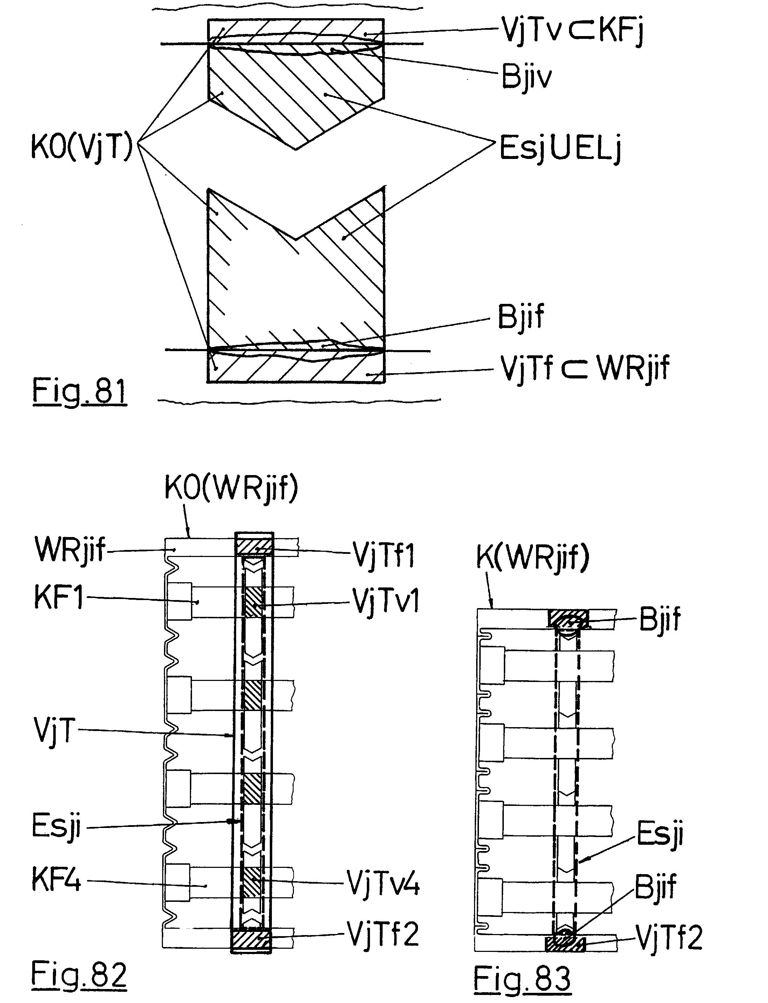

Die Fig. 73 zeigt ein Wandungskomplement KWRj1, in der Konfiguration K0, im Querschnitt, bestehend aus dem äusseren Wandungsteilgebiet WRjif, in der Konfiguration K0, und einem inneren Wandungskomplement, das wiederum aus vier Feldkomplementen KFj1, ...., KFj4 besteht, die gemäss Anspruch 14, als Teilgebiete, je eine Leiterplatte L1, ...., L4 enthalten. Diesbezüglich ist, als Beispiel, ein Leiter der Teilmenge Qjn in der Leiterplatte L3, die im Komplement KFj3 enthalten ist, beschriftet. Gemäss Anspruch 14 wird davon ausgegangen, dass ein solcher Leiter, in einer Leiterplatte L, in einem integrierten Schaltkreis, z.B. auf MCM-Basis (Multichip-Modul-Technologie) u.s.w. enthalten ist. Dabei entspricht die Konfiguration K0(KWRjl) dem Montagezustand des Komplementes KWRj1, resp. dieser Anordnung. Die Fig. 74 zeigt einen Ausschnitt des Komplementes KWRj1 in der Konfiguration K(KWRj1), entsprechend dem Betriebszustand. Die Fig. 75 und 76 zeigen je einen Ausschnitt des Komplementes KWRj1 entsprechend dem Montage- und Betriebszustand, vergrössert. Daraus geht hervor, wie eine, fett umrandete, charakteristische Teilmenge VjT, im Betriebszustand wiederum eine Teilmenge, entsprechend einem zusammenhängenden, elektrisch leitenden Teilgebiet, aufweist, das mit einem elektrisch leitenden Teilgebiet mindestens einer Leiterplatte hier L3 zusammenhängt, und weiter mit einem elektrisch leitenden Teilgebiet mindestens eines Wandungsteilgebietes von WRjif zusammenhängt, und dass dieses zusammenhängende elektrisch leitende Gebiet als Massesystem, mit GND bezeichnet und schraffiert angedeutet, ausgebildet ist (vgl. Anspruch 15). Eine Möglichkeit zur Verwirklichung des in VjT vorausgesetzten elektrisch leitenden Teilgebietes wird später in der Fig. 81, angegeben.

Die Fig. 75 zeigt weiter eine nicht verformbare charakteristische Teilmenge V1'T gemäss Anspruch 12, fett eingerahmt, in welcher der Zusammenhang zwischen dem Wandungsteilgebiet WRjif und dem Komplement KFj3, gemäss Kriterium 3-3 hergestellt ist, wobei in KFj3 gemäss Anspruch 14 eine Leiterplatte L enthalten ist. Dabei ist in einer solchen, nicht verformbaren, charakteristischen Teilmenge Vj'T, z.B. V1'T, gekennzeichnet durch den Anteil V1'Tf, der in WRjif enthalten ist, und den Anteil V1'Tv der in KFj enthalten ist, gemäss Anspruch 16, als Teilgebiet, die Schnittstelle der Leiterplatte, z.B. in der Form von "Steckern" enthalten.

*Anmerkung:* Die Entwicklung der Leiterplatten ist durch eine stets höhere Integrationsdichte der verwendeten Elemente gekennzeichnet, (Bsp.: MCM-Technologie, COB-, resp. Chip-on-board-Technologie, Hybrid-Technologie). Die damit verbundene stets höhere spezifische Wärmeabgabe kann z.B. an der Oberfläche von Leiterplatten, insbesondere bei einem zugrunde liegenden Schwingungsspektrum, für die Verbindungstechnik (Ball-Wedge, Wedge-Wedge usw.) und die Verpackung (Packaging/Encapsulation) Probleme verursachen deren Auswirkungen schwer abschätzbar sind. Ein begehbarer Weg zur Entschärfung dieser Problematik, u.a. zur allgemeinen Spannungsabsenkung, besteht in der Definition und Ausbildung einer übergeordneten Systemarchitektur, entsprechend dem Betriebs- nicht aber dem Montagezustand eines Gerätes. Hierzu kann die exakte Steuer- und Kontrollierbarkeit der geometrischen Konfigurationsmenge eines Gehäuses, hier des Wandundungsteilgebietes WRjif einen Schlüssel darstellen. Voraussetzung hierzu sind, was nicht dargestellt ist, charakteristische Teilmengen VjT, in den WRjif-umgebenden Umrandungen Uj(RFj), die als passive und/oder aktive Steuer- resp. Positionierelemente (gemäss den Ansprüchen 1, 27 bis 31) ausgebildet sind.

Durch den Uebergang des Wandungsteilgebietes WRjif von der Konfiguration K0(WRjif) in K(WRjif) und damit durch den Uebergang des Komplementes KWRjl von der Konfiguration K0(KWRj1) in K(KWRj1), wird durch die charakteristischen Teilmengen VjT gemäss Fig. 75 und 76 gleichzeitig

- die mechanische Lagerung der Leiterplatten gewährleistet
- der gemäss Anspruch 15 im Gebiet GND vorausgesetzte Zusammenhang hergestellt und
- allenfalls wärmeableitende Zonen geschaffen.

Die Ausbildung einer solchen charakteristischen Teilmenge VjT wird später beschrieben (Fig. 81).

**Zu Fig. 22 und 25 sowie zu den Ansprüchen 17 und 18:**

Die Fig. 22 und 25 veranschaulichen, wie in einer Struktur S ein Hohlraum, entsprechend dem Komplement (Ri-WRi) gegeben sein kann, der gemäss Anspruch 17 für Installationen vorgesehen ist, die z.B. elektrische Leiter enthalten können, die ihrerseits durch bewegte Ladungsträger gekennzeichnet sein können.

Diesbezüglich gewinnt die Abschirmung einzelner Raumkomplemente z.B. (Rj-WRj) für technische Systeme die z.B. hochintegrierte Schaltungen aufweisen, aber auch für den Menschen mit seinem zunehmend empfindsameren Organismus, aufgrund der Problematik betreffend die elektromagnetische Verträglichkeit, laufend an Bedeutung.

Diesbezüglich ist, anstelle der heutzutage oftmals praktizierten additiven Massnahmen, dieser Patentschrift erstens die Möglichkeit zugrunde gelegt, den für das Gebiet F aufzuwendenden, hochfesten Werkstoff, anteilsmässig, gemäss Kriterium 4-3 oder allenfalls gemäss Kriterium 4-4 in der Raumwandung WRi zu konzentrieren, wobei gleichzeitig davon ausgegangen wird, was in den Ansprüchen nicht weiter konkretisiert ist, dass dieser hochfeste Werkstoffanteil dabei so eingesetzt und spezifiziert wird, dass er betreffend seiner elektromagnetischen Eignung, was insbesondere (auch) für Verbundwerkstoffe zutrifft, optimal eingesetzt wird [12].

Zweitens wird mit dem Anspruch 18, aufgrund der elektrischen Leitfähigkeit von hochfesten Zonen Ajn, soweit diese gemäss Anspruch 9 gegeben ist, zwingend verlangt, dass, in der Wandung WRi des Raumes Ri ein zusammenhängendes, elektrisch leitendes Teilgebiet, z.B. gemäss DIN VDE 0185, angelegt wird.

Die Gliederung von Strukturgebieten, z.B. Wandungsschalen WRji aufgrund von verformbaren Teilgebieten Ewj, die als elektrisch isolierende Teilgebiete ausgebildet werden können, schaffen bereits in der tragenden Struktur *S* geradezu ideale Voraussetzungen zur Definition und Ausführung von zusammenhängenden, elektrisch leitenden und/oder abschirmenden Gebieten, entsprechend den Kriterien betreffend EMV.

**Zu Fig. 77, 78 / Zu den Ansprüchen 19 und 20:**

Die Ausbildung einer Teilmenge Esj, im lokalen, einbettenden Raum (Ej-Esj) von Vj(S) und damit in einer Menge Vj ist Gegenstand von Anspruch 19. Aus dem Anspruch 20 geht eine Möglichkeit hervor, wie dem Anspruch 19, bei einer gleichzeitigen Minimalisierung der Herstellungskosten einer Vereinigung der Teilmengen Esj und ELj Rechnung getragen werden kann. Dazu ist festgehalten, dass die Werkstoffeigenschaften dieser Vereinigung, gekennzeichnet durch die Komponenten des Hook'schen Tensors C, [8], im Mittel, entlang ausgewählter Linien, in zumindest einer gekrümmten Fläche, invariant sind, wenn die Temperatur als konstant angenommen wird.

Die Fig. 77 zeigt, angelegt um die Teilmenge ELj, als Kern, die Teilmenge Esj, als Deckschicht, bestehend aus einer hochfesten Phase 1 und einer Phase 2, als Harz. Wird für die Teilmenge Esj, als Phase 1, ein ein- oder mehrlagiges textiles Gewebe gewählt, so sind die Werkstoffeigenschaften, im Mittel, im Fall einer zugrunde liegenden Köperbindung, entlang der Schüsse 10 und Ketten 11 sowie der Binormalen 12, betreffend 10 und 11, konstant.

Die Fig. 78 zeigt einen Ausschnitt der Teilmenge Esj abgewickelt. Erkennbar ist von der Phase 1 ein Schuss 10 und eine Kette 11 die hier als Geraden vorkommen, entlang denen, wie entlang der Binormalen 12, betreffend 10 und 11, gemäss Anspruch 20, die Werkstoffeigenschaften, im Mittel, konstant sind.

**Zur Fig. 79 und zum Anspruch 21:**

Die Fig. 79 zeigt gemäss Anspruch 21 im Querschnitt, einen Ausschnitt einer Vereinigung der Teilmengen Esj und ELj, d.h. (Esj $\cup$ ELj). Dieser Verbund zeichnet sich dadurch aus, dass die Teilmenge Esj, als hochfeste Phase, in der Form ausgerichteter oder nicht ausgerichteter Fasern, z.B. metallischen Fasern, Kohlefasern usw., in der Teilmenge ELj, als kompressible Phase angelegt ist. Diesbezüglich sei bemerkt, dass eine geeignete Ausbildung von (Esj $\cup$ ELj) dem im Kriterium M5 vorausgesetzten Zusammenhang durchaus gerecht werden kann.

**Zur Fig. 80 und zum Anspruch 22:**

Die Fig. 80 zeigt eine mögliche Ausbildung der Vereinigung Esj und ELj, d.h. (Esj ∪ ELj) gemäss Anspruch 22. Wesentlich ist hier, dass die Phase Esj verwoben, z.B. als 3-dimensional verkettetes Gerüst verwoben, in der kompressiblen Phase ELj enthalten ist. Derartige 3-dimensionale Hybridverbunde können, gegenüber nur 2-dimensional verwobenen Schichten der Esj-Phase, die mit Schichten der ELj-Phase verklebt angeordnet sind, Vorteile aufweisen.

**Zur Fig. 81 und zu den Ansprüchen 21 und 22, sowie 15 und 18:**

Die Fig. 81 zeigt die Teilmenge VjT gemäss Fig. 75 vergrössert in der Konfiguration K0(VjT). Erkennbar ist der Anteil VjTv, der im Komplement KFj enthalten ist, und der Anteil VjTf, der im Wandungsteilgebiet WRjif enthalten ist, und von den Teilmengen (Esj ∪ ELj) die beiden Teilgebiete, die in der Konfiguration K0(VjT) voneinander getrennt sind. Erkennbar ist auch, wie diese zwei Teilgebiete geometrisch, ineinander passend, ausgebildet sind.

In diesem Fall wird davon ausgegangen, dass in (Esj ∪ ELj) die Teilmenge Esj als verformbare, kraftübertragende, elektrisch leitende und zugleich wärmeableitende Phase in der Teilmenge ELj als zweite Phase angelegt ist, wobei ELj hier ihrerseits, neben einer mechanischen Kompressionseigenschaft, eine elektrisch leitende, wärmeableitende und allenfalls schwingungsdämpfende Eigenschaft aufweisen kann.

Aus dieser Abbildung geht sodann hervor, wie an den Trennflächen von KFj und WRjif mit (Esj ∪ ELj) Verknüpfungszonen Bjiv und Bjif vorhanden sind, die neben ihrer mechanischen Eignung, hier, als elektrisch leitend vorausgesetzt werden. Zwischen KFj, (Esj ∪ ELj) und WRjif kann nun gemäss den Fig. 75 und 76 ein Zusammenhang hergestellt werden, dadurch dass WRjif von der Konfiguration K0(WRjif) in jene von K(WRjif) übergeführt wird, was hier nicht dargestellt ist. Verformt sich nun das Wandungsteilgebiet WRjif aufgrund eines Lastspektrums und bleibt für die ganze dabei eintretende Konfigurationsmenge der Zusammenhang zwischen den zwei Teilgebieten von (Esj ∪ ELj) aufrechterhalten, so liegt mit dem schraffierten Teilgebiet in VjT, und den in KFj und WRjif nur angetönt schraffierten Teilgebieten, das zusammenhängende Gebiet GND gemäss Anspruch 15 und allenfalls 18 vor.

<u>Zum Anspruch 23:</u>

Konventionelle Verbundwerkstoffe, die den Ansprüchen 19 - 22 zugrunde liegen, sind durch ein Gefüge gekennzeichnet, dessen Mikrostruktur, im Grenzfall, bis hinunter in einen Grössenbereich von etwa $10^{-7}$ m kontrollierbar ist. Im Anspruch 23 wird nun ausdrücklich darauf hingewiesen, dass den Teilmengen einer Menge Vj auch nanokomposite Teilgebiete zugrunde liegen können, d.h. solche, die chemisch strukturiert werden, und deren Mikrogefüge dadurch, im Grenzfall, hinunter bis in eine Grössenordnung von $10^{-9}$ m kontrollierbar und damit ausbildbar wird [13], z. B. in Fig 4, 31, 79, 84-86.

**Zu Fig. 82 und 83 / Zu den Ansprüchen 1, 11, 14 - 16, 21, 22:**

Die Fig. 82 zeigt einen Ausschnitt eines nicht verzweigten Wandungsteilgebietes WRjif mit vier Feldkomplementen KF1, ...KF4, im Querschnitt in der Konfiguration K0(WRjif), wobei das Komplement KF1 fett umrandet ist. Exemplarisch ist eine Teilmenge VjT, ebenfalls fett umrandet, angegeben in welcher ein Element Esji, gestrichelt umrandet, einer nicht weiter spezifizierten Teilmenge Esj angenommen wird. Der im Element Esji vorausgesetzte Zusammenhang fehlt in der Konfiguration K0(WRjif). Dieser Zusammenhang kommt durch den Uebergang des Wandungsteilgebietes WRjif in die Konfiguration K(WRjif) gemäss Fig. 83 zustande. Erkennbar ist, dass die Teilmenge VjT ,mit zwei Teilgebieten VjTf1 und VjTf2, entsprechend dem Durchschnitt VjT ∩ F, im Wandungsteilgebiet WRjif enthalten ist, was schraffiert hervorgehoben ist. Dabei wird in diesem Beispiel angenommen, dass das Wandungsteilgebiet WRjif zumindest mit den schraffierten Zonen im Gebiet F enthalten ist. Wesentlich ist gemäss Anspruch 1 nur, dass die Teilmenge VjT mit mindestens einem Teilgebiet des Anteiles VjTf im Gebiet F enthalten ist, und dass der Zusammenhang mit einem Element Esji in Verknüpfungszonen Bjif gemäss Fig. 83 hergestellt ist. Weiter ist erkennbar, dass die Teilmenge VjT mit ihrem Anteil VjTv, resp. dessen Elementen VjTv1, ... VjTv4, entsprechend dem Durchschnitt VjT ∩ KFj ≡ (Esji ∩ KF1) ∪ ... ∪ (Esji ∩ KF4) in den Feldkomplementen KF1, ... KF4, aufgrund von Verknüpfungszonen enthalten ist welche, entgegengesetzt schraffiert, hervorgehoben sind, wobei hier angenommen wird, dass für diese Verknüpfungszonen Bjiv ≡ BFji ≡ Esji ∩ KFj zutrifft. Charakteristisch ist, dass ein Komplement KFj, gegenüber einem benachbarten, und gegenüber dem Wandungsteilgebiet WRjif, eine Freiheit besitzt und dass ein Komplement KFj, aufgrund eines verformbaren, kraftübertragenden Elementes Esji mit den übrigen Komplementen, und dem Wandungsteilgebiet WRjif, bei deren Relativverformung, verbunden bleibt, wozu eine Vorspannung des Elementes Esji seitens des Wandungsteilgebietes WRjif, z.B. gemäss Anspruch 11, vorausgesetzt wird. Wenn man, als Beispiel, annimmt, dass in den Komplementen KF1, ..., KF4 Leiterplatten gemäss den Ansprüchen 14 - 16 enthalten sind, deren Ein- und Ausbau gewährleistet sein muss, erkennt man sofort, dass eine herkömmliche Ausbildung eines so angeordneten Elementes Esji weder verformungs- noch befestigungstechnisch in Frage kommt.

Zur Definition und Ausbildung einer übergeordneten Systemarchitektur ist in einem solchen Fall, von allem Anfang an wesentlich, dass zwischen der Konfiguration K0(WRjif), entsprechend dem Montagezustand, und der Konfigurationsmenge K(WRjif), entsprechend dem Betriebszustand, unterschieden, resp. gewählt werden kann. Das setzt erstens die genaue Kenntnis, sowie die Steuer- und allenfalls Regelbarkeit der Konfigurationsmenge K(WRjif) voraus, was wie die Lagerung der Komplemente KFj früher diskutiert wurde (vgl. Fig. 73-76). Zweitens muss an ein Element Esji die Anforderung gestellt werden, dass es entkoppelbar ist und dass es an der Kinematik des Wandungsteilgebietes WRjif, und jener der in WRjif enthaltenen Komplementen KFj teilnehmen kann. Gegenüber früheren Ausführungen ist hier jedoch neu, dass eine charakteristische Teilmenge mit mehreren Elementen, hier VjTf1 und VjTf2 im Gebiet F und mit mehreren Elementen, hier VjTv1, ..., ..., VjTv4 in je einem entsprechenden Gebietskomplement, hier den Feldkomplementen KF1, ..., KF4 enthalten ist, wobei, streng genommen, das hier vorkommende Element Esji, entlang seiner Länge seinerseits in mehrere Elemente gegliedert werden müsste, eine Aufteilung die nicht vorgenommen wurde.

**Zur Fig. 73 - 76, 82 - 84 und zum Anspruch 25:**

M-Körper erlauben den Aufbau von Strukturen, die allgemein dynamisch- und insbesondere schwingungstechnisch, erhöhten Anforderungen standzuhalten vermögen. Diesbezüglich ist im Anspruch 25 festgehalten, dass eine Struktur S, im Gebiet F Gelenke, und dass damit, z.B. ein Teilgebiet $F1 \subset F \subset \boldsymbol{F}$ gegenüber einem Teilgebiet $F2 \subset F \subset \boldsymbol{F}$, Freiheitsgrade aufweisen kann. Diese Möglichkeit wurde seinerzeit bereits den Wandungsteilgebieten WRjif gemäss den Fig. 73 - 76 sowie Fig. 82 und 83 zugrunde gelegt, wobei damals jedoch nicht darauf eingegangen wurde, was somit nachgeholt ist.

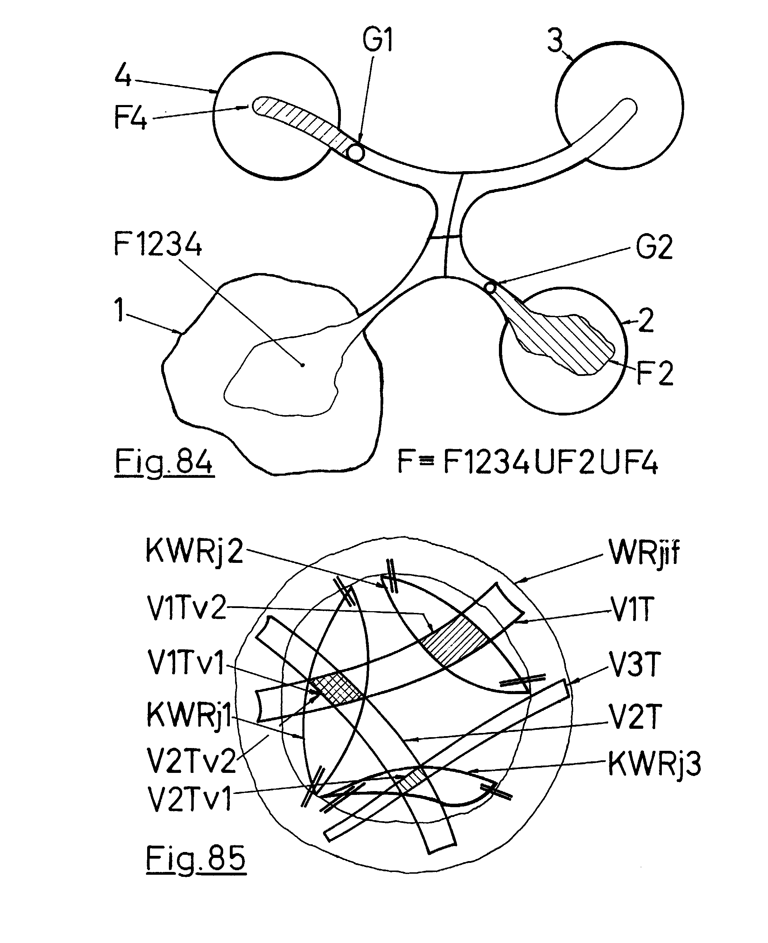

Die Fig. 84 zeigt eine Struktur S, bestehend aus vier Teilstrukturen 1, 2, 3 und 4, fett umrandet, denen dasselbe Gebiet F zugrunde liegt. Erkennbar ist, dass das Gebiet F an zwei Stellen zwei mit G1 und G2 bezeichnete Gelenke aufweist, die das gemeinsame Gebiet F der Teilstrukturen 1, 2, 3 und 4 in drei Teilgebiete F1234, F2 und F4 gliedern. In diesem Beispiel wird angenommen, dass das Teilgebiet F1234, das weiss belassen ist, in den Teilstrukturen 1, 2, 3 und 4, das Teilgebiet F2, schraffiert gekennzeichnet, in der Teilstruktur 2, und das Teilgebiet F4, entgegengesetzt schraffiert, in der Teilstruktur 4 enthalten ist. Eine solche Struktur kann z.B. einen Roboter auszeichnen.

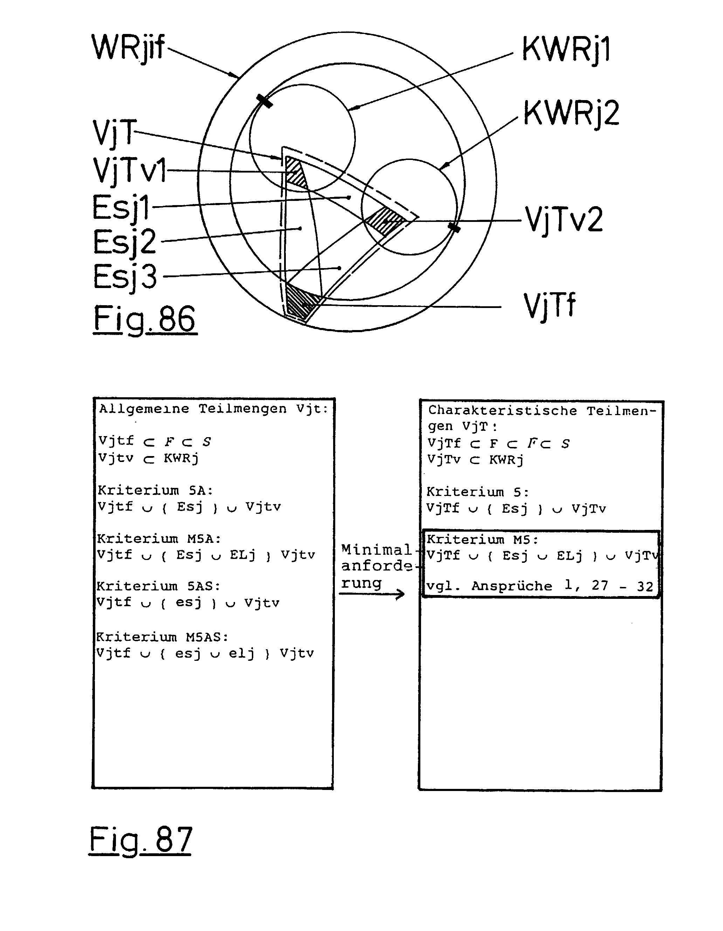

**Zu den Fig. 85 und 86 / Zur Definition einer Teilmenge Esj:**

Die Fig. 85 und 86 zeigen nochmals je ein Wandungsteilgebiet WRjif, mit darin enthaltenen Komplementen KWRj, und eingezeichneten, charakteristischen Teilmengen VjT, fett umrandet, im Querschnitt:
Dabei sind in der Fig. 85 drei charakteristische Teilmengen V1T, V3T erkennbar. Als Beispiel sind in der Teilmenge V1T deren Elemente V1Tv1 und V1Tv2, mit denen V1T in den Komplementen KWRj1 und KWRj2 enthalten ist, schraffiert angegeben. Entsprechend sind in der Teilmenge V2T deren Elemente V2Tv1 und V2Tv2 beschriftet. Daraus geht hervor, dass die Elemente $V1Tv1 \equiv V2Tv2$ identisch sind. In V1T, ..., V3T werden nun, entsprechend dem nicht schraffierten und nicht in WRjif enthaltenen Bereich, drei entsprechende, nicht beschriftete Elemente Esj1, ..., Esj3 als Elemente einer gemeinsamen Teilmenge Esj definiert. Dabei stellt man fest, dass die Elemente Esjl und Esj2 je drei Längenabschnitte aufweisen, wogegen im Element Esj3 nur zwei Längenabschnitte enthalten sind.

In der Fig. 86 ist eine charakteristische Teilmenge VjT, gestrichelt umrandet eingezeichnet, die neben einem Anteil VjTf im Wandungsteilgebiet WRjif zwei Elemente VjTv1 und VjTv2 in je einem Wandungskomplement KWRj1 und KWRj2 aufweist. Gegenüber der

Fig. 85 weist die Teilmenge Esj drei Elemente Esj1, ..., Esj3 auf, die nicht entlang einer Linie, sondern dreiecksförmig angeordnet sind.
Betreffend der Fig. 85 und 86 mag sich die Frage stellen, wieviele Mengen Vj einer solchen Anordnung entsprechen; den Querschnitten gemäss den Fig. 85 und 86 entspricht je eine Menge Vj, weil beiden Anordnungen je eine Teilmenge Esj entspricht. Dies wird im nachfolgenden Überblick nochmals festgehalten.

Ueberblick über den strukturtechnischen Aspekt eines M-Körpers, entsprechend einer Menge Vj in einer Struktur $\boldsymbol{S} \subset$ S / Bemerkungen zur Physik:

Dieser Beschreibung liegt die Definition eines M-Körpers, entsprechend einer Menge Vj in einer Struktur $\boldsymbol{S}$ zugrunde, gekennzeichnet dadurch, dass im 3-dimensionalen Raum R ein nicht materialisiertes, leeres Gebiet $\varepsilon$, in der Ausgangskonfiguration $K0(\varepsilon)$ und eine später zu materialisierende, tragende Struktur $\boldsymbol{S}$ so angelegt wird, dass $\boldsymbol{S}$ z.B. mit einem volumenmässig zu minimalisierenden Teilgebiet, entsprechend der Spur $\boldsymbol{S} \cap \varepsilon$ im einbettenden Raum, entsprechend dem Komplement $(\varepsilon - \boldsymbol{S} \cap \varepsilon)$ enthalten ist, und dass diese Spur die Struktur $\boldsymbol{S}$ in ein zusammenhängendes Gebiet $\boldsymbol{F}$ und in ein Komplement $(\boldsymbol{S} - \boldsymbol{F})$ trennt, d.h.

$$S \equiv F \cup (S \cap \varepsilon) \cup (S \text{-} F), \text{ wobei } S \cap \varepsilon \not\equiv \{ \}$$

und dass im Komplement ($S$ - $F$) einzelne in sich, mit dem Gebiet $F$ aber vorerst nur minimal zusammenhängende Gebiete Sy angelegt werden, die wiederum mit je einer Spur Sy $\cap$ $\varepsilon$ im Teilgebiet $S \cap \varepsilon$ enthalten sind, und dass der weitere Zusammenhang zwischen dem Gebiet $F$ und mindestens je einem Gebietskomplement

$$KSy \equiv Sy \text{-} Sy \cap \varepsilon, \text{ wobei } Sy \cap \varepsilon \not\equiv \{ \}$$

in mindestens einer Spur Sy $\cap$ $\varepsilon$ hergestellt wird in dem eine solche, konstruktiv, anhand von lokalen, $F$ und KSy verbindenden Teilgebieten, entsprechend Teilmengen Esj, von Mengen Vj so verwirklicht wird, dass je eine Teilmenge Esj $\equiv$ Vj $\cap$ Sy $\cap$ $\varepsilon \not\equiv \{ \}$, zusammen mit je einer Teilmenge Vj $\cap$ $F \not\equiv \{ \}$ und Vj $\cap$ KSy $\not\equiv \{ \}$ in der Struktur $S$ eine Menge Vj definiert. Eine Teilmenge Esj stellt demnach die Verkörperung eines lokalen Teilgebietes Esj im zu materialisierenden Raum, enthalten in einer Spur Sy $\cap$ $\varepsilon$, im an sich nicht materialisierten Raum, entsprechend dem Gebiet $\varepsilon$ dar. Eine solche Verkörperung ist anhand einer volumen- und diese wiederum anhand einer dimensionalen Minimalisierung und einer dadurch möglichen Krümmung von Teilgebieten einer Teilmenge Esj, unter Beachtung stabilitätstheoretischer Gesichtspunkte, möglich. Es ist nun eine Teilmenge Esj die, aufgrund der Verknüpfungen gemäss dem Kriterium 5 umkehrbar eindeutig eine Menge Vj und damit einen M-Körper in einer tragenden Struktur $S$ definiert:

$$Esj \Longleftrightarrow (Vjf, Vjv), \text{ wobei } Vjf \equiv Vj \cap F \text{ und } Vjv \equiv Vj \cap KSy$$

Zur kostenmässigen Minimalisierung des Gebietes $F$ und allenfalls der Gebietskomplemente KSy werden in $F$ ein Gebiet F und in KSy ein Wandungskomplement KWRj angelegt. Als Folge davon werden in Vjf und Viv, minimal, je ein Anteil VjTf $\subset$ F und VjTv $\subset$ KWRj zu einer verformungsmässig höherwertigen, charakteristischen Teilmenge VjT ausgebildet, wobei diese maximal, mit der Menge Vj identisch ist. Nun kann zur globalen Strukturdefinition zurückgekehrt werden

$$S \equiv F \cup \bigcup_{s} Vj \cup \bigcup_{s} KWRj, \text{ wenn } KWRj \equiv KSy$$

Die Teilmenge Esj steht am Anfang der eigenen, neuartigen Verhaltensweise einer Menge Vj in einer Struktur $S$, bezüglich der umgebenden Struktur ($S$ -Vj). Eine so ausgebildete, zusammenhängende Struktur $S$ kann z.B., wenn sie ein konservatives System darstellt, als Ansatz zu einer gemäss dem Prinzip von Hamilton [6], [10], energetisch und/oder verformungsmässig, gegenüber heutigen Lösungen, weiter optimierbaren Struktur betrachtet werden (vgl. Ansprüche 27 bis 32).

Der vorliegende Lösungsansatz erlaubt betreffend der Interpretation des Prinzips von Hamilton, in dem, für ein gegebenes Lastspektrum, die potentielle Energie, und damit auch die Formänderungsenergie einer Struktur $S$ umkehrbar eindeutig mit deren kinetischen Energie zusammenhängt, gegenüber der heute üblichen Interpretation einen Schritt weiterzugehen, indem sich die Gestaltänderungsenergie betreffend dem Anteil, der durch eine Relativverformung von Teilstrukturen verursacht wird, als minimalisierbar erweist. Dies wird besonders dann augenscheinlich, wenn man den Grenzfall dieses Prinzips, das Prinzip vom Mimimum der Formänderungsenergie betrachtet. Neben der 1. Variation des elastischen Potentials ist jedoch auch die 2. Variation bedeutsam, weil sie ein Stabilitätskriterium darstellt. In diesem Fall kann eine Modifikation von Verschiebungswerten einer Teilstruktur, betreffend einer bestimmten Verformungskonfiguration, aufgrund eines im allgemeinen nicht linearen Beitrages zur Stabilität, diese allenfalls wesentlich verbessern. Dazu kann ebenso eine geeignete Anwendung von Anspruch 8 beitragen, worauf in dieser Arbeit jedoch nicht eingegangen wird. Als Folge davon werden die aus dem Prinzip von Hamilton ableitbaren Gleichungen von Euler-Lagrange wohl modifiziert, ihr Gültigkeitsbereich gegebenenfalls erweitert, nicht aber wird diesbezüglich der bisherige Rahmen der mathematisch-physikalischen Beschreibung einer Struktur verlassen. Neu ist aber, dass durch das, gegenüber einem herkömmlichen Konstruktionskörper, grundlegend erweiterte Verformungsverhalten einer Menge Vj, und der dadurch bedingten topologischen Strukturausbildung, sowie aufgrund der Umkehrbarkeit der dieser zugrunde liegenden Verknüpfungen, zugleich eine Voraussetzung erbracht ist, entsprechend die Konfigurationsmenge einer Struktur $S$, gegenüber herkömmlichen, mechanisch beanspruchten Strukturen zu erweitern. Dabei stellen die Ansprüche 1, 27 bis 32 die Grundlage dieser neuartigen statischen und/oder dynamischen und/oder geometrischen Strukturabstimmung dar.

Im Gegensatz zu anderen Konstruktionskörpern geht die Definition einer Menge Vj, entsprechend einem M-Körper in der Struktur $S$ ausschliesslich aus der mathematisch-physikalischen Definition einer Menge Vj bezüglich der umgebenden Struktur (S -Vj) hervor. Dabei wird das Gebiet $F$ von Anfang an in einem Raum Ri, und das Komplement ($S$ - $F$) in Räumen Rj einer Struktur $S$ und einer Struktur S, d.h. der tragenden Struktur $S$, unter Berücksichtigung des umgebenden Raumes (S- $S$) angelegt.

Die Funktionalisierung der Menge Vj schafft Anwendungsmöglichkeiten in der Bau- und allgemeinen Konstruktionstechnik, Luft- und Raumfahrttechnik, Steuer- und Regeltechnik, Mikrotechnik, Elektronik usw., im Fall von Strukturen, für die statisch und/oder dynamisch und/oder verformungsmässig hohe Anforderungen bestehen.

Das nachfolgende Schema soll den Überblick erleichtern:

Globale Betrachtung einer Struktur $S$ und eines Gebietes $\mathcal{E}$:

Einbettung der Vereinigung $(S \cup \mathcal{E})$ in der Struktur S: $(S \cup \mathcal{E}) \subset S \subset R$

$(\mathcal{E}, S) \equiv (\mathcal{E} \cup S \cap \mathcal{E} \cup S) \subset R$ wobei $S \cap \mathcal{E} \neq ()$

$S \equiv \mathcal{F} \cup (S-\mathcal{F}) \equiv \mathcal{F} \cup (S \cap \mathcal{E}) \cup (S-\mathcal{F})$

$S-\mathcal{F} \equiv (Sy)$ wobei $Sy \cap \mathcal{E} \neq ()$ und $KSy \equiv Sy - Sy \cap \mathcal{E}$

Lokale Problemlösung: Zusammenhang eines Gebietes Sy mit dem Gebiet $\mathcal{F}$:

Einbettung der Gebiete $\mathcal{F}$ und Sy in die Struktur S:

$\mathcal{F} \cup (Sy \cap \mathcal{E}) \cup KSy$

$\mathcal{F} \subset Ri \subset \quad S \Rightarrow$
$Sy \subset Rj \subset \quad S \Rightarrow$

$$Vj \equiv Vj(S) \qquad \Rightarrow$$
$$\cap$$
$$\cup$$
$$Esj \equiv Vj \cap Sy \cap \mathcal{E} \Rightarrow$$

Lokale Ausbildung einer Spur $Sy \cap \mathcal{E}$ anhand von Teilmengen Esj von Mengen Vj

Einbettung einer Teilmenge Esj in eine Menge Vj und Modifikation der Verknüpfung anhand der Teilmenge ELj :

$Vj \equiv (Vj \cap \mathcal{F}) \quad \cup \; Esj \; \cup (Vj \cap Ksy)$

$Vj \equiv Vj(S) \equiv Vjf \cup \{Esj \cup ELj\} \cup Vjv \quad \longleftrightarrow \quad Vj(S)$

Menge Vj, betreffend die tragende Struktur $S$, gekennzeichnet durch mindestens eine charakteristische Teilmenge VjT die mit je einem Anteil

Menge Vj(S) betreffend die Struktur S

$VjTf \subset F \subset \mathcal{F}$ und $VjTv \subset KWRj \subset KSy$ in einem höherwertigen, volumenmässig ·minimalisierten Teilgebiet $F \subset \mathcal{F}$ und $KWRj \subset KSy$ enthalten ist.

Rückkehr zur globalen Strukturdefinition:

$$S \equiv \mathcal{F} \cup \underset{s}{\cup} Vj \cup \underset{s}{\cup} KWRj, \text{ wenn } KWRj \equiv KSy$$

## Patentansprüche

1. Konstruktion mit mindestens einem multifunktionalen Konstruktionskörper, bestehend aus einer Menge Vj mit einer Teilmenge Ejn von Energieleitern mindestens mechanischer Energie, einer Teilmenge Ijm von Grundkörperteilen, mit einer verformbaren, kraftübertragenden Teilmenge Esj und einer verformbaren Teilmenge ELj, wobei gilt:

$$Vj \equiv \{\ Ejn,\ Ijm,\ Esj,\ ELj\ \}\ ,$$

und wobei

a) in Vj mindestens eine charakteristische Teilmenge VjT ≡ ViT existiert, die in einem zusammenhängenden Gebiet F einer Wandung WRi eines Raumes Ri einer mechanisch beanspruchbaren Struktur **S** eine Teilmenge VjTf ≡ ViTf aufweist, und mit einer Teilmenge VjTv ≡ ViTv in mindestens einem seinerseits zusammenhängenden Wandungskomplement KWRj einer Wandung WRj mindestens eines Raumes Rj derselben Struktur enthalten ist,

b) VjTf und VjTv durch die Teilmengen Esj und ELj, bezüglich der Menge Vj, derart verknüpft sind, dass infolge dieser Verknüpfung bei einer Verformung der Struktur **S** die geometrische Konfigurationsmenge der Teilmengen Esj und ELj, und damit auch jene der Menge Vj, umkehrbar eindeutig mit der Konfigurationsmenge des Komplementes (**S**- Vj) zusammenhängt,

c) die Teilmengen VjTf und VjTv die folgenden vier Bedingungen ((A1-1) bis (A1-4)) für jedes Teilgebiet, entsprechend einem Element von VjTf und VjTv erfüllen,

$$VjTf \cap Ejn \not\equiv \{\ \}\ (A1\text{-}1) \qquad VjTv \cap Ejn \not\equiv \{\ \}\ (A1\text{-}2)$$

$$VjTf \cap Ijm \not\equiv \{\ \}\ (A1\text{-}3) \qquad VjTv \cap Ijm \not\equiv \{\ \}\ (A1\text{-}4)$$

d) die Konfigurationsmenge von Esj durch die Teilmenge ELj mitbestimmt wird, und

e) bei einer Verformung der Struktur **S** mindestens für drei nicht zusammenfallende Punkte des entsprechenden Wandungskomplementes KWRj, bezüglich dreier nicht zusammenfallender Punkte des Gebietes F, keine oder nur eine minimale Relativverschiebung stattfindet (Kriterium 3-3).

**2.** Konstruktion mit mindestens einem Konstruktionskörper nach Anspruch 1, gekennzeichnet dadurch, dass das Wandungskomplement KWRj umlaufende Umrandungskomplemente KUj enthält und dass die Teilmenge VjTv in mindestens einem Umrandungskomplement KUj enthalten ist.

**3.** Konstruktion mit mindestens einem Konstruktionskörper nach Anspruch 1, gekennzeichnet dadurch, dass das Wandungskomplement KWRj Feldkomplemente KFj enthält und dass die Teilmenge VjTv in mindestens einem Feldkomplement KFj enthalten ist.

**4.** Konstruktion mit mindestens einem Konstruktionskörper nach einem der Ansprüche 1 bis 3, gekennzeichnet dadurch, dass die Teilmenge Ejn der Energieleiter eine Teilmenge Ajn hochfester Zonen aufweist, wobei VjTf ∩ Ajn ≢ { } und VjTv ∩ Ajn ≢ { } gilt.

**5.** Konstruktion mit mindestens einem Konstruktionskörper nach Anspruch 4, gekennzeichnet dadurch, dass die Teilmenge Ejn mit der Teilmenge Ajn identisch ist.

**6.** Konstruktion mit mindestens einem Konstruktionskörper nach einem der Ansprüche 1 bis 5, gekennzeichnet dadurch, dass die Teilmenge Ejn mit der Teilmenge Ajn und mit der Teilmenge Ijm identisch ist.

**7.** Konstruktion mit mindestens einem Konstruktionskörper nach einem der Ansprüche 1 bis 6, gekennzeichnet dadurch, dass die Teilmenge Esj mit der Teilmenge ELj identisch ist.

**8.** Konstruktion mit mindestens einem Konstruktionskörper nach einem der Ansprüche 1 bis 7, gekennzeichnet dadurch, dass die verformbare, kraftübertragende Teilmenge Esj einer ersten Menge Vj mit mindestens einer weiteren Teilmenge Esj einer weiteren Menge Vj zusammenhängt.

**9.** Konstruktion mit mindestens einem Konstruktionskörper nach einem der Ansprüche 1 bis 8, gekennzeichnet dadurch, dass die Teilmenge Ejn von Energieleitern eine Teilmenge Qjn elektrischer Leiter aufweist.

**10.** Konstruktion mit mindestens einem Konstruktionskörper nach einem der Ansprüche 1 bis 9, gekennzeichnet dadurch, dass die Menge Vj mindestens eine zu einer ebenen Abwicklung reduzierfähige Schicht Vjfta, resp. Vjvta aufweist, wobei die Teilmenge Ajn hochfester Zonen mindestens teilweise in einer dieser Schichten enthalten ist.

**11.** Konstruktion mit mindestens einem Konstruktionskörper nach einem der Ansprüche 1 bis 10, gekennzeichnet dadurch, dass mindestens eine hochfeste Zone als Element der Teilmenge Ajn hochfester Zonen zum Vorspannen ausgebildet ist.

**12.** Konstruktion mit mindestens einem Konstruktionskörper nach einem der Ansprüche 1 bis 11, gekennzeichnet dadurch,. dass die minimale Relativverschiebung durch eine zumindest lokale, minimale Verformbarkeit der verformbaren, kraftübertragenden Teilmenge Esj der Menge Vj zustande kommt.

**13.** Konstruktion mit mindestens einem Konstruktionskörper nach Anspruch 12, gekennzeichnet dadurch, dass die zumindest lokal minimal verformbare, kraftübertragende Teilmenge Esj im zusammenhängenden Gebiet F enthalten ist.

**14.** Konstruktion mit mindestens einem Konstruktionskörper nach einem der Ansprüche 1 bis 13, gekennzeichnet dadurch, dass dem Feldkomplement KFj eine Platte entspricht, die zumindest als Teilgebiet eine Leiterplatte enthält, die wiederum integrierte Schaltungen, vorzugsweise Schaltkreise mit elektrischen Leitern der Teilmenge Qjn enthält.

**15.** Konstruktion mit mindestens einem Konstruktionskörper nach Anspruch 14, gekennzeichnet dadurch, dass eine charakteristische Teilmenge VjT eine Teilmenge entsprechend einem elektrisch leitenden Teilgebiet aufweist, das mit einem elektrisch leitenden Teilgebiet mindestens einer Leiterplatte zusammenhängt und mit einem elektrisch leitenden Teilgebiet mindestens einer Wandungsschale WRjif zusammenhängt, und dass dieses zusammenhängende elektrisch leitende Gebiet als Massesystem ausgebildet ist.

**16.** Konstruktion mit mindestens einem Konstruktionskörper nach den Ansprüchen 14 und 15, gekennzeichnet dadurch, dass die Schnittstellen einer Leiterplatte in mindestens einer charakteristischen Teilmenge Vj'T enthalten sind.

**17.** Konstruktion mit mindestens einem Konstruktionskörper nach einem der Ansprüche 1 bis 16, gekennzeichnet dadurch, dass das Raumkomplement (Ri-WRi), wenn es einem Hohlraum entspricht, der Aufnahme von Installationen dient.

**18.** Konstruktion mit mindestens einem Konstruktionskörper nach Anspruch 17, gekennzeichnet dadurch, dass in der Wandung WRi des Raumes Ri ein zusammenhängendes elektrisch leitendes Teilgebiet enthalten ist.

**19.** Konstruktion mit mindestens einem Konstruktionskörper nach einem der Ansprüche 1 bis 18, gekennzeichnet dadurch, dass die Teilmenge Esj als hochfeste, volumenmässig minimalisierte Teilmenge in der Menge Vj enthalten ist, und dass die Verformbarkeit der verformbaren, kraftübertragenden Teilmenge Esj aufgrund der geometrischen Krümmung von dimensional minimalisierten Teilgebieten der Teilmenge Esj zustande kommt.

**20.** Konstruktion mit mindestens einem Konstruktionskörper nach einem der Ansprüche 1 bis 19, gekennzeichnet dadurch, dass die Vereinigung der Teilmengen Esj und ELj wiederum minimal eine Teilmenge entsprechend einer gekrümmten Fläche aufweist, für welche die Werkstoffeigenschaften, die im Fall einer isothermen Betrachtung durch die Komponenten des Hook'schen Tensors C beschreibbar sind, entlang ausgewählter Linien, im Mittel, invariant sind.

**21.** Konstruktion mit mindestens einem Konstruktionskörper nach einem der Ansprüche 1 bis 19, gekennzeichnet dadurch, dass in der Vereinigung der Teilmengen Esj und ELj die Teilmenge Esj, als hochfeste Phase, in der Teilmenge ELj als kompressible Phase enthalten ist.

**22.** Konstruktion mit mindestens einem Konstruktionskörper nach einem der Ansprüche 1 bis 21, gekennzeichnet dadurch, dass in der Vereinigung der Teilmengen Esj und ELj die Teilmenge Esj als hochfeste Phase aus textilen Fäden besteht, die auf der Grundlage einer textilen Bindung verwoben sind.

**23.** Konstruktion mit mindestens einem Konstruktionskörper nach einem der Ansprüche 1 bis 18, gekennzeichnet dadurch, dass den Teilmengen Ejn, Ijm, Esj und ELj einer Menge Vj nanokomposite, d.h. chemisch strukturierte Teilgebiete zugrunde liegen.

24. Konstruktion mit mindestens einem Konstruktionskörper nach einem der Ansprüche 1 bis 23, gekennzeichnet dadurch, dass das Gebiet F als hochfestes, volumenmässig minimalisiertes Teilgebiet in einem zusammenhängenden Gebiet *F* der Struktur *S* enthalten ist.

25. Konstruktion mit mindestens einem Konstruktionskörper nach einem der Ansprüche 1 bis 24, gekennzeichnet dadurch, dass das Gebiet F Gelenke aufweist.

26. Konstruktion mit mindestens einem Konstruktionskörper nach einem der Ansprüche 1 bis 25, gekennzeichnet dadurch, dass dem Gebiet F mindestens ein Verbundwerkstoff, insbesondere ein Faserwerkstoff, zugrunde liegt.

27. Konstruktion mit mindestens einem Konstruktionskörper nach einem der Ansprüche 1 bis 26, gekennzeichnet dadurch, dass die verformbare Teilmenge ELj, zumindest bezüglich einer Dimension ein nur minimales Arbeitsvermögen aufweist, derart, dass eine geometrische Konfiguration des Komplementes (*S* - Vj) im Wesentlichen die Konfiguration der Menge Vj, und als Folge davon, jene der Teilmengen Esj und ELj bestimmt.

28. Konstruktion mit mindestens einem Konstruktionskörper nach einem der Ansprüche 1 bis 26, gekennzeichnet dadurch, dass die verformbare Teilmenge ELj zumindest bezüglich einer Dimension ein so grosses Arbeitsvermögen aufweist, dass eine diesbezügliche Verformung der Teilmenge Esj die Verformung der Menge Vj und des Komplementes (*S* - Vj) bestimmt.

29. Konstruktion mit mindestens einem Konstruktionskörper nach Anspruch 27, gekennzeichnet dadurch, dass der verformbaren Teilmenge ELj, im Verlauf einer Verformung der Struktur *S*, von ausserhalb der Struktur *S* keine Energie zu- oder abgeführt wird.

30. Konstruktion mit mindestens einem Konstruktionskörper nach Anspruch 28, gekennzeichnet dadurch, dass der verformbaren Teilmenge ELj, im Verlauf einer Verformung der Struktur *S*, von ausserhalb der Struktur *S* Energie zu- oder abgeführt wird.

31. Verwendung einer Konstruktion mit mindestens einem Konstruktionskörper nach einem der Ansprüche 1 bis 30 zur konstruktiven Ausführung einer Struktur *S* als Lösungsansatz zum Hamilton'schen Prinzip.

32. Verwendung einer Konstruktion mit mindestens einem Konstruktionskörper nach einem der Ansprüche 1 bis 30 zur konstruktiven Ausführung einer Struktur *S*, die bei gegebener Beanspruchung eine minimale Gestaltänderungsenergie aufweist.

**Claims**

1. Structural element with at least one multi-functional structural body, consisting of a quantity Vj with a partial quantity Ejn of energy conductors of at least mechanical energy, a partial quantity Ijm of base elements, with a formable, force-transmitting partial quantity Esj and a formable partial quantity ELj, whereby:

$$Vj \equiv \{ Ejn, Ijm, Esj, ELj \},$$

and whereas

a) in Vj at least one characteristic partial quantity $VjT \equiv ViT$ exists which in a coherent area F of a closure WRi of a compartment Ri of a mechanically stressed structure S has a partial quantity $VjTf \equiv ViTf$ and which with a partial quantity $VjTv \equiv ViTv$ is contained in at least one coherent closure complement KWRj of a closure WRj of at least one compartment Rj of the same structure,
b) VjTf and VjTv are linked by the partial quantities Esj and ELj relative to quantity Vj such that due to this linking on a deformation of the structure S the geometrical configuration quantity of the partial quantities Esj and ELj, and hence also that of quantity Vj, is reversibly distinctly in connection with the configuration quantity of the complement (*S*- Vj),

c) the partial quantities VjTf and VjTv fulfill the following four conditions ((A1-1) to (A1-4)) for each partial area, corresponding to an element of VjTf and VjTv

$$\text{VjTf} \cap \text{Ejn} \neq \{\,\} \text{ (A1-1)} \qquad \text{VjTv} \cap \text{Ejn} \neq \{\,\} \text{ (A1-2)}$$

$$\text{VjTf} \cap \text{Ijm} \neq \{\,\} \text{ (A1-3)} \qquad \text{VjTv} \cap \text{Ijm} \neq \{\,\} \text{ (A1-4)}$$

d) the Esj configuration quantity is also governed by the partial quantity ELj, and

e) on a deformation of structure $S$ at least for three non-coincident points of the corresponding closure complement KWRj, relative to three non-coincident points of area F, no or only a minimum relative displacement takes place (criterion 3-3).

2. Structure with at least one structural body as claimed in claim 1, wherein the closure complement KWRj containing circumferential bordering complements KUj and that the partial quantity VjTv is contained in at least one bordering complement KUj.

3. Structure with at least one structural body as claimed in claim 1, wherein the closure complement KWRj contains field complements KFj and that the partial quantity VjTv is contained in at least one field complement KFj.

4. Structure with at least one structural body as claimed in claims 1 to 3, wherein the partial quantity Ejn of the energy conductors has a partial quantity Ajn of high-strength zones, where VjTf $\cap$ Ajn $\neq \{\,\}$ and VjTv $\cap$ Ajn $\neq \{\,\}$ is applicable.

5. Structure with at least one structural body as claimed in claim 4, wherein the partial quantity Ejn is identical with partial quantity Ajn.

6. Structure with at least one structural body as claimed in any one of claims 1 to 5, wherein the partial quantity Ejn is identical with the partial quantity Ajn and with the partial quantity Ijm.

7. Structure with at least one structural body as claimed in any one of claims 1 to 6, wherein the partial quantity Esj is identical with partial quantity ELj.

8. Structure with at least one structural body as claimed in any one of claims 1 to 7, wherein the formable force-transmitting partial quantity Esj of a first quantity Vj is connected with at least one further partial quantity Esj of a further quantity Vj.

9. Structure with at least one structural body as claimed in any one of claims 1 to 8, wherein the partial quantity Ejn of energy conductors has a partial quantity Qjn of electrical conductors.

10. Structure with at least one structural body as claimed in any one of claims 1 to 9, wherein the quantity Vj has at least one layer Vjfta or Vjvta which is reducible to a plane development in which the partial quantity Ajn of high-strength zones is being contained at least partially in one of these layers.

11. Structure with at least one structural body as claimed in any one of claims 1 to 10, wherein at least one high-strength zone is formed as an element of partial quantity Ajn of high-strength zones for prestressing.

12. Structure with at least one structural body as claimed in any one of claims 1 to 11, wherein the minimum relative displacement takes place by an at least local, minimum formability of the formable, force-transmitting partial quantity Esj of the quantity Vj.

13. Structure with at least one structural body as claimed in claim 12, wherein the at least locally minimally formable force-transmitting partial quantity Esj is contained in the coherent area F.

14. Structure with at least one structural body as claimed in any one of claims 1 to 13, wherein a plate corresponds to field complement KFj, said plate containing at least a printed circuit board as a partial area, said printed circuit board containing integrated circuits, preferable switching circuits with electrical conductors of the partial quantity Qjn.

15. Structure with at least one structural body as claimed in claim 14, wherein a characteristic partial quantity VjT has a partial quantity corresponding to an electrically conductive partial area which is connected with an electrically conductive partial area of at least one printed circuit board and is connected with an electrically conductive partial area of at least one closure shell WRjif, and that this coherent electrically conductive area is configured as a mass system.

16. Structure with at least one structural body as claimed in any one of claims 14 and 15, wherein the interfaces of a printed circuit board are contained in at least one characteristic partial quantity Vj'T.

17. Structure with at least one structural body as claimed in any one of claims 1 to 16, wherein the compartment complement (Ri-WRi), if corresponding to a cavity, serves to accept installations.

18. Structure with at least one structural body as claimed in claim 17, wherein a coherent electrically conductive partial area is contained in the closure WRi of the compartment Ri.

19. Structure with at least one structural body as claimed in any one of claims 1 to 18, wherein the partial quantity Esj is contained in quantity Vj as a high-strength partial quantity which is minimized in volume and wherein the formability of the formable, force-transmitting partial quantity Esj occurs due to the geometric curvature of the dimensionally minimized partial areas of partial quantity Esj.

20. Structure with at least one structural body as claimed in any one of claims 1 to 19, wherein the union of the partial quantities Esj and ELj in turn has minimally a partial quantity corresponding to a curved surface for which the material characteristics, which in the case of an isothermal observation are describable by the components of the Hook Tensor C, are invariable in the average along selected lines.

21. Structure with at least one structural body as claimed in any one of claims 1 to 19, wherein the union of the partial quantities Esj and ELj contains the partial quantity Esj as a high-strength phase, and partial quantity ELj as a compressible phase.

22. Structure with at least one structural body as claimed in any one of claims 1 to 21, wherein in the union of the partial quantities Esj and ELj the partial quantity Esj exists as a high-strength phase of textile threads which were woven on the basis of a textile weave.

23. Structure with at least one structural body as claimed in any one of claims 1 to 18, wherein the partial quantities Ejn, Ijm, Esj and ELj of a quantity Vj are based on nanocomposite, i.e. chemically structured partial areas.

24. Structure with at least one structural body as claimed in any one of claims 1 to 23, wherein the area F is contained in a coherent area $F$ of the structure $S$ as a high-strength partial area which is minimized in volume.

25. Structure with at least one structural body as claimed in any one of claims 1 to 24, wherein the area F has joints.

26. Structure with at least one structural body as claimed in any one of claims 1 to 25, wherein the area F is based on at least one composite material, in particular a fiber material.

27. Structure with at least one structural body as claimed in any one of claims 1 to 26, wherein the formable partial quantity ELj has at least with regard to one dimension only a minimum working capability, to the effect that a geometrical configuration of the complement ($S$- Vj) essentially governs the configuration of the quantity Vj, and as a consequence thereof, that of the partial quantities Esj and ELj.

28. Structure with at least one structural body as claimed in any one of claims 1 to 26, wherein the formable partial quantity ELj has such a large working capability at least with regard to one dimension such that a forming of the partial quantity Esj in this respect governs the forming of the quantity Vj and of the complement ($S$ - Vj).

29. Structure with at least one structural body as claimed in claim 27, wherein in the course of forming the structure $S$ no energy is supplied to or removed from the formable partial quantity ELj from outside the structure $S$.

30. Structure with at least one structural body as claimed in claim 28, wherein in the course of forming the structure $S$ energy is supplied to or removed from the formable partial quantity ELj from outside the structure $S$.

**31.** Use of a structure with at least one structural body according to any one of claims 1 to 30 for the design execution of a structure *S* as a solution approach to the Hamilton law.

**32.** Use of a structure with at least one structural body according to any one of claims 1 to 30 for the design execution of a structure *S* which with given loading has a minimum form-changing deviator energy.

**Revendications**

**1.** Construction comportant au moins un corps de construction multifonctionnel, se composant d'un ensemble Vj comportant un sous-ensemble Ejn de conducteurs d'énergie transférant au moins l'énergie mécanique, un sous-ensemble Ijm de pièces de corps de base, un sous-ensemble déformable et transmettant les forces Esj et un sous-ensemble déformable ELj, selon l'application de la formule suivante:

$$Vj \equiv \{ Ejn, Ijm, Esj, ELj\}$$

dans laquelle :

a) Vj contient au moins un sous-ensemble caractéristique VjT $\equiv$ ViT, qui comporte un sous-ensemble VjTf = ViTf dans un domaine cohérent F et appartenant à une paroi WRi d'un espace Ri qui fait partie d'une structure *S* pouvant être sollicitée, et qui est contenue avec un sous-ensemble VjTv $\equiv$ ViTv dans au moins un complément de paroi KWRj, elle-même en liaison avec - et appartenant à - une paroi WRj qui fait partie d'au moins un espace Rj de la même structure.

b) VjTf et VjTv sont reliés ensemble par les sous-ensembles Esj et ELj, par rapport à l'ensemble Vj, si bien qu'en raison de cette liaison, en cas de déformation de la structure *S*, l'ensemble de configuration géométrique des sous-ensembles Esj - et ELj, et donc aussi celle de l'ensemble Vj - est en relation indiscutable et réversible avec l'ensemble de configuration du complément (*S* - Vj).

c) les sous-ensembles VjTf et VjTv remplissent les quatre conditions suivantes ((A1-1) à (A1-4) ) pour chaque sous-ensemble, conformément à un élément de VjTf et de VjTv,

$$VjTf \cap Ejn \not\equiv \{ \} \; (A1\text{-}1) \qquad VjTv \cap Ejn \not\equiv \{ \} \; (A1\text{-}2)$$

$$VjTf \cap Ijm \not\equiv \{ \} \; (A1\text{-}3) \qquad VjTv \cap Ijm \not\equiv \{ \} \; (A1\text{-}4)$$

d) l'ensemble de configurations d'Esj est également déterminé par le biais du sous-ensemble ELj, et:

e) en cas de déformation de la structure *S*, au moins pour trois points non coïncidents du complément de paroi KWRj correspondant, par rapport à trois points non coïncidents du domaine F, il ne se produit aucun décalage relatif, ou seulement un décalage relatif minime (critère 3-3).

**2.** Construction comportant au moins un corps de construction selon la revendication 1, caractérisée en ce que le complément de paroi KWRj contient des compléments de bordure enveloppante KUj, et que le sous-ensemble VjTv est contenu dans au moins un complément de bordure KUj.

**3.** Construction comportant au moins un corps de construction selon la revendication 1, caractérisée en ce que le complément de paroi KWRj contient des compléments de champs KFj, et que le sous-ensemble VjTv est contenu dans au moins un complément de champ KFj.

**4.** Construction comportant au moins un corps de construction selon l'une des revendications 1 à 3, caractérisée en ce que le sous-ensemble Ejn du conducteur d'énergie comporte un sous-ensemble Ajn de domaines à résistance élevée, avec l'application des formules VjTf $\cap$ Ajn $\not\equiv$ { } et VjTv $\cap$ Ajn $\not\equiv$ { }.

**5.** Construction comportant au moins un corps de construction selon la revendication 4, caractérisée en ce que le sous-ensemble Ejn est identique au sous-ensemble Ajn.

**6.** Construction comportant au moins un corps de construction selon l'une des revendications 1 à 5, caractérisée en ce que le sous-ensemble Ejn est identique au sous-ensemble Ijm.

7. Construction comportant au moins un corps de construction selon l'une des revendications 1 à 6, caractérisée en ce que le sous-ensemble Esj est identique au sous-ensemble ELj.

8. Construction comportant au moins un corps de construction selon l'une des revendications 1 à 7, caractérisée en ce que le sous-ensemble Esj, déformable et pouvant transmettre des forces, et appartenant à un premier ensemble Vj, est lié à un autre sous-ensemble Esj appartenant à un autre ensemble Vj.

9. Construction comportant au moins un corps de construction selon l'une des revendications 1 à 8, caractérisée en ce que le sous-ensemble Ejn de conducteurs d'énergie comporte un sous-ensemble Qjn comme conducteur électrique.

10. Construction comportant au moins un corps de construction selon l'une des revendications 1 à 9, caractérisée en ce que l'ensemble Vj comporte au moins une couche Vjfta ou Vjvta réductible à une projection développée plane, de sorte que le sous-ensemble Ajn à résistance élevée est contenu au moins partiellement dans l'une de ces couches.

11. Construction comportant au moins un corps de construction selon l'une des revendications 1 à 10, caractérisée en ce qu'au moins un domaine à résistance élevée Ajn est réalisée comme élément tendeur.

12. Construction comportant au moins un corps de construction selon l'une des revendications 1 à 11 caractérisée en ce que le décalage relatif minimal est provoqué par une possibilité de déformation minimale au moins locale du sous-ensemble Esj déformable et pouvant transmettre des forces, qui appartient à l'ensemble Vj.

13. Construction comportant au moins un corps de construction selon la revendication 12, caractérisée en ce que le sous-ensemble Esj apte à une déformation minimale au moins locale et capable de transmettre des forces, est contenu dans le domaine cohérent F.

14. Construction comportant au moins un corps de construction selon l'une des revendications 1 à 13, caractérisée en ce que le complément de champ KFj comporte une carte contenant au moins comme domaine partiel une carte de circuits imprimés qui, à son tour, contient des circuits intégrés, de préférence des circuits de commutation comportant des conducteurs électriques faisant partie du sous-ensemble Qjn.

15. Construction comportant au moins un corps de construction selon la revendication 14, caractérisée en ce qu'un sous-ensemble caractéristique VjT comporte un sous-ensemble correspondant à un sous-domaine électriquement conducteur, qui est en liaison avec un sous-domaine électriquement conducteur appartenant à au moins une carte de circuits imprimés, et qui est en liaison avec un sous-domaine électriquement conducteur appartenant à au moins une coque de paroi WRjif, et caractérisée en ce que ce domaine électriquement conducteur cohérente est configuré comme système de terre.

16. Construction comportant au moins un corps de construction selon les revendications 14 et 15, caractérisée en ce que les interfaces d'une carte de circuits imprimés sont contenues dans au moins un sous-ensemble caractéristique Vj'T.

17. Construction comportant au moins un corps de construction selon l'une des revendications 1 à 16, caractérisée en ce que le complément d'espace (Ri-WRi) - lorsqu'il correspond à un espace creux - sert au logement des installations.

18. Construction comportant au moins un corps de construction selon la revendication 17, caractérisée en ce qu'un domaine partiel électriquement conducteur cohérent est contenu dans la paroi WRi de l'espace Ri.

19. Construction comportant au moins un corps de construction selon l'une des revendications 1 à 18, caractérisée en ce que le sous-ensemble Esj est contenu dans l'ensemble Vj en tant que sous-ensemble minimalisé sur le plan du volume et à résistance élevée, et que la capacité de déformation du sous-ensemble Esj, déformable et capable de transmettre des forces, résulte de la courbure géométrique de sous-domaines minimisés par dimensions et appartenant au sous-ensemble Esj.

20. Construction comportant au moins un corps de construction selon l'une des revendications 1 à 19, caractérisée en ce que la combinaison des sous-ensembles Esj et ELj comporte à son tour un sous-ensemble correspondant à une surface courbée pour laquelle les caractéristiques des matériaux qui, en cas d'analyse isotherme, peuvent être décrites par les composants du tenseur de Hook C, sont en moyenne invariables le long de lignes sélectionnées.

21. Construction comportant au moins un corps de construction selon l'une des revendications 1 à 19, caractérisée en ce que, dans la combinaison des sous-ensembles Esj et ELj, l'ensemble Esj en tant que phase à résistance élevée est contenu dans le sous-ensemble ELj en tant que phase compressible.

22. Construction comportant au moins un corps de construction selon l'une des revendications 1 à 21, caractérisée en ce que dans la combinaison des sous-ensembles Esj et ELj, le sous-ensemble Esj en tant que phase à résistance élevée se compose de fils textiles qui sont tissés ensemble selon un motif de composition textile.

23. Construction comportant au moins un corps de construction selon l'une des revendications 1 à 18, caractérisée en ce que les sous-ensembles Ejn, Ijm, Esj et ELj d'un ensemble Vj ont pour base des nanocomposites, c'est-à-dire des sous-domaines chimiquement structurés.

24. Construction comportant au moins un corps de construction selon l'une des revendications 1 à 23, caractérisée en ce que le domaine F, en tant que domaine partiel à résistance élevée et à volume minimisé, est contenu dans un domaine $F$ élargi et appartenant à la structure $S$.

25. Construction comportant au moins un corps de construction selon l'une des revendications 1 à 24, caractérisée en ce que le domaine F comporte des articulations.

26. Construction comportant au moins un corps de construction selon l'une des revendications 1 à 26, caractérisée en ce que le domaine F est réalisé avec au moins un matériau composite, en particulier un matériau à base de fibres.

27. Construction comportant au moins un corps de construction selon l'une des revendications 1 à 26, caractérisée en ce que le sous-ensemble déformable ELj, au moins dans une dimension, affiche seulement une capacité de travail minime, si bien qu'une configuration géométrique du complément $(S - Vj)$ détermine pour l'essentiel la configuration de l'ensemble Vj et, par conséquent, celle des sous-ensembles Esj et ELj.

28. Construction comportant au moins un corps de construction selon l'une des revendications 1 à 26, caractérisée en ce que le sous-ensemble déformable ELj, au moins dans une dimension, affiche une capacité de travail tout juste suffisante pour qu'une déformation correspondante du sous-ensemble Esj détermine la déformation de l'ensemble Vj et du complément $(S - Vj)$.

29. Construction comportant au moins un corps de construction selon la revendication 27, caractérisée en ce qu'aucune énergie n'est fournie ni retirée à l'ensemble déformable ELj depuis l'extérieur de la structure $S$ au cours d'une déformation de la structure $S$.

30. Construction comportant au moins un corps de construction selon la revendication 28, caractérisée en ce que l'énergie est fournie ou retirée à l'ensemble déformable ELj depuis l'extérieur de la structure $S$ au cours d'une déformation de la structure $S$.

31. Utilisation d'une construction comportant au moins un corps de construction selon l'une des revendications 1 à 30, pour la réalisation constructive d'une structure S comme ébauche de solution pour le principe de Hamilton.

32. Utilisation d'une construction comportant au moins un corps de construction selon l'une des revendications 1 à 30, pour la réalisation constructive d'une structure $S$ présentant une énergie de modification structurelle déviatrice minimale pour une sollicitation donnée.

Fig.1

K0($S$)

K($S$)

$S$

Fig.2

K($S$)

K(T)

T⊂$S$

Fig.3

$S$∪$\varepsilon$  $S$  $\varepsilon$  $S$∩$\varepsilon$

Vj($S$∪$\varepsilon$)

$\mathcal{S} \cup \mathcal{E}$

$Vj(S) \equiv Vj(\mathcal{S} \cup \mathcal{E})$

Fig.4    KS1    S1    $\boldsymbol{F}$    S2    KS2

$Vj \cap KSy$

$Esj$

$Ej \equiv Vj \cap \mathcal{E}$

$Vj(\mathcal{S}) \equiv Vj$

$Vj(S)$

$Vj \cap \boldsymbol{F}$

Fig.5

Vjv Bijv Esj1 Esj2 Bjif Vjf

Fig.6 KSy BFji Bfji F

Vjv Vjf ⟶ Vj

Fig.7 Vjv Ej Vjf ⟶ Vj(S)

Fig.8

Fig.9

Fig.10

Fig.11

Fig.12   V1Tf⊂F0   V2Tf⊂F0i

Fig.13 WRj⊂Rj

Fig.14

Fig.16

Fig.15 Fji⊂WRij

Fig.17

Fig.18   $WR_{ji} = \bigcup_{WR_{ji}} F_{ji}$

Fig.19

**Fig. 20**

Labels: WRji, Uj(WRji), WRjif, WRjiv, Ewj, Uj(RFj), X, UjfCF0, Vgl.Fig.21

**Fig.21** Vjt ⊂ Vj ⊂ Uj(WRji)

Labels: Vjtv, Vjtf

S

Ri

WSa

R4    R3

R1    R2

S⊂R

**Fig.22**

WR4⊂R4    Ri

WR4

R1    R2

**Fig.23**

R4    WR4    Ri

R1    WR1    R2

**Fig.24**

Ri

WRi

(Ri−WRi)

**Fig.25**

WRi⊂Ri    Uj(RFj)

WRji    Ujf∩F

**Fig.26**

## Fig.27

$WR4 \cap WRi$

R4

Ri Ri Ri Ri

## Fig.28

$V_jT \equiv V_iT$

$WRi \cap WRj$
$\equiv Ri \cap Rj$

$F \subseteq \mathcal{F}$

$F \cap WRi \cap WRj$

$\mathcal{E} \cap WRi \cap WRj$

$K WRj \cap WRi \cap WRj$

$K WRj \subset \mathcal{S} - \mathcal{F}$

**Fig.29**

$Rj \equiv R4$

$VjT \equiv ViT$

$VjTf \subset F$

$Esj \subset \mathcal{E}$

$VjTv \subset KWRj$

$WR1i$

$WRj \cap WRi$

$R1$

**Fig.30**

Vgl. Fig.6

$Krit. 3-3$

$KWRj \subset (\mathcal{S}-\mathcal{F})$

$F \subseteq \mathcal{F}$

Fig.31

K3-3

S

F

KSy

VjT

VjTv  VjTf  Esj  ELj

WRji

Uji ≡ Uj(WRji)

Uj(RFj)

<u>Fig.32</u>

Uj(RFj)

<u>Fig.33</u>

Uj(RFj) { ⟶ 1

⟶ 2

<u>Fig.34</u>

VjT[Uj(RFj)]

VjT[WRji]

Ri

Fig.35

VjTv  VjTf          VjTv  VjTf

KWRji              KWRji1
Fig.36             Fig.37

KWRji2

VjTv

VjTf

Fig.38

VjT[Uj(RFj)]

VjT[Uj(WRji)]

Ri

Fig.39

KUj   VjTv   VjTf

Fig.40

KUj   VjTv   VjTf

Fig.41

KUj2

VjTv

VjTf

Fig.42

VjT [Uj(RFj)]

Fig.43

KFj  VjTv  VjTf

Vgl.Fig.18

Fig.44

Fig.45

Fig.46

Fig.47

Fig.48

Fig.49

Fig.50

Fig.51

Vjtf2   E2   Vjtf1

Vjt

E1

Vjtv2 Esji≡ELji Vjtv1

<u>Fig.52</u>  Vjt⊂Vj

Vj't   Vj'tv   Vjt'f

Esj'i⊂ Esj'

<u>Fig.53</u> Vj't⊂Vj'

Ajn   Ijm

<u>Fig.54</u>  Esji ELji

Ajn   ELji   Ijm

<u>Fig.55</u> Esj'i

Ajn

<u>Fig.56</u>  Esji

<u>Fig.57</u> Esj'i

Fig.58

Fig.59

Esji    ELji    Vjtf

Fig.60    Vjtv    Esji

$V(j-1)t \subset V(j-1)$    $Vjt \subset Vj$    $V(j+1)t \subset V(j+1)$

Fig.61    10i    ELji    11i

Ejn=Ajn Ijm    Ejn=Ajn=Ijm    Ejn=Ajn=Ijm

Esji=ELji    Esji    ELji    Esji=ELji

Fig.62    Fig.63    Fig.64

Ajn
Ijm } Vjvta

Fig.65

Fig.66

Fig.67    Vjvt  Ewj  Vjft  Uj(RFj)

Fig.68    Vjt(WRji)    DWRji

$Vjvt \subseteq Vjtv$

Fig.69    $Vjft \subseteq Vjtf$

T1

T4 > T1

T4

1

2

Fig.70

Fig. 71

Fig. 72

K0(KWRj1)  K0(WRjif)          K(KWRj1)

KFj1

L3⊂KFj3
Qjn⊂L3

KFj4

**Fig.73**        **Fig.74**

V1'T  V1'Tf  V1'Tv   L3⊂KFj3

VjT

WRjif

GND      **Fig.76** VjT

**Fig.75**

71

$(1U2) \equiv$ Esj 10 11 ELj

**Fig. 77**

1 10 11 12

**Fig. 78**

**Fig. 79** EsjUELj Esj ELj

**Fig. 80** EsjUELj Esj ELj

Fig.81

Fig.82

Fig.83

73

Fig.84

F = F1234 U F2 U F4

Fig.85

WRjif — KWRj1 — KWRj2

VjT — VjTv1 — Esj1 — Esj2 — Esj3 — VjTv2 — VjTf

<u>Fig. 86</u>

```
Allgemeine Teilmengen Vjt:

Vjtf ⊂ F ⊂ S
Vjtv ⊂ KWRj

Kriterium 5A:
Vjtf ∪ ( Esj ) ∪ Vjtv

Kriterium M5A:
Vjtf ∪ ( Esj ∪ ELj ) Vjtv

Kriterium 5AS:
Vjtf ∪ ( esj ) ∪ Vjtv

Kriterium M5AS:
Vjtf ∪ ( esj ∪ elj ) Vjtv
```

Minimal-anforde-rung →

```
Charakteristische Teilmen-
gen VjT:
VjTf ⊂ F ⊂ F ⊂ S
VjTv ⊂ KWRj

Kriterium 5:
VjTf ∪ ( Esj ) ∪ VjTv

Kriterium M5:
VjTf ∪ ( Esj ∪ ELj ) ∪ VjTv

vgl. Ansprüche 1, 27 - 32
```

<u>Fig. 87</u>